# EUROPEAN PATENT APPLICATION

(11) **EP 1 469 403 A1**
(43) Date of publication of application: **20.10.2004**
(21) Application number: 02773019.1
(22) Date of filing: 28.10.2002
(51) Int. Cl.: G06F 17/60

(54) **STORAGE MEDIUM ON WHICH PROGRAM FOR LEASE TRANSACTION OF, E.G., FINANCIAL PRODUCT IS RECORDED AND SYSTEM FOR LEASE TRANSACTION OF, E.G., FINANCIAL PRODUCT**

(30) Priority: 26.10.2001 JP 2001329710; 28.10.2002 JP 2002312160
(71) Applicant: I P Strategy Incorporated, Shinagawa-ku, Tokyo 141-0001 (JP)
(72) Inventor: Nishimaki, Masanobu, Shinagawa-ku, Tokyo 141-0001 (JP)
(74) Representative: van Westenbrugge, Andries
(86) International application number: PCT/JP2002/011154
(87) International publication number: WO 2003/048990

(57) **Abstract**

The present invention is a computer-readable storage medium storing a lease transaction program for financial and/or related instruments, and a lease transaction system for financial and/or related instruments, in which lease transaction markets for financial instruments and/or quasi-financial instruments are created via computer networks and users can conclude lease transactions between and/or among themselves.

## Description

### Technical Field

The present invention relates to a computer-readable storage medium storing a lease transaction program for financial and/or related instruments, and a lease transaction system for financial and/or related instruments to create lease transaction markets for financial instruments and/or quasi-financial instruments via computer networks, and match let demands and hire demands of customers.

### Background Art

Generally, a lease transaction is a transaction in which a lender, including a leasing company, purchases a product that a borrower desires on behalf of the borrower and then leases the particular product to the borrower, while the borrower pays a fee to the lender to use and profit from the product. The lease transaction came from the 'separation of possession and use' concept, and its 'accommodation of actuals' function is widely acknowledged globally through 150 years of history up to the present day. Nevertheless, the objects of lease transactions still remain centered on machinery and equipment, and thus lenders are being pressured to move towards providing higher levels of and more specialized leasing business from the viewpoint of service diversification and business diversification.

On the other hand, as for transactions regarding 'accommodation of funds,' i.e. finance, borrowing and lending transactions of money itself are carried out in loan-for-consumption arrangements and deposit-for-consumption arrangements. Therein, however, when it comes to 'acquisition' of financial instruments, 'buying' is normally meant, while when it comes to 'disposal' of financial instruments, 'selling' is normally meant, and the concept of 'separation of possession and use,' which is general in the 'accommodation of actuals,' has not permeated to the 'accommodation of funds.' A great demand for borrowing and lending transactions of financial instruments exists between market participants who wish to enjoy various transaction profits that financial instruments bring about but cannot afford to acquire such instruments owing to their shortage of funds on hand, and other market participants who wish to gain as many transaction profits as possible by skillfully utilizing financial instruments that they currently hold. Then, the advancement of computer networks involving communication technology makes it possible to realize an immediate and economical match of demands between the market participants who wish to borrow and the market participants who wish to lend.

Incidentally, land, buildings, and compound real estate properties that are defined as combinations of both, are originally asset management products whose nature is different from that of financial instruments. However, as securitization of real estate utilizing special purpose vehicles and investment trusts prevails, their status as jointly managed products divisible into small lots is established. In line with this trend, opportunities for arbitrage transactions, with securitized products such as real estate-backed securities and real estate investment trusts as media, have been created in asset management between said real estate asset management products and such financial asset management products as loan assets, bonds and equities. Thus, there has been less meaning in discussing on an unequal footing real estate asset management products and financial asset management products. Also, in the real estate markets as well, indicators that show fluctuation of the entire markets like equity indices do have been developed, and derivative transactions with these real estate indices as underlying numerical values are expected to grow. On the other hand, commodity futures, commodity options, commodity futures options, commodity price swaps and the like, with commodity products such as precious metals, nonferrous metals, energy-related products and primary industry products as underlying products, have already established their status as quasi-financial instruments due to their nature of transactions that virtually allows net settlement. Also, commodity funds as well, with these commodity derivative products and financial derivative products as objects of their investment, are positioned as fund-type financial products similar to securities investment trusts and the like.

That is, as quasi-financial instruments, these real estate products and commodity derivative products are increasingly expected to receive treatment equivalent to that of regular financial instruments in terms of 'acquisitions' and 'disposals.' Therein again, a great demand for borrowing and lending transactions can be discovered between market participants who wish to enjoy various transaction profits but cannot afford to create positions anew owing to their low liquidity on hand, and other market participants who wish to maximize transaction profits by skillfully utilizing positions that they currently have.

Accordingly, it is an object of the present invention, in order to solve the above-described problems, to provide a computer-readable storage medium storing a lease transaction program for financial and/or related instruments, and a lease transaction system for financial and/or related instruments that create lease transaction markets for financial instruments and/or quasi-financial instruments via computer networks, and match the let demands and the hire demands of customers such as asset managers, capital raisers and/or capital transactors.

Moreover, it is a further object of the present invention to provide a computer-readable storage medium storing a lease transaction program for financial and/or related instruments, and a lease transaction system for financial and/or related instruments that introduce new styles of transactions which substantially allow the creation and dissolution of positions in asset management, capital raising and/or capital transactions, and thus enable customers to save fees payable to intermediaries or the like and make it possible to substantially improve the liquidity of respective instruments.

Furthermore, it is yet another object of the present invention to provide a computer-readable storage medium storing a lease transaction program for financial and/or related instruments, and a lease transaction system for financial and/or related instruments that can improve certainty, transparency, immediacy, economy and efficiency in asset management, capital raising and/or capital transactions by transcending the confines of national borders and session hours, setting up appraisers, and concentrating settlement and administration functions in said new styles of transactions.

### Disclosure of Invention

The present invention is a computer-readable storage medium storing a lease transaction program for providing a lease transaction market of financial instruments and/or quasi-financial instruments, wherein said program implements lease transactions of financial and/or related instruments in at least one computer as well as a plurality of user terminals connected to a computer network that comprise: transmission means by which the user terminals send the computer let orders and hire orders of an instrument; receiving means by which the computer receives the let orders and the hire orders sent from the user terminals by said transmission means; storage means by which the computer stores the let orders and the hire orders received by said receiving means; matching means by which the computer compares the let orders and the hire orders stored by said storage means, and if the computer determines that their conditions match, the computer concludes the lease transactions; updating means by which the computer updates, based on the lease transactions concluded by said matching means, the let orders and the hire orders stored by said storage means; notifying means by which the computer notifies said user terminals of the transaction results brought about by said matching means; and receiving means by which the user terminals receive the transaction results notified by the computer with said notifying means.

As used in the present invention, the term 'lease transaction' shall include, as a matter of law, not only a let and hire contract in a narrow sense but also a sublease contract, a loan-for-consumption contract, a deposit-for-consumption contract and/or the like. Also, the term shall mean a borrowing and lending transaction in a broad sense, which, as a matter of financial accounting or tax accounting, can be treated not only as letting-and-hiring, but also as buying-and-selling, financing and/or the like. Furthermore, the term shall include cases as well in which a conduit such as a special purpose vehicle, a trust or a partnership is involved between or among users on actual transactions. That is, it is not limited to a lease transaction as it is called in today's industry. Moreover, lease transactions as defined in the present invention shall comprise those between or among asset managers, those between or among capital raisers and asset managers, those between or among capital transactors and/or the like, and each of the users shall be referred to as a 'lessor,' 'lessee,' 'sublessor,' 'sublessee' and/or the like at the point when a lease transaction is concluded.

Incidentally, as used in the present invention, the term 'asset manager' shall mean any domestic or foreign individual or entity that performs asset management through lending, deposits or savings, trading of equities, bonds, commercial papers, beneficiary rights or real estate products, transactions of foreign exchange products, financial derivative products, real estate derivative products or commodity derivative products, and/or the like. The term 'capital raiser' shall mean any domestic or foreign individual or entity that performs capital raising through borrowings, deposits or savings, issuance of equities, bonds or commercial papers, transactions of foreign exchange products or financial derivative products, and/or the like. Moreover, as used in the present invention, any domestic or foreign individual or entity that functions as both an asset manager as above and a capital raiser as above shall be referred to as a 'capital transactor.'

Also, the present invention is a computer-readable storage medium storing a lease transaction program for financial and/or related instruments, wherein said lease transaction is a cash flow lease of an asset management product.

As used in the present invention, any underlying product to be an object of asset management such as a financial asset management product and a real estate asset management product shall be referred to as an 'asset management product,' while any underlying product to be an object of capital raising such as a financial capital raising product shall be referred to as a 'capital raising product.' Thus, a bond, an equity, a commercial paper or the like that a capital raiser utilizes as a capital raising product is regarded as an asset management product from the standpoint of an asset manager that purchases it. Also, if the means for capital raising is a loan, the underlying product for the capital raising side is a borrowed liability, while the underlying product for the asset management side is a loan asset. Moreover, if the means for capital raising is a deposit, the underlying product for the capital raising side is a deposit liability, while the underlying product for the asset management side is a deposit asset. On the other hand, as used in the present invention, various products such as foreign exchange products, financial derivative products, real estate derivative products and commodity derivative products, which are utilized differently from the underlying products for asset management or from the underlying products for capital raising, shall be referred to as 'capital transaction products.'

Then, in the present invention, a lessor receives a leasing charge from a lessee in return for lending the lessee cash flow or an actual of the asset management product, capital raising product or capital transaction product, while a sublessor receives a subleasing charge from a sublessee in return for lending the sublessee the cash flow or the actual of the product that the sublessor has borrowed from the lessor. That is, the sublessor in the sublease transaction is the lessee in the primary lease transaction. Also, in the present invention, borrowing and lending of cash flow shall be referred to as a 'cash flow lease,' while borrowing and lending of an actual shall be referred to as a 'direct lease.'

Additionally, as used in the present invention, the term 'cash flow' shall mean any cash inflow and any cash outflow. More specifically, it shall mean any cash inflow and outflow arising from principal parts of asset management products, capital raising products and/or capital transaction products, and any cash inflow and outflow arising from fruit parts such as interest, dividends, and rent including land rent and house rent accruing from the principal parts.

Moreover, the present invention is a computer-readable storage medium storing a lease transaction program for financial and/or related instruments, wherein said lease transaction is a cash flow lease of an asset management product utilizing its discount value, and/or a cash flow lease of an asset management product targeting its premium value.

Furthermore, the present invention is a computer-readable storage medium storing a lease transaction program for financial and/or related instruments, wherein said lease transaction is a direct lease of an asset management product.

Also, the present invention is a computer-readable storage medium storing a lease transaction program for financial and/or related instruments, wherein said lease transaction is a return style of direct lease of an asset management product, and/or a non-return style of direct lease of an asset management product.

Moreover, the present invention is a computer-readable storage medium storing a lease transaction program for financial and/or related instruments, wherein said lease transaction is a cash flow lease of a capital raising product.

Furthermore, the present invention is a computer-readable storage medium storing a lease transaction program for financial and/or related instruments, wherein said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

Also, the present invention is a computer-readable storage medium storing a lease transaction program for financial and/or related instruments, wherein said lease transaction is a cash flow lease of any one or more capital transaction products from among foreign exchange products, financial derivative products, and quasi-financial derivative products.

Moreover, the present invention is a computer-readable storage medium storing a lease transaction program for financial and/or related instruments, wherein said lease transaction is a cash flow lease of a capital transaction product utilizing its unrealized profit, and/or a cash flow lease of a capital transaction product targeting its unrealized loss.

Furthermore, the present invention is a computer-readable storage medium storing a lease transaction program for financial and/or related instruments, wherein a plurality of lessors and/or a plurality of lessees can conclude lease transactions simultaneously.

Also, the present invention is a computer-readable storage medium storing a lease transaction program for financial and/or related instruments, wherein said lease transaction is a tie-in lease of same type products or a tie-in lease of different type products selected from the group of products consisting of asset management products, capital raising products and capital transaction products.

Moreover, the present invention is a computer-readable storage medium storing a lease transaction program for financial and/or related instruments, wherein said lease transaction is a sublease of any one product, any tie-in of same type products, or any tie-in of different type products selected from the group of products consisting of asset management products, capital raising products and capital transaction products.

Furthermore, the present invention is a computer-readable storage medium storing a lease transaction program for financial and/or related instruments, wherein asset/liability management can be performed by various combinations of the cash flow lease of an asset management product, the direct lease of an asset management product, the cash flow lease of a capital raising product, and the cash flow lease of a capital transaction product.

Also, the present invention is a computer-readable storage medium storing a lease transaction program for financial and/or related instruments, wherein said lease transactions can be concluded domestically and abroad 24 hours a day beyond the confines of national borders and/or session hours.

Moreover, the present invention is a computer-readable storage medium storing a lease transaction program for financial and/or related instruments, wherein a function of due diligence of a lease transaction product and/or a function of appraisal of a lease transaction value is performed.

Furthermore, the present invention is a computer-readable storage medium storing a lease transaction program for financial and/or related instruments, wherein settlement and administration functions after conclusion of a lease transaction, such as transaction confirmation, preparation of a contract, assignment of a contract, payment and receipt of cash flow, delivery and return of an actual, payment and receipt of leasing charges, provision of tools for risk management or cash flow management, inspection of legal or regulatory compliance, credit enhancement, preservation and recovery of credits, and/or the like, are concentrated.

Also, the present invention is a computer-readable storage medium storing a lease transaction program for financial and/or related instruments, wherein said program implements lease transactions of financial and/or related instruments in at least one computer as well as a plurality of user terminals connected to a computer network that comprise: transmission means by which a user terminal sends a request for a negotiated lease transaction of an instrument to another user terminal; receiving means by which the user terminal of the requested party receives the request for the negotiated lease transaction sent from the terminal of the requesting party by said transmission means; returning means by which the terminal of the requested party returns a decision of conclusion, non-conclusion or negotiation with respect to the request for the negotiated lease transaction received by said receiving means, to the terminal of the requesting party; receiving means by which the terminal of the requesting party receives the decision returned from the terminal of the requested party by said returning means; notifying means by which the terminal of the requesting party and/or the terminal of the requested party notifies said computer of the result of conclusion or non-conclusion of the negotiated lease transaction; receiving means by which the computer receives the transaction result notified by the user terminal or terminals with said notifying means; and storage means by which the computer stores the transaction result received by said receiving means.

Moreover, the present invention is a computer-readable storage medium storing a lease transaction program for financial and/or related instruments, wherein said lease transaction is a cash flow lease of an asset management product.

Furthermore, the present invention is a computer-readable storage medium storing a lease transaction program for financial and/or related instruments, wherein said lease transaction is a cash flow lease of an asset management product utilizing its discount value, and/or a cash flow lease of an asset management product targeting its premium value.

Also, the present invention is a computer-readable storage medium storing a lease transaction program for financial and/or related instruments, wherein said lease transaction is a direct lease of an asset management product.

Moreover, the present invention is a computer-readable storage medium storing a lease transaction program for financial and/or related instruments, wherein said lease transaction is a return style of direct lease of an asset management product, and/or a non-return style of direct lease of an asset management product.

Furthermore, the present invention is a computer-readable storage medium storing a lease transaction program for financial and/or related instruments, wherein said lease transaction is a cash flow lease of a capital raising product.

Also, the present invention is a computer-readable storage medium storing a lease transaction program for financial and/or related instruments, wherein said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

Moreover, the present invention is a computer-readable storage medium storing a lease transaction program for financial and/or related instruments, wherein said lease transaction is a cash flow lease of any one or more capital transaction products from among foreign exchange products, financial derivative products, and quasi-financial derivative products.

Furthermore, the present invention is a computer-readable storage medium storing a lease transaction program for financial and/or related instruments, wherein said lease transaction is a cash flow lease of a capital transaction product utilizing its unrealized profit, and/or a cash flow lease of a capital transaction product targeting its unrealized loss.

Also, the present invention is a lease transaction system for financial and/or related instruments, wherein said system for financial and/or related instruments includes at least one computer as well as a plurality of user terminals connected to the computer network that comprise: transmission means by which the user terminals send the computer let orders and hire orders of an instrument; receiving means by which the computer receives the let orders and the hire orders sent from the user terminals by said transmission means; storage means by which the computer stores the let orders and the hire orders received by said receiving means; matching means by which the computer compares the let orders and the hire orders stored by said storage means, and if the computer determines that their conditions match, the computer concludes the lease transactions; updating means by which the computer updates, based on the lease transactions concluded by said matching means, the let orders and the hire orders stored by said storage means; notifying means by which the computer notifies said user terminals of the transaction results brought about by said matching means; and receiving means by which the user terminals receive the transaction results notified by the computer with said notifying means.

Moreover, the present invention is a lease transaction system for financial and/or related instruments, wherein said lease transaction is a cash flow lease of an asset management product.

Furthermore, the present invention is a lease transaction system for financial and/or related instruments, wherein said lease transaction is a return style of direct lease of an asset management product, and/or a non-return style of direct lease of an asset management product.

Also, the present invention is a lease transaction system for financial and/or related instruments, wherein said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

Moreover, the present invention is a lease transaction system for financial and/or related instruments, wherein said lease transaction is a cash flow lease of any one or more capital transaction products from among foreign exchange products, financial derivative products, and quasi-financial derivative products.

Furthermore, the present invention is a lease transaction system for financial and/or related instruments, wherein said system for financial and/or related instruments includes at least one computer as well as a plurality of user terminals connected to the computer network that comprise: transmission means by which a user terminal sends a request for a negotiated lease transaction of an instrument to another user terminal; receiving means by which the user terminal of the requested party receives the request for the negotiated lease transaction sent from the terminal of the requesting party by said transmission means; returning means by which the terminal of the requested party returns a decision of conclusion, non-conclusion or negotiation with respect to the request for the negotiated lease transaction received by said receiving means, to the terminal of the requesting party; receiving means by which the terminal of the requesting party receives the decision returned from the terminal of the requested party by said returning means; notifying means by which the terminal of the requesting party and/or the terminal of the requested party notifies said computer of the result of conclusion or non-conclusion of the negotiated lease transaction; receiving means by which the computer receives the transaction result notified by the user terminal or terminals with said notifying means; and storage means by which the computer stores the transaction result received by said receiving means.

Also, the present invention is a lease transaction system for financial and/or related instruments, wherein said lease transaction is a cash flow lease of an asset management product.

Moreover, the present invention is a lease transaction system for financial and/or related instruments, wherein said lease transaction is a return style of direct lease of an asset management product, and/or a non-return style of direct lease of an asset management product.

Furthermore, the present invention is a lease transaction system for financial and/or related instruments, wherein said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

Also, the present invention is a lease transaction system for financial and/or related instruments, wherein said lease transaction is a cash flow lease of any one or more capital transaction products from among foreign exchange products, financial derivative products, and quasi-financial derivative products.

Now, in the present invention, lease transactions of financial instruments and quasi-financial instruments are, by attribute of object products and style of transactions, categorized as follows:
(a) Cash flow leases of asset management products;
   ① General cash flow leases of asset management products
   ② Cash flow leases of asset management products utilizing their discount values
   ③ Cash flow leases of asset management products targeting their premium values
(b) Direct leases of asset management products;
   ① Non-return style of direct leases of asset management products
   ② Return style of direct leases of asset management products
(c) Cash flow leases of capital raising products;
   ① Redemption-deceleration style of cash flow leases of capital raising products
   ② Redemption-acceleration style of cash flow leases of capital raising products
   ③ Retirement-by-repurchase style of cash flow leases of capital raising products
(d) Cash flow leases of capital transaction products;
   ① Cash flow leases of capital transaction products utilizing their unrealized profits
   ② Cash flow leases of capital transaction products targeting their unrealized losses
(e) Various subleases, which are applied styles of the above (a) - (d); and
(f) Various lease transactions by tie-in, which are also applied styles of the above (a) - (d).

Now, although advantages that users of the present system can enjoy in the above-described lease transactions will be itemized and described in the following, in order that the advantages will be better understood, schemes of the lease transactions in accordance with the invention will also be described.

However, the invention resides in a storage medium storing a computer program, and a computer system for transactions in which the whole or part of asset management products, capital raising products and/or capital transaction products are substantially or actually borrowed and lent between parties while the borrowers directly or indirectly pay fees or equivalents thereof to the lenders, and thus it is intended that the schemes therefor not be limited to those that will be hereinafter described:
1. In the present invention, new styles of transactions related to asset management, capital raising and/or capital transactions can be performed through various lease transactions of financial instruments and/or quasi-financial instruments.

(1) First, the present invention allows a new style of asset management through a cash flow lease of an asset management product.

As one example, suppose that asset manager A is holding asset management product a, and wishes to attain the highest possible yield on investment when disposing of the product in the near future. On the other hand, suppose that asset manager B forecasts that the market value of asset management product a will rise in the future, and thus wishes to acquire the product while not having enough liquidity on hand at present. In this case, the present invention enables both parties to realize their desired economic effects by allowing asset manager A to lease to asset manager B the cash flow arising from asset management product a.

As a result of the lease transaction, asset manager B (hereinafter referred to as 'lessee B') takes over the right to freely dispose of asset management product a in the market during the lease period, and the right to receive the cash flow arising from the product during said period. On the other hand, although asset manager A (hereinafter referred to as 'lessor A') continues to hold asset management product a as retained collateral for the lease transaction, lessor A assigns the jus disponendi of the product to lessee B and assumes an obligation to pay the cash flow arising from the product to lessee B during said period. That is, lessee B pays lessor A a leasing charge on a monthly basis during said period as compensation for the usufruct over asset management product a. Additionally, at the stage where the lease transaction comes into effect, it is deemed that lessor A has assigned asset management product a to lessee B at the appraisal value of that point in time.

For example, the leasing charge may be determined by adding to the value of asset management product a assigned by lessor A to lessee B, things like fees charged by lessor A to lessee B as well as expenses borne by lessor A during the lease period in order to continue to nominally hold asset management product a, and then by dividing the total amount by the number of months in said period. Additionally, the fees or expenses may also include lessor A's cost for funding conducted in the market to acquire asset management product a.

In said example, suppose that a lease transaction with a three year period comes into effect when the appraisal value of asset management product a is 1000; that the fee charged by lessor A to lessee B is 70; and that the expenses borne by lessor A during said period are 5. Then, it can be approximately calculated that the total amount of the leasing charge is 1075 [1000 + 70 + 5], and thus the monthly leasing charge is 30 [1075 / (12 months x 3 years)].

That is, with no initial investment but a monthly payment of 30, lessee B substantially acquires asset management product a whose appraisal value is 1000, and then aims for a future capital gain. If it is further assumed that the annual cash flow for the fruit part arising from the product is 50 (i.e. an annual rate of 5%), lessee B also acquires the right to receive a cash flow of 150 [50 x 3 years] during said period. On the other hand, lessor A substantially disposes of asset management product a at an appraisal value of 1000 when the lease transaction comes into effect, and yet lessor A can afterwards earn a fee of 70 with no additional investment.

For example, suppose that, when 2 years have passed since the opening of the lease transaction, the appraisal value of asset management product a has risen to 1200 in line with the market forecast of lessee B. If lessee B exercises the jus disponendi at this point in time, then since the person that executes the act of disposal in the market is the nominal owner, i.e. lessor A, lessor A receives the disposal amount of 1200 and then pays the amount to the substantial owner of the product, i.e. lessee B. Meanwhile, lessee B pays, in advance, the entire remaining leasing charge of 355 [1075 - (30 x 24 months)] to lessor A, whereby the lease transaction comes to an end.

Since lessor A has already assigned asset management product a, which had an appraisal value of 1000 at the beginning of said period, to lessee B at 1000, lessor A has earned no capital gain in the lease transaction, and yet the fee (70) received from lessee B has been an income. On the other hand, although lessee B has paid a total leasing charge of 1075 for asset management product a, which lessee B took over at 1000 at the beginning of said period, since lessee B has earned a capital gain of 200 [1200 - 1000] through the exercise of the jus disponendi during said period, and received as an income gain the fruits of 100 [50 x 2 years] produced by the product during said period, lessee B has acquired a profit of 225 [1000 - 1075 + 200 + 100] on a net amount basis. Furthermore, depending on how the lease transaction is treated in tax accounting, lessee B may enjoy a tax saving effect.

For example, suppose that, when 2 years have passed since the opening of the lease transaction, the appraisal value of asset management product a has fallen to 900 contrary to the market forecast of lessee B. If lessee B exercises the jus disponendi to cut a loss at this point in time, then since the person that executes the act of disposal in the market is the nominal owner, i.e. lessor A, lessor A receives the disposal amount of 900 and then pays the amount to the substantial owner of the product, i.e. lessee B. Meanwhile, lessee B pays, in advance, the entire remaining leasing charge of 355 [1075 - (30 x 24 months)] to lessor A, whereby the lease transaction comes to an end.

Since lessor A has already assigned asset management product a, which had an appraisal value of 1000 at the beginning of said period, to lessee B at 1000, lessor A has suffered no capital loss in the lease transaction, and the fee (70) received from lessee B has been an income. On the other hand, although lessee B has paid a total leasing charge of 1075 for asset management product a, which lessee B took over at 1000 at the beginning of said period, and counted a capital loss of 100 [900 - 1000] through the exercise of the jus disponendi during said period, since lessee B has received as an income gain the fruits of 100 [50 x 2 years] produced by the product during said period, lessee B has suffered a loss of 75 [1000 - 1075 - 100 + 100] on a net amount basis. Nevertheless, depending on how the lease transaction is treated in tax accounting, lessee B may enjoy a tax saving effect.

For example, suppose that the after-three-year redemption value of asset management product a is 1100, and either that lessee B has been faced with the redemption date of the product (i.e. the closing date of the lease transaction) without exercising the jus disponendi, or that the lease transaction is based on a lease contract from the beginning that does not grant the jus disponendi. In either case, the nominal owner, i.e. lessor A receives the redemption amount of 1100, and then pays the amount to the substantial owner of the product, i.e. lessee B. Additionally, at this point in time, lessee B has already completely paid the leasing charge.

Since lessor A has already assigned asset management product a, which had an appraisal value of 1000 at the beginning of said period, to lessee B at 1000, lessor A has counted no profit or loss from redemption in the lease transaction, and yet the fee (70) received from lessee B has been an income. On the other hand, although lessee B has paid a total leasing charge of 1075 for asset management product a, which lessee B took over at 1000 at the beginning of said period, since lessee B has earned a profit from redemption of 100 [1100 - 1000] as the product has matured at 1100, and received as an income gain the fruits of 150 [50 x 3 years] produced by the product during said period, lessee B has acquired a profit of 175 [1000 - 1075 + 100 + 150] on a net amount basis. Furthermore, depending on how the lease transaction is treated in tax accounting, lessee B may enjoy a tax saving effect.

For example, suppose that the after-three-year redemption value of asset management product a is 1000, and either that lessee B has been faced with the redemption date of the product (i.e. the closing date of the lease transaction) without exercising the jus disponendi, or that the lease transaction is based on a lease contract from the beginning that does not grant the jus disponendi. In either case, the nominal owner, i.e. lessor A receives the redemption amount of 1000, and then pays the amount to the substantial owner of the product, i.e. lessee B. Additionally, at this point in time, lessee B has already completely paid the leasing charge.

Since lessor A has already assigned asset management product a, which had an appraisal value of 1000 at the beginning of said period, to lessee B at 1000, lessor A has counted no profit or loss from redemption in the lease transaction, and yet the fee (70) received from lessee B has been an income. On the other hand, although lessee B has paid a total leasing charge of 1075 for asset management product a, which lessee B took over at 1000 at the beginning of said period, and counted no profit or loss from redemption as the product has matured at 1000, since lessee B has received as an income gain the fruits of 150 [50 x 3 years] produced by the product during said period, lessee B has acquired a profit of 75 [1000 - 1075 + 150] on a net amount basis. Furthermore, depending on how the lease transaction is treated in tax accounting, lessee B may enjoy a tax saving effect.

Cash flow leases of asset management products in accordance with the present invention comprise, for example, the following transaction styles:
(a) A style in which, on the premise that an asset management product that generally has maturity such as a loan asset, a bond, a commercial paper, a deposit asset of a certain category, a fund-type asset management product of a certain category, and an investment vehicle of a certain category will mature as it does, leasing charges are paid and received for the cash inflow of the remaining period of the object product, i.e. the cash flow of the principal and fruits;
(b) A style in which, a period shorter than the remaining period of said product, which generally has maturity, is specified, and then leasing charges are paid and received for the cash inflow of the specified period, i.e. the cash flow of only the fruits;
(c) A style in which, on the premise that the jus disponendi will be exercised with respect to said product, which generally has maturity, leasing charges are paid and received for the cash inflow of a period until the disposal of said product, i.e. the cash flow of the principal and fruits;
(d) A style in which, on the premise that the jus disponendi will be exercised with respect to an asset management product that generally does not have maturity such as land, a building, a compound real estate property, an equity, a deposit asset of a certain category, a fund-type asset management product of a certain category, and an investment vehicle of a certain category, leasing charges are paid and received for the cash inflow of a period until the disposal of the object product, i.e. the cash flow of the principal and fruits; and
(e) A style in which, a period is specified with respect to said product, which generally does not have maturity, and then leasing charges are paid and received for the cash inflow of the specified period, i.e. the cash flow of only the fruits.

Incidentally, in the present invention, regardless of presence or absence of maturity of an object product, or length of a remaining period of an object product, even after the payment and receipt of cash flow come to an end, the payment and receipt of a leasing charge may continue, while to the contrary, even after the payment and receipt of a leasing charge come to an end, the payment and receipt of cash flow may continue. Consequently, whichever the later date of either the last date of payment and receipt of cash flow, or the last date of payment and receipt of a leasing charge, may be set as the last date of the lease transaction. Additionally, the date on which a lease transaction opens shall be referred to as the beginning of the period, the date on which it closes shall be referred to as the end of the period, and the period between the two dates, both inclusive, shall be referred to as the lease period or the period before expiry.

Incidentally, in the present invention, the term 'fund-type asset management product' shall mean any asset management product that is generally set up and managed for many and unspecific asset managers, and shall include a securities investment trust, a real estate investment trust, a commodity fund, a loan trust, and/or a money trust in a narrow sense. Also, the term 'investment vehicle' shall mean any asset management product that is generally set up and utilized by a specific asset manager for the purpose of book value separation, fruits policy, outsourcing of asset management, and/or the like, and shall include a specified money trust, a designated fund trust, a managed securities trust, an equity in an investment subsidiary, and/or a fund-type privately placed bond.

(2) Next, the present invention allows a new style of asset management through a cash flow lease utilizing a specific part of an asset management product. That is, the cash flow lease of an asset management product in accordance with the present invention includes not only the lease transaction on the basis of an appraisal value of a whole product, but also a lease transaction on the basis of a specified part of the appraisal value.

As one example, suppose that an appraisal value of asset management product c that asset manager C is holding is 3000, and asset manager C wishes to attain the highest possible yield on investment when disposing of the product in the near future. On the other hand, suppose that asset manager D forecasts that the market value of asset management product c will rise in the future, and thus wishes to acquire the product while finding that his or her current on-hand-liquidity of 2000 is not enough to acquire the whole product. In this case, the present invention enables both parties to realize their desired economic effects by allowing asset manager C to lease to asset manager D only part (1000) of asset management product c.

Additionally, as used in the present invention, out of the appraisal value of a whole product, any part that is not an object of a lease transaction, e.g. 2000 as above shall be referred to as a 'decreased appraisal value,' while any part that is an object of a lease transaction, e.g. 1000 as above shall be referred to as a 'discount value.'

As a result of the lease transaction, first, asset manager D (hereinafter referred to as 'lessee D') pays asset manager C (hereinafter referred to as 'lessor C') the amount corresponding to the decreased appraisal value of asset management product c, thereby taking over the substantial ownership of the decreased appraisal value part as well as the fruit part of the product, and also the right to freely dispose of the product in the market during the lease period. On the other hand, although lessor C continues to hold asset management product c as retained collateral for the lease transaction, in return for the receipt of the amount corresponding to the decreased appraisal value, lessor C assigns to lessee D the substantial ownership of the decreased appraisal value part as well as the fruit part of the product, and also the jus disponendi of the product.

Next, lessee D pays lessor C a leasing charge on a monthly basis during said period to substantially own the discount value part as well. That is, lessee D pays the leasing charge as compensation for these usufructs over asset management product c.

For example, the leasing charge may be determined by adding to the value (1000) of the discount value part leased by lessor C to lessee D, things like fees charged by lessor C to lessee D as well as expenses borne by lessor C during the lease period in order to continue to nominally hold asset management product c, and then by dividing the total amount by the number of months in said period. Additionally, the fees or expenses may also include part of lessor C's cost for funding conducted in the market to acquire asset management product c.

Suppose that the lease transaction in said example has a three-year period; that the fee charged by lessor C to lessee D is 70; and that the expenses borne by lessor C during said period are 10. Then, it can be approximately calculated that the total amount of the leasing charge is 1080 [1000 + 70 + 10], and thus the monthly leasing charge is 30 [1080 / (12 months x 3 years)].

That is, with a monthly payment of 30, lessee D substantially acquires the discount value part as well, whose appraisal value is 1000, and then aims for a future capital gain. Also, since lessee D has already obtained the substantial ownership of asset management product c, if it is assumed that the annual cash flow for the fruit part arising from the product is 150 (i.e. an annual rate of 5% of the whole amount), lessee D will receive a cash flow of 450 [150 x 3 years] during said period. On the other hand, lessor C substantially disposes of asset management product c when receiving the amount corresponding to the decreased appraisal value, and yet lessor C can afterwards earn a fee of 70 with no additional investment.

For example, suppose that, when 2 years have passed since the opening of the lease transaction, the appraisal value of the whole of asset management product c has risen to 3200, that is, the discount value has increased to 1200 in line with the market forecast of lessee D. If lessee D exercises the jus disponendi at this point in time, then since the person that executes the act of disposal in the market is the nominal owner, i.e. lessor C, lessor C receives the disposal amount (3200) of the whole of asset management product c, and then pays the entire amount to the substantial owner of the product, i.e. lessee D. Meanwhile, lessee D pays, in advance, the entire remaining leasing charge of 360 [1080 - (30 x 24 months)] to lessor C, whereby the lease transaction comes to an end.

Since lessor C has already assigned the discount value, which had an appraisal value of 1000 at the beginning of said period, to lessee D at 1000, lessor C has earned no capital gain in the lease transaction, and yet the fee (70) received from lessee D has been an income. On the other hand, although lessee D has paid a total leasing charge of 1080 for the discount value, which lessee D took over at 1000 at the beginning of said period, since lessee D has earned a capital gain of 200 [1200 - 1000] through the exercise of the jus disponendi during said period, and received as an income gain the fruits of 300 [150 x 2 years] produced by the product during said period, lessee D has acquired a profit of 420 [1000 - 1080 + 200 + 300] on a net amount basis. Furthermore, depending on how the lease transaction is treated in tax accounting, lessee D may enjoy a tax saving effect.

For example, suppose that, when 2 years have passed since the opening of the lease transaction, the appraisal value of the whole of asset management product c has fallen to 2900, that is, the discount value has decreased to 900 contrary to the market forecast of lessee D. If lessee D exercises the jus disponendi to cut a loss at this point in time, then since the person that executes the act of disposal in the market is the nominal owner, i.e. lessor C, lessor C receives the disposal amount (2900) of the whole of asset management product c, and then pays the entire amount to the substantial owner of the product, i.e. lessee D. Meanwhile, lessee D pays, in advance, the entire remaining leasing charge of 360 [1080 - (30 x 24 months)] to lessor C, whereby the lease transaction comes to an end.

Since lessor C has already assigned the discount value, which had an appraisal value of 1000 at the beginning of said period, to lessee D at 1000, lessor C has suffered no capital loss in the lease transaction, and the fee (70) received from lessee D has been an income. On the other hand, although lessee D has paid a total leasing charge of 1080 for the discount value, which lessee D took over at 1000 at the beginning of said period, and has counted a capital loss of 100 [900 - 1000] through the exercise of the jus disponendi during said period, since lessee D has received as an income gain the fruits of 300 [150 x 2 years] produced by the product during said period, lessee D has acquired a profit of 120 [1000 - 1080 - 100 + 300] on a net amount basis. Furthermore, depending on how the lease transaction is treated in tax accounting, lessee D may enjoy a tax saving effect.

(3) Also, the present invention allows a new style of asset management through a cash flow lease targeting a premium value added onto the appraisal value of an asset management product.

As one example, suppose that an appraisal value of asset management product e that asset manager E is holding is 2000, and asset manager E is planning to dispose of the product in the near future. Meanwhile, since asset manager E finds that the disposal amount alone is not enough to secure his or her future liquidity position, asset manager E feels compelled to raise additional funds of 1000. On the other hand, suppose that asset manager F forecasts that the market value of asset management product e will rise in the future, and thus wishes to acquire the product and further attain the highest possible yield on investment. In this case, the present invention enables both parties to realize their desired economic effects by allowing asset manager F to pay asset manager E funds of 3000, thereby taking over asset management product e and substantially replenishing a cash flow of 1000 to asset manager E.

Additionally, as used in the present invention, any amount that is an object of cash flow replenishment in a lease transaction, e.g. 1000 as above shall be referred to as a 'premium value,' while any amount that is determined by adding an appraisal value of a product itself to the premium value, e.g. 3000 as above shall be referred to as an 'increased appraisal value.'

As a result of the lease transaction, first, asset manager F (hereinafter referred to as 'lessor F') pays asset manager E (hereinafter referred to as 'lessee E') the amount corresponding to the increased appraisal value of asset management product e, thereby taking over the substantial ownership of the principal part as well as the fruit part of the product, and also the right to freely dispose of the product in the market during the lease period, and replenishing to lessee E the cash flow corresponding to the amount of the premium value. On the other hand, in return for the amount corresponding to the increased appraisal value received from lessor F, lessee E assigns to lessor F the substantial ownership of the principal part as well as the fruit part of asset management product e, and also the jus disponendi of the product, and acquires the cash flow corresponding to the amount of the premium value. Then, lessee E pays lessor F a leasing charge on a monthly basis during said period in return for the cash flow corresponding to the amount of the premium value. That is, lessee E pays the leasing charge as compensation for the usufruct over the replenished cash flow.

For example, the leasing charge may be determined by adding things like fees charged by lessor F to lessee E to the amount (1000) corresponding to the premium value replenished by lessor F to lessee E, and then by dividing the total amount by the number of months in the lease period. Additionally, the fees may also include part of lessor F's cost for funding conducted in the market to raise the amount corresponding to the increased appraisal value.

Suppose that the lease transaction in said example has a three-year period and the fee charged by lessor F to lessee E is 70. Then, it can be approximately calculated that the total amount of the leasing charge is 1070 [1000 + 70], and thus the monthly leasing charge is 30 [1070 /(12 months x 3 years)].

That is, with a monthly payment of 30, lessee E can substantially dispose of asset management product e at an increased appraisal value of 3000, thereby securing his or her liquidity position. On the other hand, when the cash flow is replenished, lessor F substantially acquires asset management product e at the increased appraisal value while assuming the premium value of 1000, and yet lessor F can afterwards earn a fee of 70 by receiving a leasing charge of 1070 in total. Moreover, if it is assumed that the annual cash flow for the fruit part arising from asset management product e is 100 (i.e. an annual rate of 5% of the whole amount), lessor F will receive a cash flow of 300 [100 x 3 years] during said period. Further, lessor F can aim for a capital gain of the product.

For example, suppose that, when 2 years have passed since the opening of the lease transaction, the appraisal value of asset management product e has risen to 2400 in line with the market forecast of lessor F. If lessor F exercises the jus disponendi at this point in time, then since the person that executes the act of disposal in the market is lessee E, lessee E receives the disposal amount (2400) of asset management product e, and then pays the entire amount to the substantial owner of the product, i.e. lessor F. Moreover, lessee E pays, in advance, to lessor F the entire remaining leasing charge of 350 [1070 - (30 x 24 months)], or alternatively continues to pay, as before, to lessor F the remaining leasing charge on a monthly basis over the remaining period of the lease transaction, whereby in either case the lease transaction comes to an end.

Since lessor F has substantially earned a capital gain of 400 as the appraisal value of asset management product e has risen to 2400; has counted as an income the fee of 70 from lessee E through the receipt of the leasing charge; and has received as an income gain the fruits of 200 [100 x 2 years] produced by the product during said period, lessor F has acquired a total profit of 670 [400 + 70 + 200]. On the other hand, although lessee E has paid a total leasing charge of 1070 for the cash flow of 1000 replenished by lessor F, lessee E has been able to cover the expected shortage of funds. Also, depending on how the lease transaction is treated in tax accounting, lessee E may enjoy a tax saving effect.

For example, suppose that, when 2 years have passed since the opening of the lease transaction, the appraisal value of asset management product e has fallen to 1900 contrary to the market forecast of lessor F. If lessor F exercises the jus disponendi at this point in time, then since the person that executes the act of disposal in the market is lessee E, lessee E receives the disposal amount (1900) of asset management product e, and then pays the entire amount to the substantial owner of the product, i.e. lessor F. Moreover, lessee E pays, in advance, to lessor F the entire remaining leasing charge of 350 [1070 - (30 x 24 months)], or alternatively continues to pay, as before, to lessor F the remaining leasing charge on a monthly basis over the remaining period of the lease transaction, whereby in either case the lease transaction comes to an end.

Although lessor F has substantially suffered a capital loss of 100 as the appraisal value of asset management product e has fallen to 1900, since lessor F has counted as an income the fee of 70 from lessee E through the receipt of the leasing charge, and received as an income gain the fruits of 200 [100 x 2 years] produced by the product during said period, lessor F has acquired a profit of 170 [-100 + 70 + 200] on a net amount basis. On the other hand, although lessee E has paid a total leasing charge of 1070 for the cash flow of 1000 replenished by lessor F, lessee E has been able to cover the expected shortage of funds. Also, depending on how the lease transaction is treated in tax accounting, lessee D may enjoy a tax saving effect.

Incidentally, if the decreased appraisal value of a product is a book value or an acquisition value for a lessor while the discount value of the product is an unrealized profit for the lessor, a cash flow lease of an asset management product utilizing its discount value in accordance with the present invention shall be equal to a lease transaction in which the lessor substantially leases the unrealized profit to the lessee. Also, if the increased appraisal value of a product is a book value or an acquisition value for a lessee while the premium value of the product is an unrealized loss for the lessee, a cash flow lease of an asset management product targeting its premium value in accordance with the present invention shall be equal to a lease transaction in which the lessor substantially leases to the lessee a replenishing cash flow targeting the unrealized loss.

(4) Furthermore, the present invention allows a new style of asset management through a direct lease of an asset management product. That is, the same economic effects as those of the above-described cash flow lease based on an appraisal value of a whole asset management product can also be realized by a direct lease of an asset management product.

As one example, suppose that asset manager G is holding asset management product g, and wishes to attain the highest possible yield on investment when disposing of the product in the near future. On the other hand, suppose that asset manager H forecasts that the market value of asset management product g will rise in the future, and thus wishes to acquire the product while not having enough liquidity on hand at present. In this case, the present invention enables both parties to realize their desired economic effects by allowing asset manager G to directly lease asset management product g to asset manager H.

As a result of the lease transaction, asset manager H (hereinafter referred to as 'lessee H') takes over the actual of asset management product g from asset manager G (hereinafter referred to as 'lessor G'), thereby acquiring rights such as the right to freely dispose of the product in the market during the lease period, and the right to receive the cash flow arising from the product during said period. Then, lessee H pays lessor G a leasing charge on a monthly basis during said period as compensation for these usufructs over asset management product g. Additionally, at the stage where the lease transaction comes into effect, lessor G actually assigns asset management product g to lessee H at the appraisal value of that point in time. Also, in the present invention, this lease transaction shall be referred to as a 'non-return style of direct lease of an asset management product.'

For example, the leasing charge may be determined by adding things like fees charged by lessor G to lessee H, to the value of asset management product g assigned by lessor G to lessee H, and then by dividing the total amount by the number of months in the lease period. Additionally, the fees may also include lessor G's cost for funding conducted in the market to acquire asset management product g.

In said example, suppose that a lease transaction with a three year period comes into effect when the appraisal value of asset management product g is 1000, and that the fee charged by lessor G to lessee H is 70. Then, it can be approximately calculated that the total amount of the leasing charge is 1070 [1000 + 70], and thus the monthly leasing charge is 30 [1070 / (12 months x 3 years)].

That is, with no initial investment but a monthly payment of 30, lessee H actually acquires asset management product g whose appraisal value is 1000, and then aims for a future capital gain. If it is further assumed that the annual cash flow for the fruit part arising from the product is 50 (i.e. an annual rate of 5%), lessee H also acquires the right to receive a cash flow of 150 [50 x 3 years] during said period, and the like. On the other hand, lessor G actually disposes of asset management product g at an appraisal value of 1000 when the lease transaction comes into effect, and yet lessor G can afterwards earn a fee of 70 with no additional investment.

For example, suppose that, when 2 years have passed since the opening of the lease transaction, the appraisal value of asset management product g has risen to 1200 in line with the market forecast of lessee H. If lessee H exercises the jus disponendi at this point in time, lessee H, who is the actual owner of the product, receives the disposal amount of 1200. Meanwhile, lessee H pays, in advance, the entire remaining leasing charge of 350 [1070 - (30 x 24 months)] to lessor G, whereby the lease transaction comes to an end.

Since lessor G has already assigned asset management product g, which had an appraisal value of 1000 at the beginning of said period, to lessee H at 1000, lessor G has earned no capital gain in the lease transaction, and yet the fee (70) received from lessee H has been an income. On the other hand, although lessee H has paid a total leasing charge of 1070 for asset management product g, which lessee H took over at 1000 at the beginning of said period, since lessee H has earned a capital gain of 200 [1200 - 1000] through the exercise of the jus disponendi during said period, and received as an income gain the fruits of 100 [50 x 2 years] produced by the product during said period, lessee H has acquired a profit of 230 [1000 - 1070 + 200 + 100] on a net amount basis. Furthermore, depending on how the lease transaction is treated in tax accounting, lessee H may enjoy a tax saving effect.

For example, suppose that, when 2 years have passed since the opening of the lease transaction, the appraisal value of asset management product g has fallen to 900 contrary to the market forecast of lessee H. If lessee H exercises the jus disponendi to cut a loss at this point in time, lessee H, who is the actual owner of the product, receives the disposal amount of 900. Meanwhile, lessee H pays, in advance, the entire remaining leasing charge of 350 [1070 - (30 x 24 months)] to lessor G, whereby the lease transaction comes to an end.

Since lessor G has already assigned asset management product g, which had an appraisal value of 1000 at the beginning of said period, to lessee H at 1000, lessor G has suffered no capital loss in the lease transaction, and the fee (70) received from lessee H has been an income. On the other hand, although lessee H has paid a total leasing charge of 1070 for asset management product g, which lessee H took over at 1000 at the beginning of said period, and counted a capital loss of 100 [900 - 1000] through the exercise of the jus disponendi during said period, since lessee H has received as an income gain the fruits of 100 [50 x 2 years] produced by the product during said period, lessee H has suffered a loss of 70 [1000 - 1070 - 100 + 100] on a net amount basis. Nevertheless, depending on how the lease transaction is treated in tax accounting, lessee H may enjoy a tax saving effect

(5) Moreover, the present invention allows a new style of asset management predicated on the return of a borrowed asset management product. That is, the direct lease of an asset management product in accordance with the present invention includes a transaction similar to a rental contract.

As one example, suppose that asset manager I has an asset management policy or business policy to hold the acquired asset management product i over the long term, and yet wishes to effectively utilize the product during the holding period. On the other hand, suppose that asset manager J forecasts that the market value of asset management product i will fall in the future, and thus wishes to earn a capital gain by short disposing of the product and subsequently reacquiring the product. In this case, the present invention enables both parties to realize their desired economic effects by allowing asset manager I to directly lease asset management product i to asset manager J.

As a result of the lease transaction, asset manager J (hereinafter referred to as 'lessee J') takes over the actual of asset management product i from asset manager I (hereinafter referred to as 'lessor I'), thereby acquiring rights such as the right to freely dispose of the product in the market during the lease period, and assuming an obligation to return the product by the end of the period regardless of its actual disposal. However, the right to receive the fruits arising from the product during the lease period is not substantially transferred, and thus the fruits received by lessee J are returned to lessor I. Additionally, in the present invention, this lease transaction shall be referred to as a 'return style of direct lease of an asset management product.'

In the case in which lessee J has disposed of asset management product i during said period, lessee J may afterwards catch a downward phase of the market to reacquire the product from the market, thereby recognizing as a capital gain the difference between the higher disposal value and the lower reacquisition value. In the end, lessee J returns the product to lessor I. That is, lessee J pays lessor I a leasing charge on a monthly basis during said period as compensation for the usufruct over asset management product i.

Then, lessor I can further improve the yield on investment by repeatedly leasing asset management product i to lessee J through re-leasing, re-re-leasing, etc., and/or by leasing the product to other lessees through secondary leasing, tertiary leasing, etc.

Additionally, the object to be returned by lessee J to lessor I is ordinarily asset management product i itself, and yet may also include other products equivalent to asset management product i such as another product being serviced by the same capital raiser, or an equivalent product being serviced by another capital raiser. Also, at the stage where the lease transaction comes into effect, lessor I assigns asset management product i to lessee J at the appraisal value of that point in time, and then may receive as collateral from lessee J an assignment amount corresponding to the appraisal value. In this case, lessor I manages the cash collateral during said period, pays lessee J the interest arising therefrom, and then returns the collateral to lessee J at the end of the period.

For example, the leasing charge comprises fees that lessor I charges to lessee J, and yet if cash is utilized as collateral as described above, the leasing charge is substantially reduced by the amount of interest on the cash collateral. Also, the fees may include lessor I's cost for funding conducted in the market to acquire asset management product i.

In said example, suppose that a lease transaction with a three year period comes into effect when the appraisal value of asset management product i is 1000; that the fee charged by lessor I to lessee J is 210 (i.e. 70 per annum); and that the interest on cash collateral is 30 per annum (i.e. an annual rate of 3%).

Then, it can be approximately calculated that the total amount of the leasing charge is 120 [210 - (30 x 3 years)], and thus the monthly leasing charge is 3 [120 /(12 months x 3 years)].

That is, with a monthly payment of 3, lessee J substantially acquires asset management product i whose appraisal value is 1000, and then can aim for a capital gain at a future downward phase of the market. On the other hand, lessor I earns a leasing charge of 120 with no additional investment. Also, if it is assumed that the annual cash flow for the fruit part arising from the product is 50 (i.e. an annual rate of 5%), lessor I will receive, as before, a cash flow of 150 [50 x 3 years] during said period.

Additionally, viewed from another perspective, if the payment and receipt of cash collateral in the lease transaction is recognized as the payment and receipt of funds, the transaction will be deemed as follows: lessor I gives lessee J asset management product i as collateral to raise funds from lessee J, and then pays the loan interest to lessee J, while lessee J receives asset management product i from lessor I as collateral to lend funds to lessor I, and then receives the loan interest from lessor I.

For example, immediately on the opening date of the lease transaction, if lessee J has exercised the jus disponendi to short dispose of asset management product i in the market, lessee J, who is the nominal owner thereof, receives the disposal amount of 1000. When two years have passed since the disposal, if the appraisal value of the product has fallen to 800 in line with the market forecast of lessee J, and thus lessee J has reacquired the product from the market to take a profit, lessee J pays the reacquisition amount of 800 to a seller in the market. Then, lessee J returns the reacquired asset management product i to its actual owner, i.e. lessor I, whereby the lease transaction comes to an end.

Since lessor I has already assigned asset management product i, which had an appraisal value of 1000 at the beginning of said period, to lessee J at 1000, lessor I has earned no capital gain in the lease transaction. Yet, since lessor I has counted an income of 80, which was determined by deducting the on-collateral-interest of 60 [30 x 2 years] paid to lessee J from the fee of 140 [70 x 2 years] received from lessee J, and as before, has received as an income gain the fruits of 100 [50 x 2 years] produced by the product during said period, lessor I has acquired a profit of 180 [80 + 100] on a net amount basis. On the other hand, although lessee J has paid a fee of 140 to lessor I for asset management product i, which lessee J took over at 1000 at the beginning of said period, since lessee J has received interest (60) on the collateral from lessor I, and earned a capital gain of 200 [1000 - 800] through the short disposal at the beginning of said period and the subsequent reacquisition after two years, lessee J has acquired a profit of 120 [-140 + 60 + 200] on a net amount basis.

For example, when two years have passed since lessee J short disposed of asset management product i on the opening date of the lease transaction, if the appraisal value of the product has risen to 1100 contrary to the market forecast of lessee J, and thus lessee J has reacquired the product from the market to cut a loss, lessee J pays the reacquisition amount of 1100 to a seller in the market. Then, lessee J returns the reacquired asset management product i to its actual owner, i.e. lessor I, whereby the lease transaction comes to an end.

Since lessor I has already assigned asset management product i, which had an appraisal value of 1000 at the beginning of said period, to lessee J at 1000, lessor I has suffered no capital loss in the lease transaction. Meanwhile, since lessor I has counted an income of 80, which was determined by deducting the on-collateral-interest of 60 [30 x 2 years] paid to lessee J from the fee of 140 [70 x 2 years] received from lessee J, and as before, has received as an income gain the fruits of 100 [50 x 2 years] produced by the product during said period, lessor I has acquired a profit of 180 [80 + 100] on a net amount basis. On the other hand, since lessee J has paid a fee of 140 to lessor I for asset management product i, which lessee J took over at 1000 at the beginning of said period; has received interest (60) on the collateral from lessor I; and has suffered a capital loss of 100 [1000 - 1100] through the short disposal at the beginning of said period and the subsequent reacquisition, lessee J has counted a loss of 180 [-140 + 60 -100] on a net amount basis.

(6) Besides, the present invention allows a new style of capital raising and asset management through a cash flow lease of a capital raising product.

As one example, suppose that capital raiser K has a position of capital raising product k. Capital raiser K is faced with the redemption of the product in the near future, and yet wishes to extend the remaining period by decelerating the redemption of principal, thereby gaining leeway in his or her future liquidity position. On the other hand, asset manager L wishes to generate some earnings by involving himself or herself in the liability management of capital raiser K. In this case, the present invention enables both parties to realize their desired economic effects by allowing asset manager L to lease a cash flow corresponding to the amount of the redemption value of capital raising product k.

As a result of the lease transaction, asset manager L (hereinafter referred to as 'lessor L') assumes the position of capital raising product k, which capital raiser K (hereinafter referred to as 'lessee K') is servicing, thereby assuming the obligation to pay the redemption amount to the asset manager or managers holding the product as an object of asset management. On the other hand, lessee K passes on the position of capital raising product k to lessor L, thereby being released from the obligation to pay the redemption amount. Then, lessee K afterwards pays lessor L a leasing charge on a monthly basis as compensation for the usufruct over the replenished cash flow, whereby the redemption of principal is substantially decelerated. Additionally, in the present invention, this lease transaction shall be referred to as a 'redemption-deceleration style of cash flow lease of a capital raising product.'

For example, the leasing charge may be determined by adding things like fees charged by lessor L to lessee K, to the redemption value of capital raising product k passed on by lessee K to lessor L, and then by dividing the total amount by the number of months in the lease period. Additionally, the fees may also include lessor L's cost for funding conducted in the market to cover the replenishing cash flow.

In said example, suppose that a lease transaction with a three year period comes into effect; that the redemption value of the product is 1000; and that the fee charged by lessor L to lessee K is 150. Then, it can be approximately calculated that the total amount of the leasing charge is 1150 [1000 + 150], and thus the monthly leasing charge is 32 [1150 /(12 months x 3 years)].

That is, with a monthly payment of 32, lessee K can substantially extend the remaining period of capital raising product k by three years, thereby gaining leeway in his or her liquidity position. Also, depending on how the lease transaction is treated in tax accounting, lessee K may enjoy a tax saving effect. On the other hand, lessor L bears the redemption amount of 1000 when the lease transaction comes into effect, and yet lessor L can earn a fee of 150 over the three subsequent years by receiving a leasing charge of 1150 in total. Additionally, the redemption amount is paid to the holder or holders of capital raising product k via the nominal capital raiser, i.e. lessee K.

(7) As one example, suppose that capital raiser M has a position of capital raising product m. A number of years remain until redemption of the product, and yet capital raiser M wishes to complete the redemption at the present time when his or her liquidity on hand is high, thereby being released from the obligation to subsequently pay the cash flow for the fruits. On the other hand, asset manager N wishes to generate some earnings by involving himself or herself in the liability management of capital raiser M. In this case, the present invention enables both parties to realize their desired economic effects by allowing asset manager N to lease cash flow targeting the position of capital raising product m.

As a result of the lease transaction, asset manager N (hereinafter referred to as 'lessor N') assumes the position of capital raising product m, which capital raiser M (hereinafter referred to as 'lessee M') is servicing, thereby assuming the obligation to pay, over the remaining period of the product, the cash flow for the principal and fruits to the asset manager or managers holding the product as an object of asset management. On the other hand, lessee M passes on the position of capital raising product m to lessor N, thereby being released from the obligation to pay the cash flow for the principal and fruits. Then, lessee M pays lessor N a leasing charge in a lump sum as compensation for the usufruct over the replenishing cash flow, whereby the redemption of principal is substantially accelerated. Additionally, at the stage where the lease transaction comes into effect, it is deemed that lessee M has passed on capital raising product m to lessor N at the appraisal value of that point in time. Also, in the present invention, this lease transaction shall be referred to as a 'redemption-acceleration style of cash flow lease of a capital raising product.'

For example, the leasing charge may be determined by adding things like fees charged by lessor N to lessee M, to the appraisal value of capital raising product m passed on by lessee M to lessor N. In said example, suppose that the remaining period of capital raising product m is three years and the lease period is set to match the maturity; that the appraisal value of the product is 1000; and that the fee charged by lessor N to lessee M is 150. Then, it can be approximately calculated that the total amount of the leasing charge is 1150 [1000 + 150].

That is, with a lump sum payment of 1150 as a leasing charge at the beginning of said period, lessee M can substantially redeem capital raising product m, thereby being released from the obligation to subsequently pay the cash flow for the fruits. Also, depending on how the lease transaction is treated in tax accounting, lessee M may enjoy a tax saving effect. On the other hand, lessor N receives a leasing charge of 1150 when the lease transaction comes into effect, thereby assuming the obligation to pay the cash flow for the principal and fruits to the asset manager or managers holding capital raising product m whose appraisal value is 1000, and yet lessor N can earn a fee of 150 on a present value basis. Additionally, the cash flow is paid to the holder or holders of capital raising product m via the nominal capital raiser, i.e. lessee M.

(8) As one example, suppose that capital raiser O has a position of capital raising product o. Capital raiser O wishes to retire the product by repurchase in the near future to improve various financial variables, and yet does not have leeway in his or her on-hand-liquidity at present. On the other hand, asset manager P wishes to generate some earnings by involving himself or herself in the financial management of capital raiser O. In this case, the present invention enables both parties to realize their desired economic effects by allowing asset manager P to lease a cash flow corresponding to the amount of the repurchase value of capital raising product o.

As a result of the lease transaction, asset manager P (hereinafter referred to as 'lessor P') assumes the position of capital raising product o, which capital raiser O (hereinafter referred to as 'lessee O') is servicing, thereby assuming the obligation to pay the repurchase amount to the asset manager or managers holding the product as an object of asset management when lessee O retires the product by repurchase in the market. On the other hand, lessee O passes on the position of capital raising product o to lessor P, thereby being released from the obligation to pay the repurchase amount. Then, lessee O afterwards pays lessor P a leasing charge on a monthly basis as compensation for the usufruct over the replenished cash flow, whereby the retirement of the product by repurchase is substantially completed. Additionally, in the present invention, this lease transaction shall be referred to as a 'retirement-by-repurchase style of cash flow lease of a capital raising product.'

For example, the leasing charge may be determined by adding things like fees charged by lessor P to lessee O, to the repurchase value in the market of capital raising product o passed on by lessee O to lessor P, and then by dividing the total amount by the number of months in the lease period. Additionally, the fees may also include lessor P's cost for funding conducted in the market to cover the replenishing cash flow.

In said example, suppose that a lease transaction with a three year period comes into effect; that the repurchase value of the product is 1000; and that the fee charged by lessor P to lessee O is 150. Then, it can be approximately calculated that the total amount of the leasing charge is 1150 [1000 + 150], and thus the monthly leasing charge is 32 [1150 /(12 months x 3 years)].

That is, with a monthly payment of 32, lessee O can substantially retire capital raising product o by repurchase, thereby improving his or her financial variables. Also, depending on how the lease transaction is treated in tax accounting, lessee O may enjoy a tax saving effect. On the other hand, lessor P bears the repurchase amount of 1000 when the lease transaction comes into effect, and yet lessor P can earn a fee of 150 over the three subsequent years by receiving a leasing charge of 1150 in total. Additionally, the repurchase amount is paid to the holder or holders of capital raising product o via the nominal capital raiser, i.e. lessee O.

Cash flow leases of capital raising products in accordance with the present invention comprise, for example, the following transaction styles:
(a) A style in which, on the premise that a capital raising product that generally has maturity such as a borrowed liability, a bond, a commercial paper, and a deposit liability of a certain category will mature as it does, a leasing charge is paid and received for the cash outflow of the remaining period of the object product, i.e. the cash flow of the principal and fruits;
(b) A style in which, a period shorter than the remaining period of said product, which generally has maturity, is specified and then a leasing charge is paid and received for the cash outflow of the specified period, i.e. the cash flow of only the fruits;
(c) A style in which, on the premise that said product, which generally has maturity, will be prematurely redeemed or be retired by a repurchase, a leasing charge is paid and received for the cash outflow of a period until the lapse of said product, i.e. the cash flow of the principal and fruits;
(d) A style in which, on the premise that a capital raising product that generally does not have maturity such as a deposit liability of a certain category and an equity will be retired by a repurchase or be canceled, a leasing charge is paid and received for the cash outflow of a period until the lapse of the object product, i.e. the cash flow of the principal and fruits; and
(e) A style in which, a period is specified with respect to said product, which generally does not have maturity, and then a leasing charge is paid and received for the cash outflow of the specified period, i.e. the cash flow of only the fruits.

Additionally, as used in the present invention, the term 'premature redemption' shall mean repaying, canceling or redeeming a capital raising product having maturity at a predetermined value ahead of the maturity, while the term 'retirement by a repurchase' shall mean repurchasing a capital raising product at a circulation value or the like to lapse it regardless of the presence or absence of maturity.

(9) Next, the present invention allows a new style of capital transaction through a cash flow lease of a capital transaction product. That is, with respect to capital transaction products such as foreign exchange products, forward products, futures products, option products and swap products, a capital transactor mutually creates an opposite position directly with a counterparty, or indirectly through a securities exchange or a derivatives exchange. In the present invention, the capital transactor can lease cash flow arising from such a position, to another capital transactor.

A capital transaction product requires no initial investment, or an extremely small amount of initial investment compared with an underlying product, and enables a net settlement or fixing of a profit or loss by a closing transaction. Even if an underlying product is delivered, since the underlying product already has a liquid trading market, a purchase or sale thereof in the market enables the capital transactor to create a state that is substantially not different from that of the net settlement. That is, the asset value of a capital transaction product resides in its unrealized profit while the liability value thereof resides in its unrealized loss, and thus a cash flow lease of a capital transaction product in accordance with the present invention is a lease transaction on the basis of the appraisal value of an unrealized profit or loss.

As one example, suppose that capital transactor Q is carrying an unrealized profit of capital transaction product q, and the appraisal value thereof is 1000. Capital transactor Q wishes to attain the highest possible earnings when realizing the unrealized profit of the product in the near future through exercising rights or fulfilling obligations accompanying the product. On the other hand, suppose that capital transactor R forecasts that the market value of capital transaction product q will further rise in the future, and thus wishes to create anew the position of the product while finding that it is nearly impossible to create even a similar position due to the current market level or market liquidity. In this case, the present invention enables both parties to realize their desired economic effects by allowing capital transactor Q to lease to capital transactor R the position of capital transaction product q carrying the unrealized profit

As a result of the lease transaction, capital transactor R (hereinafter referred to as 'lessee R') takes over the rights accompanying capital transaction product q or assumes the obligations accompanying the product, thereby taking over the substantial ownership of the unrealized profit of the product. On the other hand, although capital transactor Q (hereinafter referred to as 'lessor Q') continues to carry the position of capital transaction product q as retained collateral for the lease transaction, lessor Q assigns to lessee R the substantial ownership of the unrealized profit by assigning the rights accompanying the product, or passing on the obligations accompanying the product. That is, lessee R pays lessor Q a leasing charge on a monthly basis during the lease period as compensation for the usufruct over the unrealized profit. Additionally, at the stage where the lease transaction comes into effect, it is deemed that lessor Q has assigned to lessee R the unrealized profit of capital transaction product q at the appraisal value of that point in time.

For example, the leasing charge may be determined by adding to the value (1000) of the unrealized profit assigned by lessor Q to lessee R, things like fees charged by lessor Q to lessee R as well as expenses borne by lessor Q during the lease period in order to continue to nominally carry the position of capital transaction product q, and then by dividing the total amount by the number of months in said period.

Suppose that the lease transaction in said example has a three-year period; that the fee charged by lessor Q to lessee R is 70; and that the expenses borne by lessor Q during said period are 5. Then, it can be approximately calculated that the total amount of the leasing charge is 1075 [1000 + 70 + 5], and thus the monthly leasing charge is 30 [1075 /(12 months x 3 years)].

That is, lessee R takes over an unrealized profit of 1000 with a monthly payment of 30, and then can aim for a future increase, while lessor Q assigns the unrealized profit of 1000 when the lease transaction comes into effect, and yet can afterwards earn a fee of 70.

For example, suppose that, when 2 years have passed since the opening of the lease transaction, the unrealized profit of capital transaction product q has increased to 1200 in line with the market forecast of lessee R If, at this point in time, lessee R exercises the rights taken over from lessor Q or fulfills the obligations assumed from lessor Q regarding the product, then since the person that executes the act of dissolution of the position in the market is the nominal carrier of the position, i.e. lessor Q, lessor Q counts the realized profit of 1200, and then pays the amount to the substantial beneficiary of the realized profit, i.e. lessee R. Meanwhile, lessee R pays, in advance, the entire remaining leasing charge of 355 [1075 - (30 x 24 months)] to lessor Q, whereby the lease transaction comes to an end.

Since lessor Q has already assigned the unrealized profit, which was 1000 at the beginning of said period, to lessee R at 1000, lessor Q has earned no realized profit in the lease transaction, and yet the fee (70) received from lessee R has been an income. On the other hand, although lessee R has paid a total leasing charge of 1075 for the unrealized profit, which lessee R took over at 1000 at the beginning of said period, since lessee R has earned an appreciation of 200 [1200 - 1000] in the realized profit by exercising the rights or fulfilling the obligations accompanying the product, lessee R has acquired a profit of 125 [1000 - 1075 + 200] on a net amount basis. Furthermore, depending on how the lease transaction is treated in tax accounting, lessee R may enjoy a tax saving effect.

For example, suppose that, when 2 years have passed since the opening of the lease transaction, the unrealized profit of capital transaction product q has decreased to 900 contrary to the market forecast of lessee R. If, at this point in time, lessee R exercises the rights taken over from lessor Q or fulfills the obligations assumed from lessor Q regarding the product, then since the person that executes the act of dissolution of the position in the market is the nominal carrier of the position, i.e. lessor Q, lessor Q counts the realized profit of 900, and then pays the amount to the substantial beneficiary of the realized profit, i.e. lessee R. Meanwhile, lessee R pays, in advance, the entire remaining leasing charge of 355 [1075 - (30 x 24 months)] to lessor Q, whereby the lease transaction comes to an end.

Since lessor Q has already assigned the unrealized profit, which was 1000 at the beginning of said period, to lessee R at 1000, lessor Q has suffered no depreciation of the realized profit in the lease transaction, and the fee (70) received from lessee R has been an income. On the other hand, since lessee R has paid a total leasing charge of 1075 for the unrealized profit, which lessee R took over at 1000 at the beginning of said period, and has counted a depreciation of 100 [900 - 1000] in the realized profit by exercising the rights or fulfilling the obligations accompanying the product, lessee R has suffered a loss of 175 [1000 - 1075 - 100] on a net amount basis. Nevertheless, depending on how the lease transaction is treated in tax accounting, lessee R may enjoy a tax saving effect.

(10) Also, the present invention allows a new style of capital transaction through a cash flow lease targeting an unrealized loss of a capital transaction product.

As one example, suppose that capital transactor S is carrying an unrealized loss of capital transaction product s, and the appraisal value thereof is 1000. Capital transactor S is to exercise rights or fulfill obligations accompanying the product to cut a loss in the near future, and yet wishes to avoid a result such that a cash outflow caused by realization of the unrealized loss significantly affects his or her liquidity position. On the other hand, suppose that capital transactor T forecasts that the market value of capital transaction product s will turn around and rise in the future, and thus wishes to create anew the position of the product while finding that it is nearly impossible to create even a similar position due to the current market level or market liquidity. In this case, the present invention enables both parties to realize their desired economic effects by allowing capital transactor T to take over the position of capital transaction product s, thereby assuming the unrealized loss that capital transactor S is carrying.

As a result of the lease transaction, first, capital transactor T (hereinafter referred to as 'lessor T') takes over the rights accompanying capital transaction product s or assumes the obligations accompanying the product, thereby subrogating the cash outflow produced by the realization of the unrealized loss that capital transactor S (hereinafter referred to as 'lessee S') is carrying. On the other hand, lessee S assigns the rights accompanying the product or passes on the obligations accompanying the product, thereby being released from the cash outflow produced by the realization of the unrealized loss that he or she is carrying. That is, lessee S pays lessor T a leasing charge on a monthly basis during the lease period as compensation for the usufruct over the replenished cash flow targeting the unrealized loss. Additionally, at the stage where the lease transaction comes into effect, it is deemed that lessee S has passed on the unrealized loss of capital transaction product q to lessor T at the appraisal value of that point in time.

For example, the leasing charge may be determined by adding things like fees charged by lessor T to lessee S, to the amount (1000) of the unrealized loss passed on by lessee S to lessor T, and then by dividing the total amount by the number of months in the lease period. Additionally, the fees may also include lessor T's cost for funding conducted in the market to raise the amount of the replenishing cash flow.

Suppose that the lease transaction in said example has a three-year period, and that the fee charged by lessor T to lessee S is 70. Then, it can be approximately calculated that the total amount of the leasing charge is 1070 [1000 + 70], and thus the monthly leasing charge is 30 [1070 /(12 months x 3 years)].

That is, with a monthly payment of 30, lessee E can substantially decelerate the realization of an unrealized loss of 1000, thereby lessening the impact on his or her liquidity position. On the other hand, lessor T substantially subrogates an unrealized loss of 1000 by replenishing a cash flow when the loss is realized, and yet lessor T can earn a fee of 70 by receiving a leasing charge of 1070 in total from lessee S, and aim for a future decrease in the unrealized loss, and even a turnaround to an unrealized profit.

For example, suppose that, when 2 years have passed since the opening of the lease transaction, the unrealized loss of capital transaction product s has decreased to 800 in line with the market forecast of lessor T. If, at this point in time, lessor T exercises the rights taken over from lessee S or fulfills the obligations assumed from lessee S regarding the product, then since the person that executes the act of dissolution of the position in the market is the nominal carrier of the position, i.e. lessee S, lessee S bears the cash outflow of 800 corresponding to the amount of the realized loss, and yet the entire amount is replenished by the substantial bearer of the realized loss, i.e. lessor T. Meanwhile, lessee S pays, in advance, to lessor T the entire remaining leasing charge of 350 [1070 - (30 x 24 months)], or alternatively continues to pay, as before, to lessor T the remaining leasing charge on a monthly basis over the remaining period of the lease transaction, whereby in either case the lease transaction comes to an end.

Since lessor T has earned a profit of 200 because the amount of the replenishing cash flow for the unrealized loss assumed from lessee S at 1000 has ended with 800, and since lessor T has counted as an income the fee of 70 from lessee S through the receipt of the leasing charge, lessor T has acquired a profit of 270 [200 + 70] on a net amount basis. On the other hand, although lessee S has paid a total leasing charge of 1070 for the unrealized loss of 1000 passed on to lessor T, lessee S has substantially decelerated the realization of the loss, thereby lessening the impact on his or her liquidity position. Also, depending on how the lease transaction is treated in tax accounting, lessee S may enjoy a tax saving effect.

For example, suppose that, when 2 years have passed since the opening of the lease transaction, the unrealized loss of capital transaction product s has increased to 1100 contrary to the market forecast of lessor T. If, at this point in time, lessor T exercises the rights taken over from lessee S or fulfills the obligations assumed from lessee S to cut a loss regarding the product, then since the person that executes the act of dissolution of the position in the market is the nominal carrier of the position, i.e. lessee S, lessee S bears the cash outflow of 1100 corresponding to the amount of the realized loss, and yet the entire amount is replenished by the substantial bearer of the realized loss, i.e. lessor T. Meanwhile, lessee S pays, in advance, to lessor T the entire remaining leasing charge of 350 [1070 - (30 x 24 months)], or alternatively continues to pay, as before, to lessor T the remaining leasing charge on a monthly basis over the remaining period of the lease transaction, whereby in either case the lease transaction comes to an end.

Although lessor T has counted a loss of 100 because the amount of the replenishing cash flow for the unrealized loss assumed from lessee S at 1000 has finally increased to 1100, since lessor T has earned as an income the fee of 70 from lessee S through the receipt of the leasing charge, lessor T has suffered a loss of 30 [-100 + 70] on a net amount basis. On the other hand, although lessee S has paid a total leasing charge of 1070 for the unrealized loss of 1000 passed on to lessor T, lessee S has substantially decelerated the realization of the loss, thereby lessening the impact on his or her liquidity position. Also, depending on how the lease transaction is treated in tax accounting, lessee S may enjoy a tax saving effect.

2. Next, the present invention makes it possible to save a brokerage fee, a contract or cancellation fee, a redemption fee, an underwriting and selling fee, an intermediation fee and/or other expenses payable to an intermediary or others for creating or dissolving a position of an asset management product, a capital raising product and/or a capital transaction product. Additionally, as used in this context, the term 'intermediary' shall mean a conventional financial institution and/or a conventional realtor in a transaction of an individual, a corporation and/or the like, as well as a broker in a transaction between financial institutions, between realtors and/or between the like. Also, the above-described fees and/or expenses shall include a fee equivalent and/or an expense equivalent that the intermediary substantially collects through its proprietary transaction with an asset manager, a capital raiser and/or a capital transactor as its counterparty.

If an asset manager acquires an asset management product, conventionally, he or she has had to pay a buying fee, a contract fee, a brokerage and intermediation fee and/or other expenses to an intermediary and/or the like. Through a cash flow lease and/or a non-return style of direct lease of an asset management product, a lessee in accordance with the present invention can substantially acquire the product, and thus can attain a higher yield on investment by keeping the fee contained in the leasing charge, which is paid to the lessor, lower than said fees or expenses.

If an asset manager disposes of an asset management product that he or she is holding, conventionally, the asset manager has had to pay a selling fee, a cancellation fee, a redemption fee, a brokerage and intermediation fee and/or other expenses to an intermediary and/or the like. Through a cash flow lease and/or a non-return style of direct lease of an asset management product, a lessor in accordance with the present invention can substantially dispose of the product without bearing said fees or expenses while instead earning a fee contained in the leasing charge collected from a lessee, and thus the lessor can attain a higher yield on investment.

If an asset manager securitizes a loan asset, real estate or the like that he or she is holding, it is a general methodology that the asset manager assigns the asset to a special purpose vehicle directly or after turning it into beneficiary rights in trust and then the SPV issues asset backed securities to investors. With this mechanism, a trust fee, an underwriting and selling fee, a brokerage and intermediation fee, a cost or fee for credit enhancement or liquidity enhancement, an administration and collection fee of an assigned asset, and/or other expenses accrue, which causes a reduction in the value of the assigned asset. Through a cash flow lease and/or a non-return style of direct lease of an asset management product, a lessor in accordance with the present invention can substantially dispose of the held asset without bearing said fees or expenses while instead earning a fee contained in the leasing charge collected from a lessee, and thus the lessor can attain a higher yield on investment.

If a capital raiser repays early, redeems prematurely, cancels early or retires by repurchase a capital raising product that he or she is servicing, conventionally, the capital raiser has had to pay a redemption fee, a cancellation fee, a buying fee and/or other expenses to an intermediary and/or the like. Through a redemption-acceleration style of cash flow lease of a capital raising product, a lessee in accordance with the present invention can substantially redeem the product, and thus can attain a lower funding cost by keeping the fee contained in the leasing charge, which is paid to the lessor in a lump sum, lower than said fees or expenses.

If a capital raiser performs capital raising, conventionally, he or she has had to pay a contract fee, an underwriting and selling fee and/or other expenses to an intermediary and/or the like. Through a redemption-acceleration style of cash flow lease of a capital raising product, a lessor in accordance with the present invention can substantially perform capital raising by collecting the leasing charge in a lump sum from a lessee, and can further attain a lower funding cost, by receiving a fee contained in the leasing charge instead of bearing said fees or expenses.

If a capital transactor creates a position of a capital transaction product, conventionally, he or she has had to pay a contract fee, a brokerage and intermediation fee and/or other expenses to an intermediary and/or the like. Through a cash flow lease of a capital transaction product, a lessee in accordance with the present invention can substantially create the position, and thus can attain a more transaction profit or more advantageous contract conditions by keeping the fee contained in the leasing charge, which is paid to the lessor, lower than said fees or expenses.

If a capital transactor dissolves a position of a capital transaction product that he or she is carrying, conventionally, he or she has had to pay a cancellation fee, a brokerage and intermediation fee and/or other expenses to an intermediary and/or the like. Through a cash flow lease of a capital transaction product, a lessor in accordance with the present invention can substantially dissolve the position without bearing said fees or expenses while instead receiving a fee contained in the leasing charge collected from a lessee, and thus the lessor can attain a more transaction profit or more advantageous contract conditions.

3. Also, the present invention provides novel secondary markets for illiquid products. That is, liquidity can be substantially improved regarding positions of asset management products, capital raising products and/or capital transaction products.

Among asset management products, bonds issued by corporations, equities issued by small and medium-sized companies, private equities, loan assets, land, buildings and the like generally have low liquidity. Therefore, even if it is attempted to acquire and subsequently dispose of them, their market values are controlled low, and thus there has been a strong tendency for forced disposal to decrease their yields on investment. Also, in primary offerings and secondary offerings of asset management products arranged by intermediaries, there has been a strong tendency for the intermediaries to be saddled with inventory, for example the case in which the offered products have been tightly priced, and the case in which the markets have plummeted after the offered products were underwritten and bought by the intermediaries. In the cash flow leases and the direct leases of the non-return style in accordance with the present invention, asset managers that could conventionally not be acquirers of said products due to their low on-hand-liquidities, can newly participate in the markets. Also in the leases, there is wider choice in means of disposing of asset management products, and thus disposers, as lessors, can substantially dispose of said products without lowering their yields on investment.

Basically, capital raising products are not equipped with liquidity except for those containing an early repayment clause or a premature redemption clause, and thus there has been a strong tendency that forced dissolution of a position increases a funding cost. In the cash flow leases of the redemption-acceleration style in accordance with the present invention, capital raising products substantially obtain liquidity, and thus capital raisers, as lessees, can substantially dissolve positions of the products without increasing their funding costs.

Basically, capital transaction products are not equipped with liquidity except for some foreign exchange products, futures products and futures option products. Regarding capital transaction products related to non-key currencies, various forward products, various over-the-counter option products, various swap products, various hybrid products and the like, there has been a strong tendency that forced dissolution of a position decreases a transaction profit or disadvantages cancellation conditions. In the cash flow leases utilizing unrealized profits in accordance with the present invention, capital transaction products substantially obtain liquidity, and thus capital transactors, as lessors, can dissolve positions of the products without decreasing their transaction profits or disadvantaging their cancellation conditions.

Furthermore, in the case in which a holder that is an asset manager is to lapse an investment vehicle such as a specified money trust, a designated fund trust, a managed securities trust, an equity in an investment subsidiary, or a fund-type privately placed bond due to changes in its management strategy, asset management policy or the like, the conventional approach for the holder has been to liquidate the entire portfolio into cash or to receive the actual constituents of the portfolio, and the choice of assigning the investment vehicle to another person has not been considered from the time the vehicle is established. In the present invention, the holder can perform a cash flow lease or a non-return style of direct lease of the investment vehicle with another asset manager as its counterparty, and thus can provide substantial liquidity for the vehicle.

Compared to the case in which liquidation into cash is planned, said lease transaction enables the holder, who is the lessor, to save various fees payable to an intermediary or others when the constituent products of the portfolio are disposed of, save other expenses, and instead receive a fee from the lessee. Thus, the holder can eventually attain a higher yield on investment. On the other hand, the lessee can economically establish a portfolio by keeping the fee, which is payable to the holder, lower than expenses required to establish the portfolio from a cash position. Also, the lessee can save the time, through the lease transaction, that would have conventionally been spent on the establishment, thereby reducing market risks. Additionally, after the lease transaction comes into effect, the management of the portfolio in the investment vehicle may be transferred from the lessor or an investment management institution appointed by the lessor, to the lessee or an investment management institution to be appointed by the lessee.

4. Moreover, the present invention allows new access to positions that financial institutions such as banks, securities companies and/or the like are carrying. That is, as a matter of regulation or a matter of commercial custom, there has been limited opportunities for corporations and retail investors to participate in: asset management products such as loan assets, most of which are held by financial institutions; other asset management products such as call loans, which are held only in the inter-financial institution markets; and capital transaction products such as foreign exchange products, forward products and swap products, whose transaction volumes in the inter-financial institution markets form the majority of the whole markets. In the present invention, however, if the cash flow leases of asset management products or the cash flow leases of capital transaction products utilizing their unrealized profits are performed between corporations or retail investors (as lessees) and financial institutions (as lessors), the corporations or retail investors can substantially create the positions of the products, their access to which has been limited, and can pursue higher yields on investment, more transaction profits, or more advantageous contract conditions.

5. Besides, lease transactions of asset management products, capital raising products and/or capital transaction products in accordance with the present invention improve certainty, transparency, immediacy, economy and efficiency of transactions by the following provided characteristics:
(1) Some products from among capital transaction products that are traded over-the-counter and bonds are already transacted domestically and abroad 24 hours a day, while some products from among capital transaction products that are listed and equities are gradually realizing transactions beyond the confines of national borders and/or session hours thanks to the development of information technology and the alliances and mergers of exchanges in various countries. The present invention keeps pace with this worldwide trend and makes it possible to conclude lease transactions of asset management products, capital raising products and/or capital transaction products domestically and abroad 24 hours a day, thereby providing immediacy for arbitrage transactions with various over-the-counter products and various listed products.
(2) Since the present invention provides, during the process until signing of a lease contract, an appraiser that does not have conflicts of interest with a lessor or lessee and performs due diligence of a concluded lease product and appraisal of a concluded lease value, it can be confirmed, for example, that an appraisal value of a position exhibited or bid by a lessor or lessee is considered fair, and that a concluded lease product does not contain a legal, ethical, economic, physical or environmental problem, whereby the transparency of the transaction itself increases.
(3) Various settlements and administrations arising from the completion of a conventional financial transaction and/or a conventional quasi-financial transaction, through their historical circumstances, use different systems according to the type of product or the specific transaction market and thus it is hard to unite the systems, which are not appropriate for customers who desire to transact various kinds of products. Accordingly, with a view to facilitating an arbitrage transaction with a conventional financial and/or quasi-financial instrument, the present invention has concentrated the settlement and administration functions after the conclusion of a lease transaction, such as transaction confirmation, preparation of a contract, assignment of a contract, payment and receipt of a cash flow, delivery and return of an actual, payment and receipt of a leasing charge, provision of tools for risk management or cash flow management, inspection of legal or regulatory compliance, credit enhancement, preservation and recovery of credits, and/or the like.
(4) In the present invention, there is not only a case in which one lessor is matched to one lessee, but also a case in which one lessor is matched to a plurality of lessees, a case in which one lessee is matched to a plurality of lessors, and a case in which a plurality of lessors are matched to a plurality of lessees. Thus, certainty, immediacy and efficiency of the conclusion of a lease transaction increase.
(5) In the present invention, there is a case in which a tie-in of a plurality of asset management products is a lease item, a case in which a tie-in of a plurality of capital raising products is a lease item, and/or a case in which a tie-in of a plurality of capital transaction products is a lease item. Thus, efficiency, economy and immediacy of a lease transaction increase.
6. Next, in the present invention, the efficiency of asset/liability management improves. That is, the invention makes it possible to substantially reestablish the composition of assets, liabilities and capital on a balance sheet by combining variously the cash flow lease or the direct lease of asset management products, the cash flow lease of capital raising products, and the cash flow lease of capital transaction products. The following combinations exemplify lease transactions for the asset/liability management in accordance with the invention:
   (a) Cash flow lease by tie-in of a whole asset management product, and an unrealized profit or loss of a capital transaction product;
   (b) Cash flow lease by tie-in of a discount value or premium value of an asset management product, and an unrealized profit or loss of a capital transaction product;
   (c) Lease transaction by tie-in of an actual of an asset management product, and an unrealized profit or loss of a capital transaction product;
   (d) Cash flow lease by tie-in of a capital raising product, and an unrealized profit or loss of a capital transaction product;
   (e) Cash flow lease by tie-in of a capital raising product and a whole asset management product;
   (f) Cash flow lease by tie-in of a capital raising product, and a discount value or premium value of an asset management product;
   (g) Lease transaction by tie-in of a capital raising product, and an actual of an asset management product;
   (h) Cash flow lease by tie-in of a whole asset management product, an unrealized profit or loss of a capital transaction product, and a capital raising product;
   (i) Cash flow lease by tie-in of a discount value or premium value of an asset management product, an unrealized profit or loss of a capital transaction product, and a capital raising product; and
   (j) Lease transaction by tie-in of an actual of an asset management product, an unrealized profit or loss of a capital transaction product, and a capital raising product.
7. Also, the present invention enables fixing of gains through various sublease transactions. That is, in the invention, if a lessee in an existing lease transaction succeeds in subletting to another person the lease transaction product that the lessee has already hired, and then in laying on the sublessee a leasing charge higher than that the lessee is paying to his or her lessor, the lessee can fix the sublease gain, i.e. the difference between the primary leasing charge in the primary lease transaction, and the subleasing charge in the sublease transaction.

(1) First, the present invention allows a sublease transaction regarding the cash flow lease of an asset management product.

As one example, suppose that a cash flow lease with a three-year period whose object is asset management product u that asset manager U (hereinafter referred to as 'lessor U') is holding, is already in effect between lessor U and asset manager V (hereinafter referred to as 'lessee V'); and that lessee V is paying a monthly leasing charge of 30 to lessor U. When one year has passed since the opening of the lease transaction, cash flow leases with a two-year period whose object is asset management product u have indicated a market level of 45 as their monthly leasing charges, due to market factors such as changes in the balance of supply and demand. Thus, lessee V has concluded with asset manager W a sublease transaction whose last date is set to be the same as the last date of the primary lease transaction. Therein, lessee V (hereinafter referred to as 'sublessor V') assigns to asset manager W (hereinafter referred to as 'sublessee W') rights such as the jus disponendi of asset management product u and the right to receive the cash flow arising from the product during the lease period, which sublessor V took over from lessor U. Meanwhile, sublessee W pays sublessor V a monthly subleasing charge of 45 as compensation for these usufructs over the product.

In this way, although sublessor V has lost said rights accompanying asset management product u, sublessor V continues to pay the primary leasing charge (30) to lessor U while receiving the higher subleasing charge (45) from sublessee W over the remaining period of the primary lease transaction (i.e. the sublease period), and thus sublessor V can fix a sublease gain of 360 [(45 - 30) x 24 months] in total by the end of the period.

For example, if sublessee W exercises the jus disponendi of asset management product u during said period, then since sublessor V is the nominal holder of the product in the sublease contract while lessor U is the nominal holder thereof in the primary lease contract, i.e. the senior contract, it is finally lessor U that actually executes the act of disposal in the market on behalf of sublessee W. Therefore, lessor U receives the disposal amount, and then pays the amount via sublessor V to the substantial owner of asset management product u, i.e. sublessee W. Meanwhile, sublessee W pays, in advance, the entire remaining subleasing charge to sublessor V, and then sublessor V pays to lessor U part of the received subleasing charge as the remaining primary leasing charge, whereby both the primary lease transaction and the sublease transaction come to an end. Additionally, sublessee W can earn a similar sublease gain by performing a similar sublease transaction with another asset manager.

(2) Next, the present invention allows a sublease transaction regarding the cash flow lease of an asset management product utilizing its discount value.

As one example, suppose that a cash flow lease with a three-year period whose object is the discount value of asset management product x that asset manager X (hereinafter referred to as 'lessor X') is holding, is already in effect between lessor X and asset manager Y (hereinafter referred to as 'lessee Y'); and that lessee Y is paying a monthly leasing charge of 30 to lessor X after having paid an amount corresponding to the decreased appraisal value at the beginning of the lease period. When one year has passed since the opening of the lease transaction, cash flow leases with a two-year period whose object is the discount value of asset management product x have indicated a market level of 45 as their monthly leasing charges, due to market factors such as changes in the balance of supply and demand. Thus, lessee Y has concluded with asset manager Z a sublease transaction whose last date is set to be the same as the last date of the primary lease transaction. Therein, lessee Y (hereinafter referred to as 'sublessor Y') assigns to asset manager Z (hereinafter referred to as 'sublessee Z') rights such as the jus disponendi of asset management product x and the right to receive the cash flow arising from the product during the lease period, which sublessor Y took over from lessor X. Meanwhile, sublessee Z pays sublessor Y an amount corresponding to the decreased appraisal value as well as a monthly subleasing charge of 45 as compensation for these usufructs over the product.

In this way, although sublessor Y has lost said rights accompanying asset management product x, sublessor Y continues to pay the primary leasing charge (30) to lessor X while receiving the higher subleasing charge (45) from sublessee Z over the remaining period of the primary lease transaction (i.e. the sublease period), and thus sublessor Y can fix a sublease gain of 360 [(45 - 30) x 24 months] in total by the end of the period. Also, sublessor Y may fix a gain from a difference also regarding the amount corresponding to the decreased appraisal value.

For example, if sublessee Z exercises the jus disponendi of asset management product x during said period, then since sublessor Y is the nominal holder of the product in the sublease contract while lessor X is the nominal holder thereof in the primary lease contract, i.e. the senior contract, it is finally lessor X that actually executes the act of disposal in the market on behalf of sublessee Z. Therefore, lessor X receives the disposal amount, and then pays the amount via sublessor Y to the substantial owner of asset management product x, i.e. sublessee Z. Meanwhile, sublessee Z pays, in advance, the entire remaining subleasing charge to sublessor Y, and then sublessor Y pays to lessor X part of the received subleasing charge as the remaining primary leasing charge, whereby both the primary lease transaction and the sublease transaction come to an end. Additionally, sublessee Z can earn a similar sublease gain by performing a similar sublease transaction with another asset manager.

(3) Also, the present invention allows a sublease transaction regarding the cash flow lease of an asset management product targeting its premium value.

As one example, suppose that a cash flow lease with a three-year period whose object is the premium value of asset management product [a] that asset manager [A] (hereinafter referred to as 'lessee [A]') is holding, is already in effect between lessee [A] and asset manager [B] (hereinafter referred to as 'lessor [B]'). Further suppose that, after lessor [B] has replenished a cash flow to the premium value by paying lessee [A] an amount corresponding to the increased appraisal value at the beginning of the lease period, lessee [A] is paying a monthly leasing charge of 30 to lessor [B]. When one year has passed since the opening of the lease transaction, cash flow leases with a two-year period whose object is the premium value of asset management product [c] that asset manage [C] is holding, have indicated a market level of 45 as their monthly leasing charges. Thus, lessee [A] has concluded with asset manager [C] a sublease transaction whose last date is set to be the same as the last date of the primary lease transaction. Therein, lessee [A] (hereinafter referred to as 'sublessor [A]') pays asset manager [C] (hereinafter referred to as 'sublessee [C]') an amount corresponding to the increased appraisal value of asset management product [c], thereby replenishing a cash flow to the premium value, and taking over from sublessee [C] rights such as the jus disponendi of the product and the right to receive the fruits arising from the product during the sublease period. That is, sublessor [A] sublets to sublessee [C] the cash flow replenished by lessor [B], while sublessee [C] pays sublessor [A] a monthly subleasing charge of 45 as compensation for the usufruct over the replenished cash flow.

In this way, although sublessor [A] has broken his on-hand-liquidity corresponding to the amount of the increased appraisal value of asset management product [c], sublessor [A] continues to pay the primary leasing charge (30) to lessor [B] while receiving the higher subleasing charge (45) from sublessee [C] over the remaining period of the primary lease transaction (i.e. the sublease period), and thus sublessor [A] can fix a sublease gain of 360 [(45 - 30) x 24 months] in total by the end of the period. Also, sublessor [A] may fix a gain from a difference also regarding the amount corresponding to the increased appraisal value.

For example, if sublessor [A] exercises the jus disponendi of asset management product [c] during said period, then since the person that executes the act of disposal in the market is sublessee [C] in the sublease contract, sublessee [C] receives the disposal amount and then pays the entire amount to the substantial owner of asset management product [c], i.e. sublessor [A]. Moreover, sublessee [C] pays, in advance, to sublessor [A] the entire remaining subleasing charge, or alternatively continues to pay, as before, to sublessor [A] the remaining subleasing charge on a monthly basis over the remaining period of the sublease transaction, whereby in either case the sublease transaction comes to an end.

On the other hand, if lessor [B] exercises the jus disponendi of asset management product [a] during said period, then since the person that executes the act of disposal in the market is sublessor [A] in the primary lease contract, sublessor [A] receives the disposal amount and then pays the entire amount to the substantial owner of asset management product [a], i.e. lessor [B]. Moreover, sublessor [A] pays, in advance, to lessor [B] the entire remaining primary leasing charge, or alternatively continues to pay, as before, to lessor [B] the remaining primary leasing charge on a monthly basis over the remaining period of the primary lease transaction, whereby in either case the primary lease transaction comes to an end. Additionally, sublessee [C] can earn a similar sublease gain by performing a similar sublease transaction with another asset manager.

(4) Furthermore, the present invention allows a sublease transaction regarding the direct lease of an asset management product.

As one example, suppose that a return-style of direct lease with a three-year period whose object is asset management product [d] that asset manager [D] (hereinafter referred to as 'lessor [D]') is holding, is already in effect between lessor [D] and asset manager [E] (hereinafter referred to as 'lessee [E]'); and that lessee [E] has taken over the actual of the product while paying a monthly leasing charge of 3 to lessor [D]. When one year has passed since the opening of the lease transaction, direct leases of the return style with a two-year period whose object is asset management product [d] have indicated a market level of 5 as their monthly leasing charges, due to market factors such as changes in the balance of supply and demand. Thus, lessee [E] has concluded with asset manager [F] a sublease transaction whose last date is set to be the same as the last date of the primary lease transaction. Therein, lessee [E] (hereinafter referred to as 'sublessor [E]') assigns to asset manager [F] (hereinafter referred to as 'sublessee [F]') the actual of asset management product [d], which sublessor [E] took over from lessor [D]. Meanwhile, sublessee [F] pays sublessor [E] a monthly subleasing charge of 5 as compensation for the usufruct over the actual.

In this way, although sublessor [E] no longer holds the actual of asset management product [d] on hand, sublessor [E] continues to pay the primary leasing charge (3) to lessor [D] while receiving the higher subleasing charge (5) from sublessee [F] over the remaining period of the primary lease transaction (i.e. the sublease period), and thus sublessor [E] can earn a monthly sublease gain of 2 [5 - 3] until the product is returned. Additionally, the right to receive the fruits arising from asset management product [d] during said period is not transferred in the sublease transaction as well, and thus the fruits received by sublessee [F] are paid via sublessor [E] to the actual owner of the product, i.e. lessor [D].

For example, if sublessee [F] returns asset management product [d] to sublessor [E] during said period, the sublease transaction comes to an end, while if sublessor [E] returns, at that time, to lessor [D] the product returned from sublessee [F], the primary lease transaction as well comes to an end. However, after asset management product [d] has been returned from sublessee [F], if sublessor [E] wishes to reutilize the product with, for example the aim of earning a capital gain through short disposal of the product and the subsequent reacquisition thereof, sublessor [E] retains the product in the same way as before the sublease transaction came into effect. Additionally, at the stage before sublessee [F] returns asset management product [d] to sublessor [E], sublessee [F] can earn a similar sublease gain by performing a similar sublease transaction with another asset manager. On the other hand, at the stage after sublessee [F] has returned asset management product [d] to sublessor [E], sublessor [E] can earn a similar sublease gain each time by repeating a similar sublease transaction with sublessee [F] or another asset manager.

(5) Moreover, the present invention allows a sublease transaction regarding the cash flow lease of a capital raising product.

As one example, suppose that a redemption-acceleration style of cash flow lease with a three-year period whose object is capital raising product [g] that capital raiser [G] (hereinafter referred to as 'lessee [G]') is servicing, is already in effect between lessee [G] and asset manager [H] (hereinafter referred to as 'lessor [H]'). Further suppose that, lessee [G] has paid lessor [H] a lump sum leasing charge of 1000 at the beginning of the lease period, while lessor [H] is paying the cash flow for the fruits and principal to the asset manager or managers holding the product as an object of asset management. When one year has passed since the opening of the lease transaction, cash flow leases with a two-year period whose object is capital raising product [i] that capital raiser [I] is servicing, have indicated a market level of 1300 as their lump sum leasing charges. Thus, lessee [G] has concluded with capital raiser [I] a sublease transaction whose last date is set to be the same as the last date of the primary lease transaction. Therein, lessee [G] (hereinafter referred to as 'sublessor [G]') receives the lump sum subleasing charge (1300) from capital raiser [I] (hereinafter referred to as 'sublessee [I]'), thereby assuming the obligation to pay, over the sublease period, the fruits and principal to the asset manager or managers holding capital raising product [i] as an object of asset management. That is, sublessee [I] pays sublessor [G] the lump sum subleasing charge as compensation for the usufruct over the replenishing cash flow.

In this way, although sublessor [G] has assumed said obligation accompanying capital raising product [i], sublessor [G]. already paid lessor [H] the primary leasing charge (1000) in a lump sum while receiving from sublessee [I] the higher subleasing charge (1300) in a lump sum, and thus sublessor [G] has been able to fix a sublease gain of 300 [1300 - 1000]. Also, sublessor [G] may fix a gain from the difference between the replenishing cash flow received from lessor [H] over the remaining period of the primary lease transaction (i.e. the sublease period), and the replenishing cash flow paid to sublessee [I] over the same period. Additionally, sublessee [I] can earn a similar sublease gain by performing a similar sublease transaction with another capital raiser.

(6) Besides, the present invention allows a sublease transaction regarding the cash flow lease of a capital transaction product utilizing its unrealized profit.

As one example, suppose that a cash flow lease with a three-year period whose object is the unrealized profit of capital transaction product [j] that capital transactor [J] (hereinafter referred to as 'lessor [J]') is carrying, is already in effect between lessor [J] and capital transactor [K] (hereinafter referred to as 'lessee [K]'); and that lessee [K] is paying a monthly leasing charge of 30 to lessor [J]. When one year has passed since the opening of the lease transaction, cash flow leases with a two-year period whose object is the unrealized profit of capital transaction product [j] have indicated a market level of 45 as their monthly leasing charges, due to market factors such as changes in the balance of supply and demand. Thus, lessee [K] has concluded with capital transactor [L] a sublease transaction whose last date is set to be the same as the last date of the primary lease transaction. Therein, lessee [K] (hereinafter referred to as 'sublessor [K]') assigns to capital transactor [L] (hereinafter referred to as 'sublessee [L]') the rights taken over regarding capital transaction product [j], or passes on to sublessee [L] the obligations assumed regarding the product, thereby assigning the unrealized profit of capital transaction product [j] to sublessee [L]. Meanwhile, sublessee [L] pays sublessor [K] a monthly subleasing charge of 45 as compensation for the usufruct over the unrealized profit.

In this way, although sublessor [K] has lost the unrealized profit of capital transaction product [j], sublessor [K] continues to pay the primary leasing charge (30) to lessor [J] while receiving the higher subleasing charge (45) from sublessee [L] over the remaining period of the primary lease transaction (i.e. the sublease period), and thus sublessor [K] can fix a sublease gain of 360 [(45 - 30) x 24 months] in total by the end of the period.

For example, if sublessee [L] exercises the rights or fulfills the obligations regarding capital transaction product [j] during said period, then since sublessor [K] is the nominal carrier of the position of the product in the sublease contract while lessor [J] is the nominal carrier thereof in the primary lease contract, i.e. the senior contract, it is finally lessor [J] that actually exercises the rights or fulfills the obligations in the market on behalf of sublessee [L]. Therefore, lessor [J] counts the realized profit, and then pays the amount via sublessor [K] to the substantial beneficiary of the realized profit, i.e. sublessee [L]. Meanwhile, sublessee [L] pays, in advance, the entire remaining subleasing charge to sublessor [K], and then sublessor [K] pays to lessor [J] part of the received subleasing charge as the remaining primary leasing charge, whereby both the primary lease transaction and the sublease transaction come to an end. Additionally, sublessee [L] can earn a similar sublease gain by performing a similar sublease transaction with another capital transactor.

(7) Next, the present invention allows a sublease transaction regarding the cash flow lease of a capital transaction product targeting its unrealized loss.

As one example, suppose that a cash flow lease with a three-year period whose object is the unrealized loss of capital transaction product [m] that capital transactor [M] (hereinafter referred to as 'lessee [M]') is carrying, is already in effect between lessee [M] and capital transactor [N] (hereinafter referred to as 'lessor [N]'); and that lessee [M] is paying a monthly leasing charge of 30 to lessor [N]. When one year has passed since the opening of the lease transaction, cash flow leases with a two-year period whose object is the unrealized loss of capital transaction product [o] that capital transactor [O] is carrying, have indicated a market level of 45 as their monthly leasing charges.

Thus, lessee [M] has concluded with capital transactor [O] a sublease transaction whose last date is set to be the same as the last date of the primary lease transaction. Therein, lessee [M] (hereinafter referred to as 'sublessor [M]') takes over the rights accompanying capital transaction product [o] or assumes the obligations accompanying the product, thereby subrogating the cash outflow produced by the realization of the unrealized loss, which capital transactor [O] (hereinafter referred to as 'sublessee [O]') is carrying. That is, sublessor [M] sublets to sublessee [O] the cash flow replenished by lessor [N], while sublessee [O] pays sublessor [M] a monthly subleasing charge of 45 as compensation for the usufruct over the replenished cash flow.

In this way, sublessor [M] continues to pay the primary leasing charge (30) to lessor [N] while receiving the higher subleasing charge (45) from sublessee [O] over the remaining period of the primary lease transaction (i.e. the sublease period), and thus sublessor [M] can fix a sublease gain of 360 [(45 - 30) x 24 months] in total by the end of the period.

For example, if sublessor [M] exercises the rights or fulfills the obligations regarding capital transaction product [o] during said period, then since the person that executes the act of dissolution of the position in the market is the nominal carrier of the position in the sublease contract, i.e. sublessee [O], sublessee [O] bears the cash outflow corresponding to the amount of the realized loss, and yet the entire amount is replenished by the substantial bearer of the realized loss, i.e. sublessor [M]. Meanwhile, sublessee [O] pays, in advance, to sublessor [M] the entire remaining subleasing charge, or alternatively continues to pay, as before, to sublessor [M] the remaining subleasing charge on a monthly basis over the remaining period of the sublease transaction, whereby in either case the sublease transaction comes to an end.

On the other hand, if lessor [N] exercises the rights or fulfills the obligations regarding capital transaction product [m] during said period, then since the person that executes the act of dissolution of the position in the market is the nominal carrier of the position in the primary lease contract, i.e. sublessor [M], sublessor [M] bears the cash outflow corresponding to the amount of the realized loss, and yet the entire amount is replenished by the substantial bearer of the realized loss, i.e. lessor [N]. Meanwhile, sublessor [M] pays, in advance, to lessor [N] the entire remaining primary leasing charge, or alternatively continues to pay, as before, to lessor [N] the remaining primary leasing charge on a monthly basis over the remaining period of the primary lease transaction, whereby in either case the primary lease transaction comes to an end. Additionally, sublessor [M] may fix a gain from a difference also regarding the amount of the replenishing cash flow. Also, sublessee [O] can earn a similar sublease gain by performing a similar sublease transaction with another capital transactor.

Incidentally, viewed from the perspective of the singularity or plurality of the object product, sublease transactions in accordance with the present invention can be categorized as follows:
(a) Sublease transaction whose object is a single asset management product;
(b) Sublease transaction whose object is a single capital raising product;
(c) Sublease transaction whose object is a single capital transaction product;
(d) Sublease transaction whose object is a tie-in of asset management products;
(e) Sublease transaction whose object is a tie-in of capital raising products;
(f) Sublease transaction whose object is a tie-in of capital transaction products;
(g) Sublease transaction whose object is a tie-in of an asset management product and a capital transaction product;
(h) Sublease transaction whose object is a tie-in of a capital raising product and a capital transaction product;
(i) Sublease transaction whose object is a tie-in of a capital raising product and an asset management product; and
(j) Sublease transaction whose object is a tie-in of an asset management product, a capital raising product and a capital transaction product.

Thus far, the advantages that users of the present system can enjoy in the various lease transactions have been itemized and described along with the schemes of the transactions. However, the formulae used in the text for calculating leasing charges as well as profits and losses are basically based on simple interest, and yet the formulae may also be based on compound interest in actual transactions.

### Brief Description of Drawings

FIG. 1 is an embodiment in accordance with the present invention, illustrating cash flow leases of asset management products;
FIG. 2 is another embodiment in accordance with the invention, illustrating cash flow leases of asset management products;
FIG. 3 is another embodiment in accordance with the invention, illustrating cash flow leases of asset management products;
FIG. 4 is a diagram showing an embodiment of the flows of funds and the fee collection scheme in a cash flow lease of an asset management product;
FIG. 5 is another embodiment in accordance with the invention, illustrating cash flow leases of asset management products utilizing their discount values;
FIG. 6 is a diagram showing an embodiment of the flows of funds and the fee collection scheme in a cash flow lease of an asset management product utilizing its discount value;
FIG. 7 is another embodiment in accordance with the invention, illustrating cash flow leases of asset management products targeting their premium values;
FIG. 8 is a diagram showing an embodiment of the flows of funds and the fee collection scheme in a cash flow lease of an asset management product targeting its premium value;
FIG. 9 is another embodiment in accordance with the invention, illustrating direct leases of asset management products;
FIG. 10 is a diagram showing an embodiment of the flows of funds and the fee collection scheme in a direct lease of an asset management product;
FIG. 11 is another embodiment in accordance with the invention, illustrating various lease transactions by tie-in of asset management products;
FIG. 12 is another embodiment in accordance with the invention, illustrating various sublease transactions of asset management products;
FIG. 13 is another embodiment in accordance with the invention, illustrating cash flow leases of capital raising products;
FIG. 14 is a diagram showing an embodiment of the flows of funds and the fee collection scheme in a cash flow lease of a capital raising product;
FIG. 15 is another embodiment in accordance with the invention, illustrating cash flow leases of capital transaction products;
FIG. 16 is another embodiment in accordance with the invention, illustrating cash flow leases of capital transaction products;
FIG. 17 is a diagram showing an embodiment of the flows of funds and the fee collection scheme in a cash flow lease of a capital transaction product utilizing its unrealized profit;
FIG. 18 is a diagram showing an embodiment of the flows of funds and the fee collection scheme in a cash flow lease of a capital transaction product targeting its unrealized loss;
FIG. 19 is another embodiment in accordance with the invention, illustrating a cash flow lease by tie-in of capital raising products or capital transaction products;
FIG. 20 is another embodiment in accordance with the invention, illustrating a sublease transaction of a capital raising product or a capital transaction product;
FIG. 21 is another embodiment in accordance with the invention, illustrating cash flow leases by tie-in of asset management products and capital transaction products;
FIG. 22 is a diagram showing an embodiment of the flows of funds and the fee collection scheme in a cash flow lease by tie-in of an asset management product and a capital transaction product;
FIG. 23 is another embodiment in accordance with the invention, illustrating cash flow leases by tie-in of capital raising products and capital transaction products;
FIG. 24 is a diagram showing an embodiment of the flows of funds and the fee collection scheme in a cash flow lease by tie-in of a capital raising product and a capital transaction product;
FIG. 25 is another embodiment in accordance with the invention, illustrating cash flow leases by tie-in of capital raising products and asset management products;
FIG. 26 is a diagram showing an embodiment of the flows of funds and the fee collection scheme in a cash flow lease by tie-in of a capital raising product and an asset management product;
FIG. 27 is another embodiment in accordance with the invention, illustrating a cash flow lease by tie-in of an asset management product, a capital raising product and a capital transaction product;
FIG. 28 is a diagram showing an embodiment of the flows of funds and the fee collection scheme in a cash flow lease by tie-in of an asset management product, a capital raising product and a capital transaction product;
FIG. 29 is another embodiment in accordance with the invention, illustrating various lease transactions by a plurality of lessors and/or a plurality of lessees; and
FIG. 30 is a block diagram, showing another embodiment in accordance with the invention.

### Best Mode for Carrying Out the Invention

The present invention relates to a computer-readable storage medium storing a lease transaction program for financial and/or related instruments, and a lease transaction system for financial and/or related instruments. That is, lease transaction markets for financial instruments and/or quasi-financial instruments are thereby created via computer networks, and users can thereby conclude lease transactions between and/or among themselves.

As an embodiment of the present invention, the following will describe an example of an auction mode, in which a let demand and a hire demand are matched through the processes from exhibition to bidding and then successful bid making, whereby a lease transaction comes into effect However, the present invention resides in a storage medium storing a computer program, and a computer system for any transaction in which a whole or part of an asset management product, a capital raising product and/or a capital transaction product is substantially or actually borrowed and lent between parties, and then the borrower directly or indirectly pays the lender a fee or equivalent thereto. Thus, modes therefor and products to be objects thereof are respectively not limited to the mode described in the present embodiment or to the products exemplified by the present embodiment. Additionally, since a negotiation mode makes it easier to match a let demand and a hire demand, depending on the type and attribute of a desired lease product, an example of the negotiation mode will also be described afterwards.

First, the system operator entitles asset managers, capital raisers and/or capital transactors who desire to use the present service. Each of these users can, in the present system, execute exhibition; bidding; successful bid making; transaction confirmation; preparation and signing of a letter of intent; communication with an appraiser regarding due diligence of a lease transaction product and/or appraisal of a lease transaction value; preparation and signing of a lease contract; payment and receipt of a cash flow during a lease period; payment and receipt of a leasing charge as well as various service charges during the period; and/or the like.

Next, the operator establishes, on the screen displayed on client terminals, separate sections for various transaction styles as described below:

### (a) Section for cash flow leases of asset management products:

In this section, bidding is executed for exhibition of asset management products such as financial asset management products including loan assets, equities, bonds, trusts of money, deposit assets and/or the like, as well as real estate asset management products including land, buildings, compound real estate properties, real estate-backed securities, real estate investment trusts and/or the like, and then the cash flows of the products as well as the leasing charges are paid and received between exhibitors and successful bidders.

### (b) Section for cash flow leases of asset management products utilizing their discount values:

In this section, bidding is executed for exhibition of the above-described asset management products, and then the cash flows of the products as well as the leasing charges are paid and received between exhibitors and successful bidders.

### (c) Section for cash flow leases of asset management products targeting their premium values:

In this section, bidding is executed for exhibition of the above-described asset management products, and then the cash flows of the products as well as the leasing charges are paid and received between exhibitors and successful bidders.

### (d) Section for direct leases of asset management products:

In this section, bidding is executed for exhibition of the above-described asset management products, and then the actuals of the products are delivered and received between exhibitors and successful bidders, while the leasing charges are paid and received between the exhibitors and the successful bidders.

### (e) Section for cash flow leases of capital raising products:

In this section, bidding is executed for exhibition of capital raising products such as borrowed liabilities, equities, bonds, commercial papers, deposit liabilities and/or the like, and then the cash flows of the products as well as the leasing charges are paid and received between exhibitors and successful bidders.

### (f) Section for cash flow leases of capital transaction products utilizing their unrealized profits:

In this section, bidding is executed for exhibition of capital transaction products such as foreign exchange products, financial derivative products, real estate derivative products, commodity derivative products and/or the like, and then the cash flows of the products as well as the leasing charges are paid and received between exhibitors and successful bidders.

### (g) Section for cash flow leases of capital transaction products targeting their unrealized losses:

In this section, bidding is executed for exhibition of the above-described capital transaction products, and then the cash flows of the products as well as the leasing charges are paid and received between exhibitors and successful bidders.

### (h) Section for asset/liability management:

In this section, bidding is executed for exhibition of various combinations of asset management products, capital raising products and capital transaction products, and then the cash flows of the products and/or the actuals of the products are respectively paid and received and/or delivered and received between exhibitors and successful bidders, while the leasing charges are paid and received between the exhibitors and the successful bidders.

Prospective lease transactors in the present transaction markets comprise two types, i.e. exhibitors and bidders, either of which further comprise prospective lessors and prospective lessees. The exhibitor, in the present system, exhibits a product that it desires to lease, while the bidder participates in bidding after recognizing the information on the product and is called a successful bidder at the stage where the lease transaction comes into effect. Matches between the exhibitors and the bidders comprise, for example the following types, depending on the transaction style:
(a) A type in which, in a cash flow lease of an asset management product, a cash flow lease of an asset management product utilizing its discount value, a direct lease of an asset management product, or a cash flow lease of a capital transaction product utilizing its unrealized profit, a prospective lessor that is already carrying a position is an exhibitor, that is, a let demand is an exhibition item, while a prospective lessee that desires the usufruct over said position is a bidder;
(b) A type in which, in a cash flow lease of an asset management product, a cash flow lease of an asset management product utilizing its discount value, a direct lease of an asset management product, or a cash flow lease of a capital transaction product utilizing its unrealized profit, a prospective lessee that desires the usufruct over a specific position is an exhibitor, that is, a hire demand is an exhibition item, while a prospective lessor that is already carrying said position is a bidder;
(c) A type in which, in a cash flow lease of a capital raising product, a cash flow lease of an asset management product targeting its premium value, or a cash flow lease of a capital transaction product targeting its unrealized loss, a prospective lessee that is already carrying a position is an exhibitor, that is, a hire demand is an exhibition item, while a prospective lessor that desires to replenish a cash flow targeting said position is a bidder; and
(d) A type in which, in a cash flow lease of a capital raising product, a cash flow lease of an asset management product targeting its premium value, or a cash flow lease of a capital transaction product targeting its unrealized loss, a prospective lessor that desires to replenish a cash flow targeting a specific position is an exhibitor, that is, a let demand is an exhibition item, while a prospective lessee that is already carrying said position is a bidder.

Additionally, in various lease transactions, a prospective lessor or prospective lessee may present a position that it is already carrying as its desired lease product, or may alternatively present a position that it is planning to create anew for the purpose of a lease transaction as its desired lease product.

In accordance with the supply and demand balance between exhibitions and bids, a leasing charge is determined as follows, depending on the transaction style. Additionally, a leasing charge in accordance with the present invention is indicated as an annual rate on the appraisal value of a lease transaction product (i.e. as a leasing charge rate), and is paid and received mostly on a monthly basis. Depending on the transaction style or the individual transaction contract, however, the leasing charge may be set uneven, for example as an advance payment in a lump sum at the beginning of the lease period, or as a deferred payment after the grace period:
(a) If a plurality of bidders that desire to hire appear in one exhibition by a prospective lessor, of cash flow of an asset management product, of a discount value of an asset management product, of an actual of an asset management product, or of an unrealized profit of a capital transaction product, the leasing charge rate rises due to the principle of competition, and as a result thereof, the lease transaction comes into effect at the highest charge rate.
(b) If a plurality of bidders that desire to let appear in one exhibition by a prospective lessee, of cash flow of an asset management product, of a discount value of an asset management product, of an actual of an asset management product, or of an unrealized profit of a capital transaction product, the leasing charge rate falls due to the principle of competition, and as a result thereof, the lease transaction comes into effect at the lowest charge rate.
(c) If a plurality of bidders that desire to let appear in one exhibition by a prospective lessee, of a capital raising product, of a premium value of an asset management product, or of an unrealized loss of a capital transaction product, the leasing charge rate falls due to the principle of competition, and as a result thereof, the lease transaction comes into effect at the lowest charge rate.
(d) If a plurality of bidders that desire to hire appear in one exhibition by a prospective lessor, of a capital raising product, of a premium value of an asset management product, or of an unrealized loss of a capital transaction product, the leasing charge rate rises due to the principle of competition, and as a result thereof, the lease transaction comes into effect at the highest charge rate.

As used in the embodiment of the present invention, the term 'letter of intent' shall mean an agreement provisionally entered into by the system operator and an exhibitor as well as an agreement provisionally entered into by the operator and a successful bidder at the stage where transaction confirmation on the successful bid is finalized. On the other hand, the term 'lease contract' shall mean an agreement finally entered into by the operator and the exhibitor as well as an agreement finally entered into by the operator and the successful bidder at the stage where the due diligence of the product and/or the appraisal of the transaction value is finalized. The reason for the operator to enter into the letter of intent and the lease contract separately with the exhibitor and with the successful bidder is to maintain the anonymity of the lease transaction between the exhibitor and the successful bidder.

Additionally, if both the parties reach agreement, the exhibitor and the successful bidder may directly enter into a letter of intent and a lease contract, while alternatively, they may enter into the lease contract immediately after the transaction confirmation is finalized omitting the processes of entering into the letter of intent, of the due diligence and of the appraisal.

The operator displays, in the above-described separate sections for various transaction styles on a real time basis, names or issues, types and attributes, terms and conditions, leasing charge rates, concluded lease values of various products for which lease transactions have recently come into effect; concluded lease volumes in cases of unit price products; lease periods; and/or the like, as well as outlines or details of products scheduled to be exhibited afterwards. Asset managers, capital raisers and/or capital transactors grasp, based on such information, market levels of leasing charge rates as well as balance of supply and demand of lease transactions, and wait for opportunities for their participation in bidding. Additionally, the details regarding concluded lease transactions are disclosed for the purpose of showing the market levels of leasing charge rates as well as the balance of supply and demand of lease transactions to users of the present system, and yet individual names and/or corporate names of lease concluders and such confidential information as special provisions of lease contracts are basically undisclosed.

Also, the operator may display on a real time basis contractual values, indicative values, theoretical values and/or the like as well of various financial and/or quasi-financial instruments as reference data for users to perform arbitrage transactions between the present system and the conventional financial and/or quasi-financial markets.

A system user that has confirmed market levels of leasing charge rates on the screen and then has decided to make an exhibition, informs the operator of a name or issue, a type and attribute, and terms and conditions of a desired let product or a desired hire product; acceptable creditworthiness of a transacting counterparty; a desired leasing charge rate; a desired lease value; a desired lease volume in case of a unit price product; a desired lease period; a desired exhibition period as well as acceptability of an automatic extension or an early termination thereof; various requests for bidders; and/or the like.

As used in the present invention, the disclosure of information on a desired lease product at this stage shall be referred to as 'primary information disclosure by an exhibitor' in the case in which a prospective lessor that is already carrying a position is the exhibitor in a cash flow lease of an asset management product, a cash flow lease of an asset management product utilizing its discount value, a direct lease of an asset management product, or a cash flow lease of a capital transaction product utilizing its unrealized profit; as well as in the case in which a prospective lessee that is already carrying a position is the exhibitor in a cash flow lease of a capital raising product, a cash flow lease of an asset management product targeting its premium value, or a cash flow lease of a capital transaction product targeting its unrealized loss.

The operator confirms that there is no problem in the creditworthiness of the exhibitor, that there is no deceit in the notification regarding the desired lease product, and that the desired lease value is a fair appraisal value based on an optimal appraisal approach, and then accepts the exhibition. Concealing the individual name and/or corporate name of the exhibitor, the operator displays the above-described information on the product in the appropriate section for the transaction style. Among the information related to the desired lease product, there may be confidential information that the exhibitor wishes to avoid disclosure of until the last stage, and yet basically, the more replete the primary information disclosure is, the more comfort bidders are given, and the more bidders can be attracted.

The exhibitor transfers a clearing margin to the operator, and then the operator maintains custody thereof in a separate funds account opened for the exhibitor. The amount of the clearing margin is determined by the operator taking into account the desired lease product as well as its desired lease value, the desired leasing charge rate, and the desired lease period in the current lease transaction; the creditworthiness of the exhibitor; the operator's previous transaction records with the exhibitor; and/or the like.

Next, a system user that has confirmed the above-described exhibition on the screen and then has decided to make a bid, informs the operator of desired timing for participating in the bidding, various requests for the exhibitor, and/or the like. As used in the present invention, the disclosure of information on a desired lease product at this stage shall be referred to as 'primary information disclosure by a bidder' in the case in which a prospective lessor that is already carrying a position is the bidder in a cash flow lease of an asset management product, a cash flow lease of an asset management product utilizing its discount value, a direct lease of an asset management product, or a cash flow lease of a capital transaction product utilizing its unrealized profit; as well as in the case in which a prospective lessee that is already carrying a position is the bidder in a cash flow lease of a capital raising product, a cash flow lease of an asset management product targeting its premium value, or a cash flow lease of a capital transaction product targeting its unrealized loss.

The operator confirms that there is no problem in the creditworthiness of the bidder, that there is no deceit in the notification regarding said desired lease product, and that the desired lease value is a fair appraisal value based on an optimal appraisal approach, and then accepts the bidding. Concealing the individual name and/or corporate name of the bidder, the operator feeds back the above-described information on said product to the exhibitor. Among the information related to said desired lease product, there may be confidential information that the bidder wishes to avoid disclosure of until the last stage, and yet basically, the more replete the primary information disclosure is, the more comfort the exhibitor is given, and the more likely the lease transaction is concluded.

The bidder transfers a clearing margin to the operator, and then the operator maintains custody thereof in a separate funds account opened for the bidder. The amount of the clearing margin is determined by the operator taking into account said desired lease product as well as its desired lease value, the desired leasing charge rate, the desired lease period in the current lease transaction; the creditworthiness of the bidder; the operator's previous transaction records with the bidder; and/or the like.

Additionally, depending on the magnitude of the appraisal value of a lease transaction product, on the type and attribute of a lease transaction product and/or on the like, a plurality of bidders may be matched to one exhibitor, one bidder may be matched to a plurality of exhibitors, or a plurality of bidders may be matched to a plurality of exhibitors. That is, in these cases, lease transactions are simultaneously concluded among three or more users.

If a desired lease product is a plurality of asset management products, a plurality of capital raising products or a plurality of capital transaction products; is a tie-in of an asset management product and a capital transaction product, a tie-in of a capital raising product and a capital transaction product or a tie-in of an asset management product and a capital raising product; and/or is a tie-in of an asset management product, a capital raising product and a capital transaction product, there is a method of unbundling each tie-in into its constituents to execute bidding, and a method of bundling cash flows arising from a plurality of products and then utilizing the net cash flow to execute bidding.

Also, in the auction mode, if negotiation is necessary between an exhibitor and a bidder regarding a method of calculating a desired leasing charge rate or a desired lease value, a desired lease period, bundling or unbundling of a desired lease product, additional conditions for concluding a lease transaction, an exhibition period, timing for participating in bidding, and/or the like, the negotiation is substituted for by the negotiation between the exhibitor and the operator as well as by the negotiation between the bidder and the operator, whereby the anonymity of the transaction is basically maintained.

If a lease transaction is not concluded, the exhibitor can exhibit the same desired lease product at a different time. On this occasion, the quantity of information in the primary information disclosure, the acceptable creditworthiness of a transacting counterparty, the desired leasing charge rate, the desired lease value, the desired lease volume in the case of a unit price product, the desired lease period, the method of bundling or unbundling the desired lease product, the various requests for bidders, and/or the like are reviewed in advance.

If a lease transaction is concluded, the operator causes both the exhibitor and the successful bidder to confirm the transaction. At the stage where the transaction is confirmed, the operator prepares a letter of intent between the operator and the exhibitor as well as a letter of intent between the operator and the successful bidder, and then the respective parties sign the letters of intent. The operator stores separate master letters of intent for various transaction styles to be amended according to concluded lease transactions, thereby preparing actual letters of intent.

In the letter of intent, the name or issue, type and attribute, and terms and conditions of the concluded lease product; the special provisions of the lease contract; the leasing charge rate; the concluded lease value; the concluded lease volume in the case of a unit price product; the lease period; the schedule until the entry into the lease contract; the method of the due diligence of the product and/or the appraisal of the transaction value; the information regarding the appraiser in charge of the due diligence and/or appraisal; the effect that the lease contract may be amended or invalid depending on the result of the due diligence and/or appraisal; the term of validity of the letter of intent; and/or the like, are input.

Then, after the letter of intent is signed, the due diligence of the concluded lease product and/or the appraisal of the concluded lease value is executed. This is executed by an appraiser that does not have conflicts of interest with the exhibitor or with the successful bidder, and it is confirmed therein, for example that the appraisal value of the position that the prospective lessor has exhibited or bid in the cash flow lease of the asset management product, in the cash flow lease of the asset management product utilizing its discount value, in the direct lease of the asset management product, or in the cash flow lease of the capital transaction product utilizing its unrealized profit, can be regarded as fair. It is also confirmed, for example that that the appraisal value of the position that the prospective lessee has exhibited or bid in the cash flow lease of the capital raising product, in the cash flow lease of the asset management product targeting its premium value, or in the cash flow lease of the capital transaction product targeting its unrealized loss, can be regarded as fair; and/or that the concluded lease product does not include legal, ethical, economic, physical or environmental problems.

In order to increase the precision of the due diligence and/or appraisal, the lease concluder is required to submit to the appraiser all the necessary information related to the position that it is carrying, such as the calculation ground of the desired lease value, or the existing contract. As used in the present invention, the disclosure of information on a concluded lease product at this stage shall be referred to as 'secondary information disclosure by an exhibitor or a successful bidder.' Additionally, in the case in which a concluded lease product is a general product and the fairness of its desired lease value can be easily recognized, the system operator may also serve as an appraiser or may omit the process itself of the due diligence and/or appraisal on the basis of agreement with both an exhibitor and a successful bidder.

At the stage where it is confirmed, as a result of the due diligence and/or appraisal on the basis of the secondary information disclosure, that no defect is found in the desired lease product and/or that the desired lease value was a fair appraisal value, a lease contract between the operator and the exhibitor as well as a lease contract between the operator and the successful bidder is entered into. Additionally, said entered-into letter of intent may be amended to be used as the lease contract.

As a result of the due diligence or appraisal, if any defect is found in the concluded lease product, or if it is found that the desired lease value was an unfair appraisal value, the appraiser feeds back the content of the defect or the result of the appraisal to the prospective lease transactor that is carrying the position of the pertinent product, to its transacting counterparty, and/or to the system operator. Then, the concluded lease value, the leasing charge rate, the lease period, the special provisions of the lease contract, and/or the like are reviewed between the prospective lease transactor and the operator, and/or between the transacting counterparty and the operator. As a result thereof, with the operator as an intermediary, if the prospective lease transactor that is carrying the position, and the transacting counterparty have reached agreement, the contents of the letter of intent are amended to enter into a lease contract, while if the parties have failed to reach agreement, the conclusion itself of the lease transaction becomes null and void.

Furthermore, after a lease contract is signed, the operator performs administration of the following items and/or the like:
(a) During a lease period, the operator executes the payment and the receipt of leasing charges between and among lease concluders through inter-account funds transfers in the system.
(b) During a lease period, the operator executes the payment and the receipt of cash flows between and among lease concluders through inter-account funds transfers in the system.
   Additionally, with respect to a service charge and/or a line charge that the operator itself receives from a lease concluder, there is a method in which the charge is deducted in the process where a leasing charge or cash flow is paid and received between and among lease concluders via the present system; and a method in which the charge is collected from lease concluders on separate occasions. Also, if the payment/receipt of a leasing charge coincides with the receipt/payment of a cash flow in timing between lease concluders, the operator may offset them and then execute the inter-account funds transfer on a net amount basis.
(c) During a lease period, the operator intermediates in the delivery and the return of an actual of a concluded lease product.
(d) When various rights such as jus disponendi are exercised or various obligations are fulfilled on the basis of a lease transaction, the operator executes administrative procedures arising between the lease concluders.
(e) With reference to a lease contract, the operator inspects each of lease concluders to determine whether there is proper compliance with laws and/or regulations; appropriate filing of transaction reports with authorities; appropriate disclosure of information to the general public; and/or the like. Also, the operator files its own reports with authorities and/or discloses information to the general public as necessary.
(f) With reference to a lease transaction, the operator provides lease concluders with software or other tools that can be used in risk management and/or cash flow management.
(g) During a lease period, since lease concluders mutually take their credit risks directly or indirectly, the operator, which intermediates between the lessor and the lessee, grasps their creditworthiness on the basis of their credit ratings, financial variables, size or prospect of business, name recognition in the market, and/or the like. In the case in which the operator finds the creditworthiness insufficient, with a view to enhancing it, the operator may demand cash collateral, or securities collateral such as bonds, equities, beneficiary securities, certificates of deposit, commercial papers or the like, and/or can demand guarantee by a bank, an insurance company or another guarantor, depending on the style of lease transaction and/or the amount of the collected clearing margin,
   Also, during a lease period, if the exposure to a credit risk associated with a transacting counterparty increases or decreases according to the fluctuation of the appraisal value of a lease transaction product or to the state of progress of the payment and receipt of principal and fruits, the operator adjusts the degree of collateral or guarantee each time by demanding additional collateral or additional guarantee, by refunding excess collateral or releasing excess guarantee, and/or by the like, thereby maintaining the appropriate creditworthiness. Additionally, depending on the case, the insufficiency in creditworthiness may be reflected on the amount of cash flow or leasing charge to be paid and received.
   If, notwithstanding this, a lease concluder falls into default, the operator fulfills a guidance role in the preservation and recovery of credits and in the institution of legal proceedings on behalf of the transacting counterparty of the lease concluder.
(h) In a case in which a lease concluder cancels a lease contract, a case in which a lease concluder assigns a lease contract to a third party, and other cases, the operator executes administrative procedures arising therefrom.
(i) The operator executes the payment and the receipt of an appraisal fee, an advertisement fee of the case in which a user of the present system inserts thereto a banner ad or a pop-up ad related to a lease transaction targeting other users, and/or other fees through an inter-account funds transfer between and among the parties.

Now, any desired lease value that an exhibitor and a bidder inform the operator of should be a fair appraisal value, so that the conclusion of a lease transaction can be smoothly processed. In the case of a priceable product equipped with liquidity, a fair appraisal value shall mean a market value, which is a contractual value and/or an indicative value announced in a securities exchange, a derivatives exchange, an over-the-counter market, an inter-financial institution market, an inter-realtor market and/or the like.

On the other hand, in the case of an illiquid priceable product or a non-priceable product, a fair appraisal value shall mean a theoretical value that is rationally calculated excluding arbitrariness. The methods of rationally calculating the theoretical value comprise a method in which the value is calculated by incorporating fluctuation factors such as an interest rate, maturity, a credit risk and the like as well as individual characteristics of the product into a market value of a similar product; a method in which a present value is calculated by discounting future cash flows arising from the product by an interest rate or the like; a method in which a theoretical pricing model recognized in the market is utilized; and other methods. Also, in the case of a hybrid product or the like whose constituents respectively have market values, a method in which its value is calculated by summing up the respective market values, is effectual.

If a plurality of fair appraisal values are applicable to one product regardless of whether it is a priceable product or a non-priceable product, its desired lease value is determined by a method in which the plurality of appraisal approaches are adopted and then their weighted average or the like is calculated; or by a method in which only a value regarded as the fairest from among the plurality of appraisal values is adopted.

Accordingly, the system operator guides exhibitors and bidders to adopt appraisal approaches with the same base so that a plurality of desired lease values to be presented can be easily compared. Also regarding a desired leasing charge rate, which may be indicated as an annual rate on a desired lease value, the operator plays a leading role in unifying calculation bases as to, for example: whether or not expenditures such as a lease transaction fee payable to the operator at the opening of the lease transaction, expenses required during the lease period for the maintenance of a position, the exercise of rights or the fulfillment of obligations, and expenses required at the closing of the lease transaction, should be included beforehand in a leasing charge; and how far costs for funding conducted or to be conducted in the market by a prospective lessor in order to create a position that is a lease object, or in order to raise a replenishing cash flow that is a lease object, should be included in a leasing charge.

Additionally, the operator can provide prospective lease transactors with software or other tools over the present system for calculation of appraisal values and/or leasing charges.

In a lease transaction in accordance with the present system, a desired lease value of an individual financial instrument or quasi-financial instrument is required to be recognized or calculated by, for example, the following methods:

With respect to a loan asset, if it is traded in a secondary market as is a bond, its market value is applied to the desired lease value. With respect to an illiquid loan asset, its acquisition value can be applied to the desired lease value. However, if there is a problem in a business operation or financial standing of the borrower, the value of the possible bad loan asset is estimated on the basis of the ranking of the credit risk, the forecast of the future cash flows and the like, and then the amount determined by deducting the estimated value from said acquisition value is applied to the desired lease value.

With respect to various deposits such as ordinary deposits, time deposits and certificates of deposit, their deposited amount can be applied to the desired lease value. However, if the deposited amount exceeds the upper limit of the principal and interest amount guaranteed and there is a problem in a business operation or financial standing of the financial institution servicing the deposit, the value of the possible bad deposit asset is estimated on the basis of the ranking of the credit risk, the forecast of the future cash flows and the like, and then the amount determined by deducting the estimated value from said deposited amount is applied to the desired lease value.

With respect to a fund-type asset management product, in the case of a priceable product that is found in securities investment trusts, real estate investment trusts, commodity funds and the like, its market value is applied to the desired lease value. In the case of a product, from among a loan trust, a money trust in a narrow sense, a bond investment trust and the like, that can be called a quasi-deposit product due to a guarantee of its principal and interest amount, its asset management policy or the like, its acquisition value of a beneficiary right can be applied to the desired lease value.

Also, with respect to an investment vehicle, the composition of products in a portfolio together with the appraisal values of the individual products is basically disclosed, and then the sum total of the appraisal values of the managed assets is applied to the desired lease value.

With respect to a private equity, in the case of an issue equipped with liquidity, its contractual value or indicative value announced in a transaction system or the like that at any time allows the trading is applied to the desired lease value, while in the case of an illiquid issue, its theoretical value that can be calculated by a net asset value methodology, an earning power methodology, a market price comparison methodology or the like is applied to the desired lease value.

The net asset value methodology comprises a book value net asset approach, in which a net asset value on a book is utilized; a present replacement value net asset approach, in which liabilities are deducted from the sum total of present replacement prices of assets; a liquidation value net asset approach, in which liabilities are deducted from the sum total of present sellable prices of assets; and other approaches. Also, the earning power methodology comprises a capitalized earning approach, in which estimated future profits are divided by a capitalization rate or the like; a capitalized dividend approach, in which estimated future dividends are divided by a capitalization rate or the like; a discounted cash flow approach, in which liabilities are deducted from the sum total of present values that are determined by discounting estimated future cash flows with a capitalization rate or the like; and other approaches. Moreover, the market price comparison methodology comprises a similar industry comparison approach, in which an equity price of a target company is calculated on the basis of an average equity price of a plurality of listed companies in similar industries as compared with their dividends, profits and net asset values; and a similar company comparison approach, in which an equity price of a target company is calculated on the basis of an average equity price of a plurality of similar companies as compared with revenues, profits and net asset values; and other approaches.

With respect to land, buildings, and compound real estate properties (including condominiums) that are defined as combinations of both, the desired lease value is calculated by an appraisal approach such as a cost approach, a transacted precedent comparison approach, a capitalized earning approach or the like. The cost approach is a method in which the replacement cost of real estate is applied to the appraisal value, while the transacted precedent comparison approach is a method in which a value found in a transaction case of another property is utilized as a reference for the appraisal value. Also, the capitalized earning approach used in this context is a method in which the sum total of present values determined by discounting future cash flows such as rents and sale proceeds is applied to the appraisal value.

On the other hand, with respect to a loan asset secured by real estate, a real estate-backed security, a beneficiary right in a real estate investment trust, or a subscription certificate and investment-corporate bond issued by a real estate investment corporation, its desired lease value can be calculated in line with that of a financial asset management product.

With respect to a capital raising product, its present value determined by discounting future cash flows with an interest rate or the like that has considered its credit risk, can be applied to the desired lease value.

With respect to a foreign exchange product, a financial derivative product, a real estate derivative product or a commodity derivative product, in the case of a listed product, its unrealized profit or loss calculated utilizing a contractual value or an indicative value announced in a derivatives exchange or a securities exchange, is applied to the desired lease value. In the case of an unlisted product, its unrealized profit or loss calculated by a method in which a contractual value or an indicative value announced in an inter-financial institution market, an inter-realtor market or the like is utilized; a method in which its present value is determined by discounting future cash flows of the product with an interest rate or the like that has considered its credit risk; a method in which a theoretical pricing model recognized in the market is utilized; or other methods, is applied to the desired lease value.

The present invention will be explained in more detail by using the accompanying drawings:

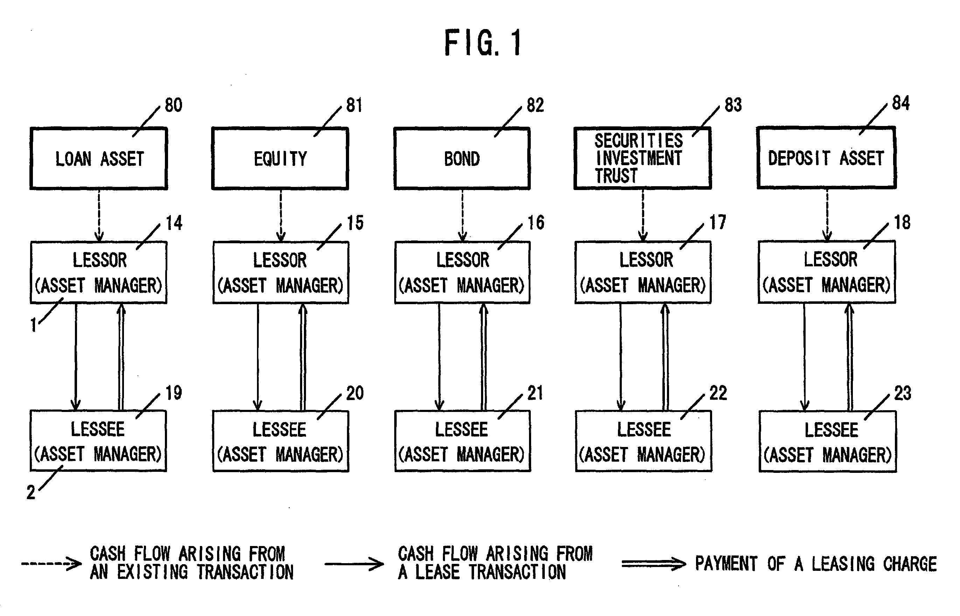

First, FIG. 1 is an embodiment of the cash flow lease of an asset management product, illustrating cases in which financial asset management products are lease items.

Herein, asset manager 1 is holding loan asset 80 and is receiving cash inflow therefrom. As a result of concluding a cash flow lease with asset manager 2, asset manager 1 (i.e. lessor 14) has leased said cash inflow to asset manager 2 (i.e. lessee 19), while in return, lessee 19 has paid leasing charges to lessor 14.

Similarly, lessor 15 and lessee 20, lessor 16 and lessee 21, lessor 17 and lessee 22, arid lessor 18 and lessee 23 have executed payment and receipt of the cash inflow as well as the leasing charges related to lease transactions respectively regarding equity 81, bond 82, securities investment trust 83, and deposit asset 84.

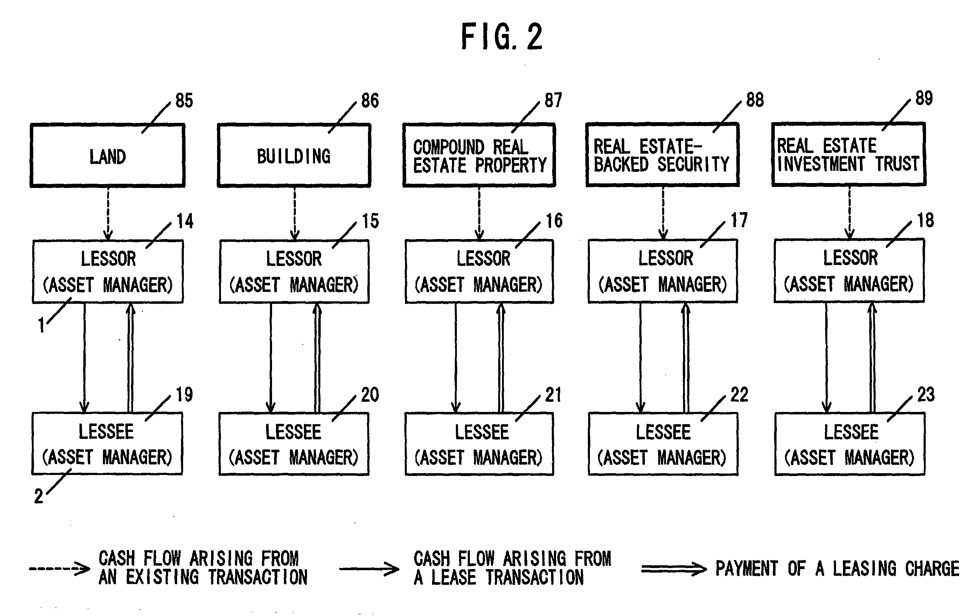

FIG. 2 is another embodiment of the cash flow lease of an asset management product, illustrating cases in which real estate asset management products are lease items.

Herein, asset manager 1 is holding land 85 and is receiving cash inflow therefrom. As a result of concluding a cash flow lease with asset manager 2, asset manager 1 (i.e. lessor 14) has leased said cash inflow to asset manager 2 (i.e. lessee 19), while in return, lessee 19 has paid leasing charges to lessor 14.

Similarly, lessor 15 and lessee 20, lessor 16 and lessee 21, lessor 17 and lessee 22, and lessor 18 and lessee 23 have executed payment and receipt of the cash inflow as well as the leasing charges related to lease transactions respectively regarding building 86, compound real estate property 87, real estate-backed security 88, and real estate investment trust 89.

Additionally, as used in this context, the term 'lessor' or 'lessee' shall not mean a landowner or landlord, or a leaseholder or tenant that respectively receives or pays rent for a real estate property, but mean a lender or a borrower that respectively lets or hires cash flow arising from a real estate asset management product.

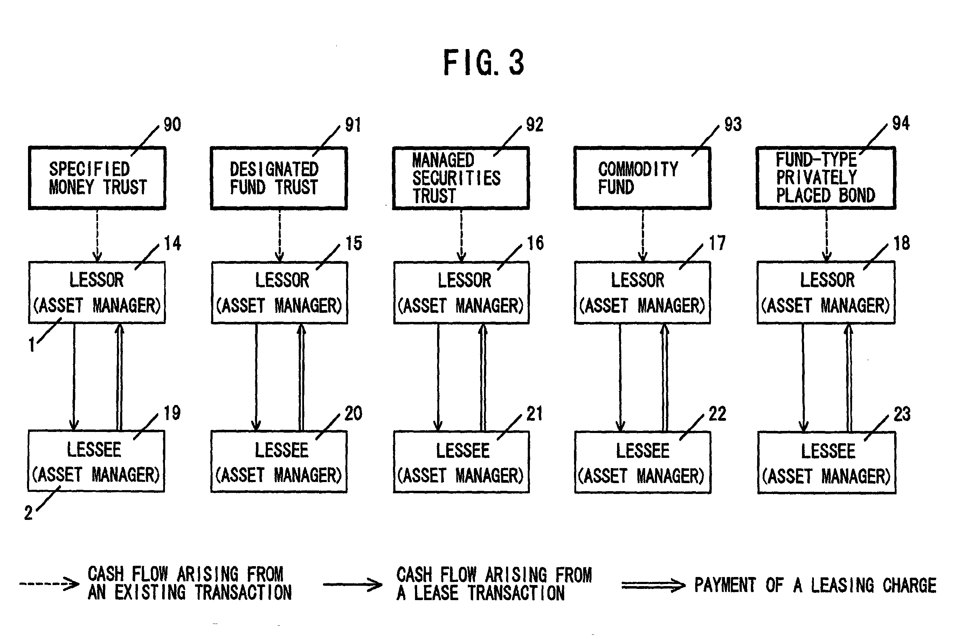

FIG. 3 is another embodiment of the cash flow lease of an asset management product, illustrating cases in which fund-type asset management products and investment vehicles are lease items.

Herein, asset manager 1 is holding specified money trust 90 and is receiving cash inflow therefrom. As a result of concluding a cash flow lease with asset manager 2, asset manager 1 (i.e. lessor 14) has leased said cash inflow to asset manager 2 (i.e. lessee 19), while in return, lessee 19 has paid leasing charges to lessor 14.

Similarly, lessor 15 and lessee 20, lessor 16 and lessee 21, lessor 17 and lessee 22, and lessor 18 and lessee 23 have executed payment and receipt of the cash inflow as well as the leasing charges related to lease transactions respectively regarding designated fund trust 91, managed securities trust 92, commodity fund 93, and fund-type privately placed bond 94.

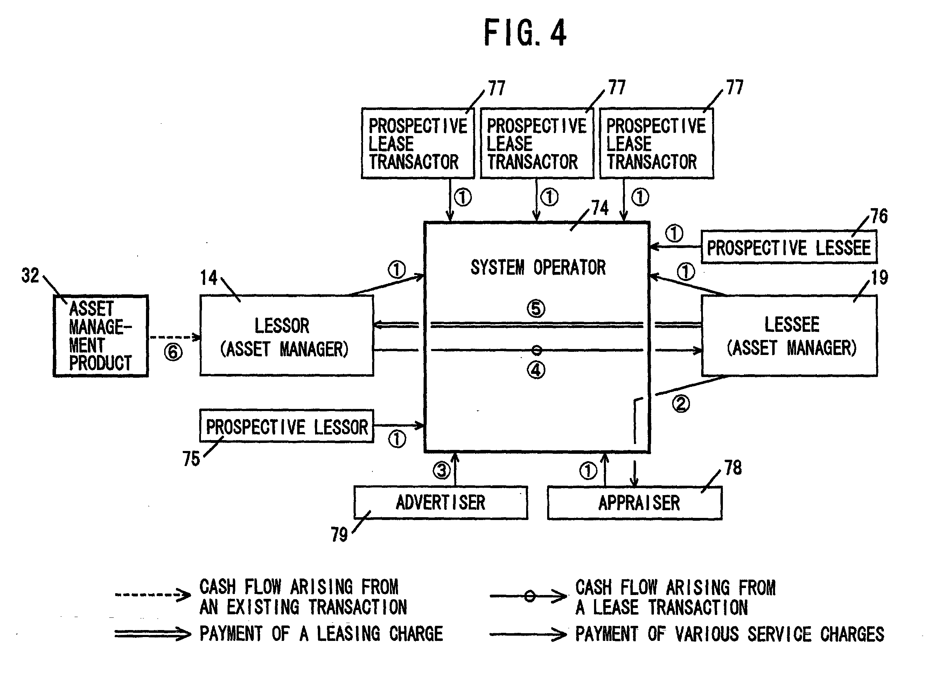

FIG. 4 is an embodiment of the flows of funds and the fee collection scheme in a cash flow lease of an asset management product.

In the diagram,
① indicates that lessor 14, who is an asset manager, lessee 19, who is also an asset manager, prospective lessor 75, prospective lessee 76, prospective lease transactors 77 and appraiser 78 pay service charges, line charges and/or the like to system operator 74.
② indicates that lessee 19 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment/receipt of the cash inflow arising from asset management product 32 is executed between lessor 14 and lessee 19.
⑤ indicates that, as a result of concluding the cash flow lease, payment/receipt of leasing charges are executed between lessor 14 and lessee 19.
⑥ indicates the existing cash inflow that lessor 14 is receiving from asset management product 32.

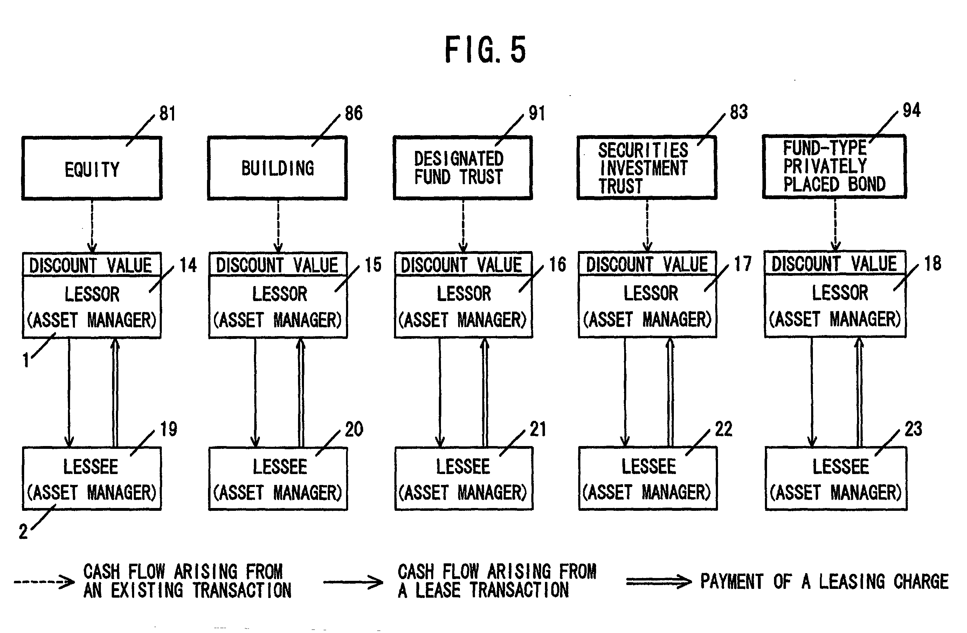

Next, FIG. 5 is another embodiment of the cash flow lease of an asset management product, illustrating cases in which lease transactions utilize the discount values of object products.

Herein, asset manager 1 is holding equity 81 and is receiving cash inflow therefrom.

As a result of concluding with asset manager 2 a cash flow lease that utilizes a discount value, asset manager 1 (i.e. lessor 14) has leased said cash inflow to asset manager 2 (i.e. lessee 19), while in return, lessee 19 has paid leasing charges to lessor 14.

Similarly, lessor 15 and lessee 20, lessor 16 and lessee 21, lessor 17 and lessee 22, and lessor 18 and lessee 23 have executed, respectively regarding building 86, designated fund trust 91, securities investment trust 83, and fund-type privately placed bond 94, payment and receipt of the cash inflow as well as the leasing charges related to lease transactions that utilize the discount values of the object products.

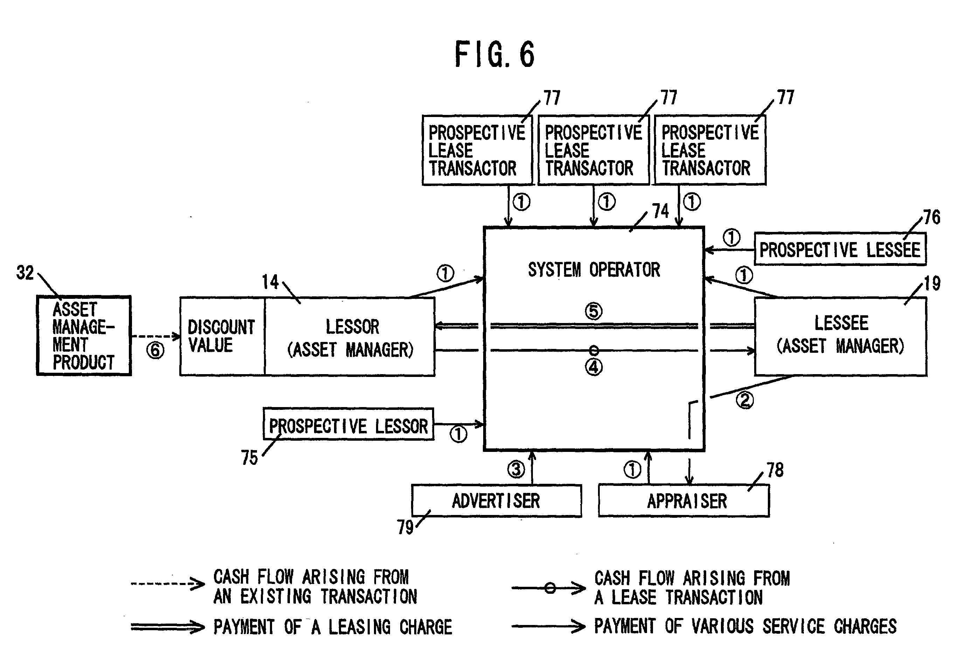

FIG. 6 is another embodiment of the flows of funds and the fee collection scheme in a cash flow lease of an asset management product, illustrating a case in which a lease transaction utilizes the discount value of an object product.

In the diagram,
① indicates that lessor 14, who is an asset manager, lessee 19, who is also an asset manager, prospective lessor 75, prospective lessee 76, prospective lease transactors 77 and appraiser 78 pay service charges, line charges and/or the like to system operator 74.
② indicates that lessee 19 pays an appraisal fee to appraiser 78.
③ indicates that advertiser 79 pays system operator 74 an advertisement fee for insertion of a banner ad or a pop-up ad.
④ indicates that, as a result of concluding the cash flow lease that utilizes the discount value, payment/receipt of the cash inflow arising from asset management product 32 is executed between lessor 14 and lessee 19.
⑤ indicates that, as a result of concluding the cash flow lease, payment/receipt of leasing charges are executed between lessor 14 and lessee 19.
⑥ indicates the existing cash inflow that lessor 14 is receiving from asset management product 32.

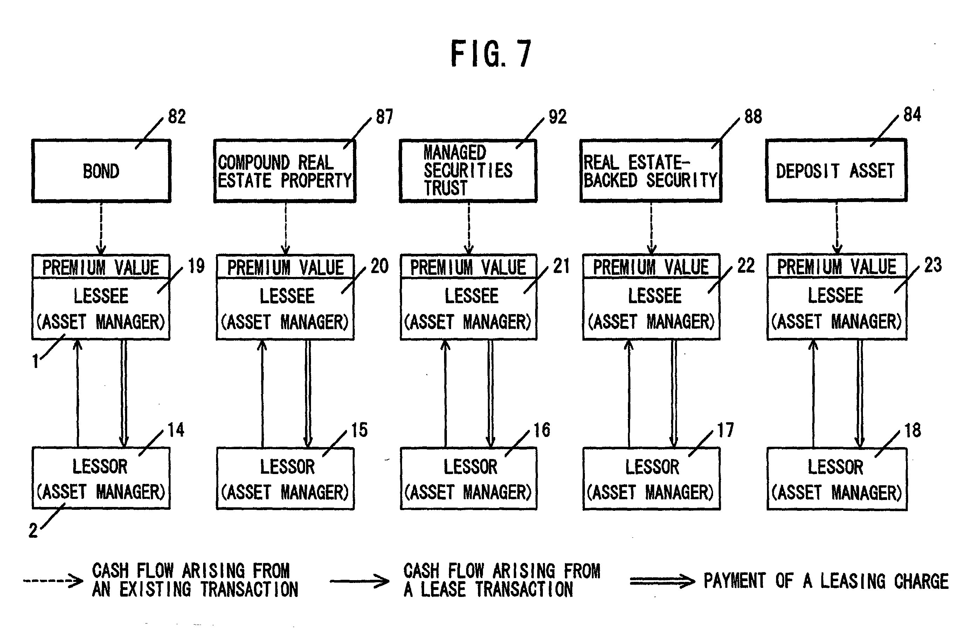

Also, FIG. 7 is another embodiment of the cash flow lease of an asset management product, illustrating cases in which lease transactions target the premium values of object products.

Herein, asset manager 1 is holding bond 82 and is receiving cash inflow therefrom. As a result of concluding with asset manager 2 a cash flow lease that targets a premium value, asset manager 1 (i.e. lessee 19) has been leased by asset manager 2 (i.e. lessor 14) replenishing cash flow that targets the premium value of said product, while in return, lessor 14 has been paid leasing charges by lessee 19.

Similarly, lessee 20 and lessor 15, lessee 21 and lessor 16, lessee 22 and lessor 17, and lessee 23 and lessor 18 have executed, respectively regarding compound real estate property 87, managed securities trust 92, real estate-backed security 88, and deposit asset 84, payment and receipt of the replenishing cash flow as well as the leasing charges related to lease transactions that target the premium values of the object products.

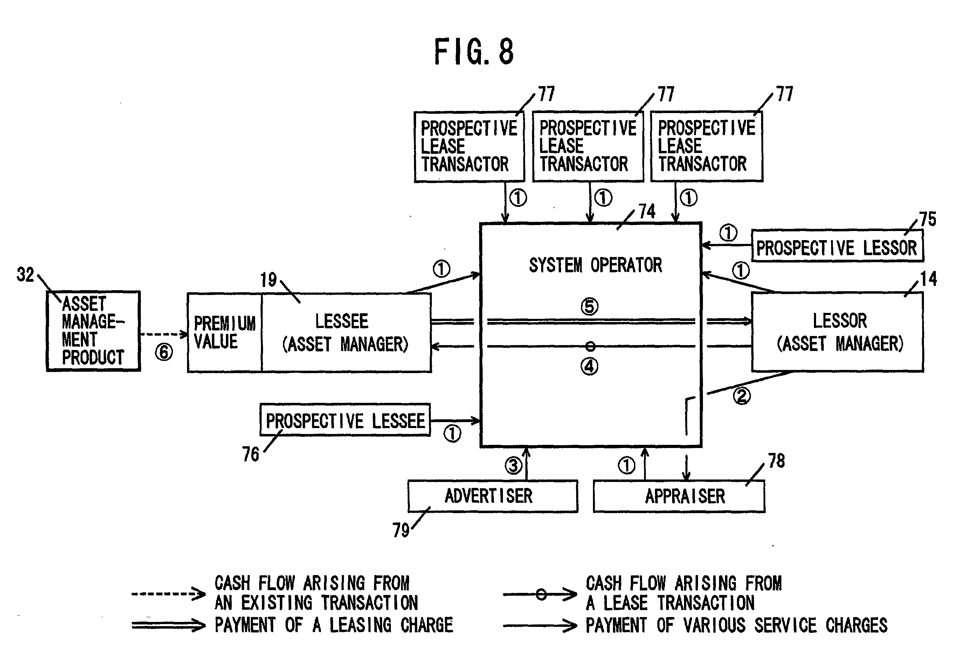

FIG. 8 is another embodiment of the flows of funds and the fee collection scheme in a cash flow lease of an asset management product, illustrating a case in which a lease transaction targets the premium value of an object product.

In the diagram,
① indicates that lessee 19, who is an asset manager, lessor 14, who is also an asset manager, prospective lessee 76, prospective lessor 75, prospective lease transactors 77 and appraiser 78 pay service charges, line charges and/or the like to system operator 74.
② indicates that lessor 14 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment/receipt of the replenishing cash flow that targets the premium value of asset management product 32, is executed between lessee 19 and lessor 14.
⑤ indicates that, as a result of concluding the cash flow lease, payment/receipt of leasing charges are executed between lessee 19 and lessor 14.
⑥ indicates the existing cash inflow that lessee 19 is receiving from asset management product 32.

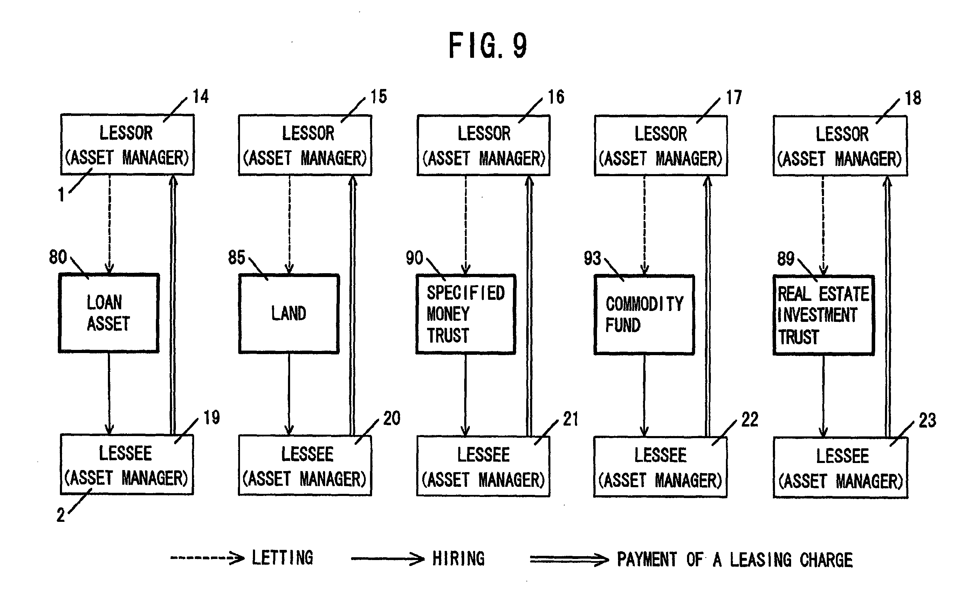

Furthermore, FIG. 9 is an embodiment of the direct lease of an asset management product.

Herein, asset manager 1 was holding loan asset 80. As a result of concluding a direct lease with asset manager 2, asset manager 1 (i.e. lessor 14) has leased the actual of said product to asset manager 2 (i.e. lessee 19), while in return, lessee 19 has paid leasing charges to lessor 14.

Similarly, lessor 15 and lessee 20, lessor 16 and lessee 21, lessor 17 and lessee 22, and lessor 18 and lessee 23 have executed delivery and receipt of the actuals as well as receipt and payment of the leasing charges related to lease transactions respectively regarding land 85, specified money trust 90, commodity fund 93, and real estate investment trust 89.

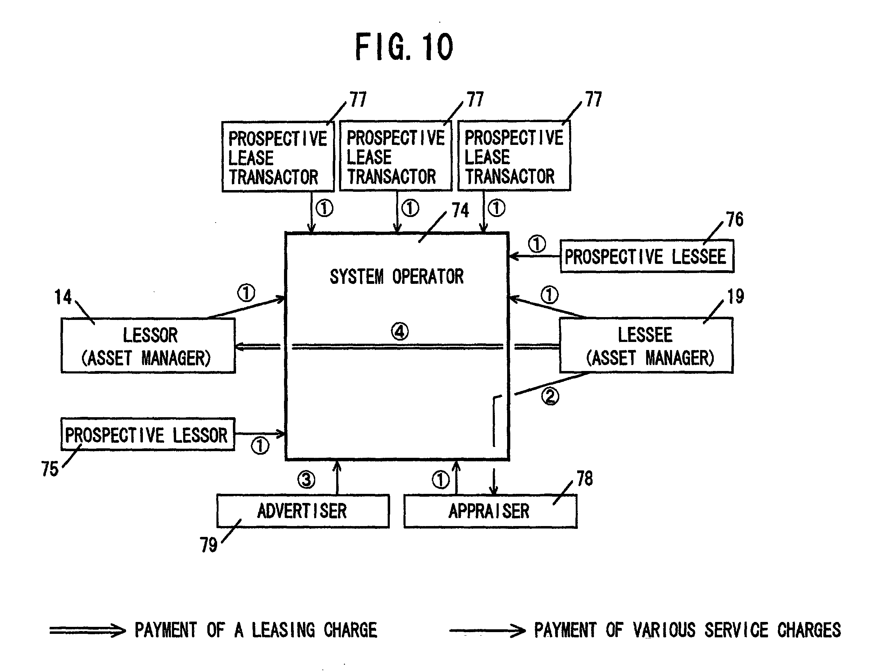

FIG. 10 is an embodiment of the flows of funds and the fee collection scheme in a direct lease of an asset management product.

In the diagram,
① indicates that lessor 14, who is an asset manager, lessee 19, who is also an asset manager, prospective lessor 75, prospective lessee 76, prospective lease transactors 77 and appraiser 78 pay service charges, line charges and/or the like to system operator 74.
② indicates that lessee 19 pays an appraisal fee to appraiser 78.
③ indicates that advertiser 79 pays system operator 74 an advertisement fee for insertion of a banner ad or a pop-up ad.
④ indicates that, as a result of concluding the direct lease, payment/receipt of leasing charges are executed between lessor 14 and lessee 19.

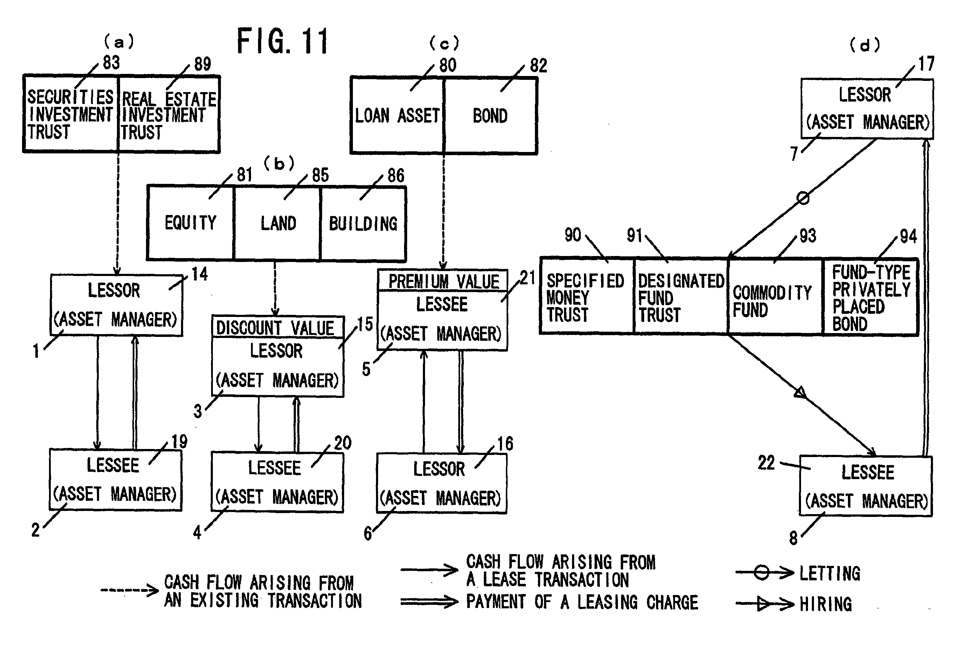

Moreover, FIG. 11 shows embodiments of a lease transaction by tie-in of asset management products.

In view (a) in the diagram, asset manager 1 is holding securities investment trust 83 and real estate investment trust 89, and is receiving cash inflow respectively therefrom. As a result of concluding a cash flow lease with asset manager 2, asset manager 1 (i.e. lessor 14) has leased said cash inflow to asset manager 2 (i.e. lessee 19) by tie-in, while in return, lessee 19 has paid leasing charges to lessor 14.

In view (b), asset manager 3 is holding equity 81, land 85 and building 86, and is receiving cash inflow respectively therefrom. As a result of concluding with asset manager 4 a cash flow lease that utilizes a discount value, asset manager 3 (i.e. lessor 15) has leased said cash inflow to asset manager 4 (i.e. lessee 20) by tie-in, while in return, lessee 20 has paid leasing charges to lessor 15.

In view (c), asset manager 5 is holding loan asset 80 and bond 82, and is receiving cash inflow respectively therefrom. As a result of concluding with asset manager 6 a cash flow lease that targets a tie-in of premium values, asset manager 5 (i.e. lessee 21) has been leased by asset manager 6 (i.e. lessor 16) replenishing cash flow that targets the tie-in of the premium values of said products, while in return, lessor 16 has been paid leasing charges by lessee 21.

In view (d), asset manager 7 was holding specified money trust 90, designated fund trust 91, commodity fund 93 and fund-type privately placed bond 94. As a result of concluding a direct lease with asset manager 8, asset manager 7 (i.e. lessor 17) has leased the actuals of said products to asset manager 8 (i.e. lessee 22) by tie-in, while in return, lessee 22 has paid leasing charges to lessor 17.

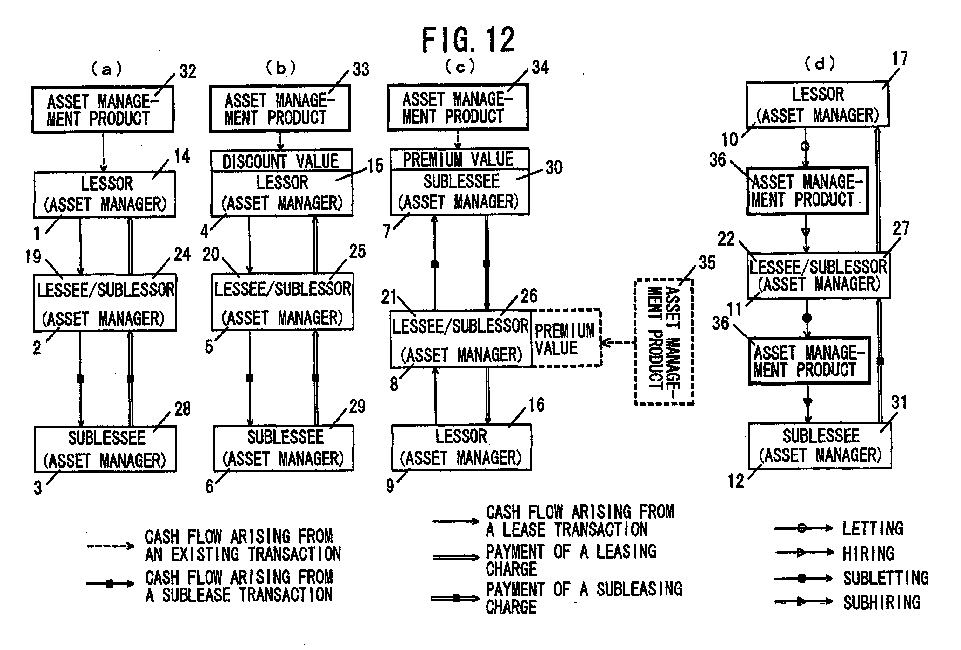

Besides, FIG. 12 shows embodiments of a sublease transaction of an asset management product.

In view (a) in the diagram, a cash flow lease is already in effect between asset manager 1 and asset manager 2. That is, asset manager 1 (i.e. lessor 14) is leasing to asset manager 2 (i.e. lessee 19) the cash inflow arising from asset management product 32 that lessor 14 is holding, while in return, lessee 19 is paying leasing charges to lessor 14. Thereafter, a sublease transaction has come into effect between lessee 19 and asset manager 3. As a result thereof, lessee 19 (i.e. sublessor 24) has subleased said cash inflow to asset manager 3 (i.e. sublessee 28), while in return, sublessee 28 has paid subleasing charges to sublessor 24.

In view (b), a cash flow lease that utilizes a discount value is already in effect between asset manager 4 and asset manager 5. That is, asset manager 4 (i.e. lessor 15) is leasing to asset manager 5 (i.e. lessee 20) the cash inflow arising from asset management product 33 that lessor 15 is holding, while in return, lessee 20 is paying leasing charges to lessor 15. Thereafter, a sublease transaction that utilizes the discount value has come into effect between lessee 20 and asset manager 6. As a result thereof, lessee 20 (i.e. sublessor 25) has subleased said cash inflow to asset manager 6 (i.e. sublessee 29), while in return, sublessee 29 has paid subleasing charges to sublessor 25.

In view (c), a cash flow lease that targets a premium value is already in effect between asset manager 8 and asset manager 9. That is, asset manager 9 (i.e. lessor 16) has leased replenishing cash flow to the premium value of asset management product 35 that asset manager 8 (i.e. lessee 21) is holding, while in return, lessee 21 is paying leasing charges to lessor 16. Thereafter, a sublease transaction that targets a premium value has come into effect between lessee 21 and asset manager 7. As a result thereof, lessee 21 (i.e. sublessor 26) has subleased said replenished cash flow to the premium value of asset management product 34 that asset manager 7 (i.e. sublessee 30) is holding, while in return, sublessee 30 has paid subleasing charges to sublessor 26.

In view (d), a direct lease is already in effect between asset manager 10 and asset manager 11. That is, asset manager 10 (i.e. lessor 17) has leased to asset manager 11 (i.e. lessee 22) the actual of asset management product 36 that lessor 17 was holding, while in return, lessee 22 is paying leasing charges to lessor 17. Thereafter, a sublease transaction has come into effect between lessee 22 and asset manager 12. As a result thereof, lessee 22 (i.e. sublessor 27) has subleased said actual of the product to asset manager 12 (i.e. sublessee 31), while in return, sublessee 31 has paid subleasing charges to sublessor 27.

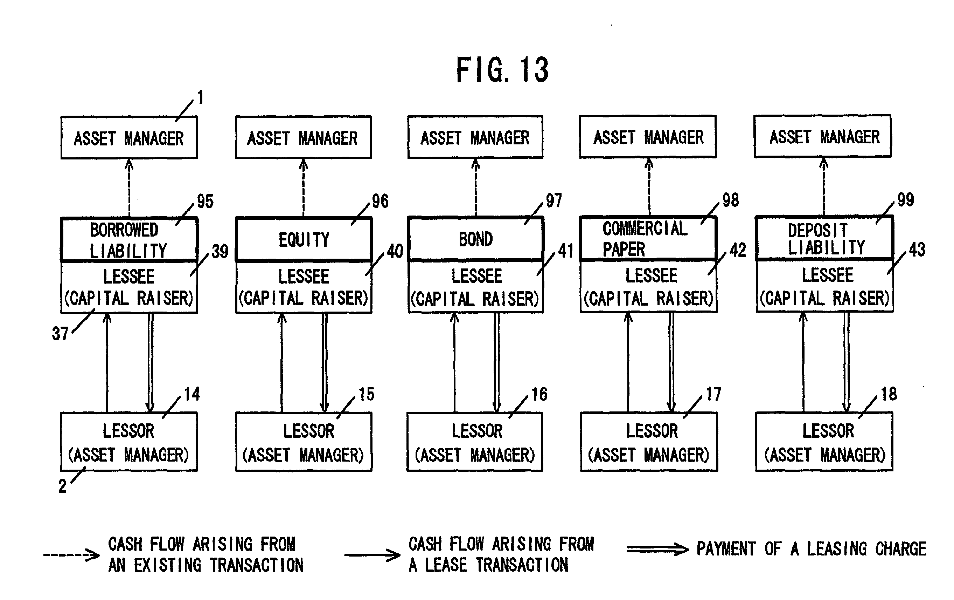

Next, FIG. 13 is an embodiment of the cash flow lease of a capital raising product.

Herein, capital raiser 37 is servicing a borrowed liability 95 from asset manager 1 and is paying cash outflow thereto. As a result of concluding a cash flow lease with asset manager 2, capital raiser 37 (i.e. lessee 39) has been leased by asset manager 2 (i.e. lessor 14) replenishing cash flow that targets said product, while in return, lessor 14 has been paid a leasing charge or leasing charges by lessee 39.

Similarly, lessee 40 and lessor 15, lessee 41 and lessor 16, lessee 42 and lessor 17, and lessee 43 and lessor 18 have executed payment and receipt of the replenishing cash flow as well as the leasing charges related to lease transactions respectively regarding equity 96, bond 97, commercial paper 98, and deposit liability 99.

Additionally, in the drawings of the present invention, any number of asset managers, depending on the actual product, may be acting as a counterparty for an existing transaction of a capital raiser that becomes a lessee.

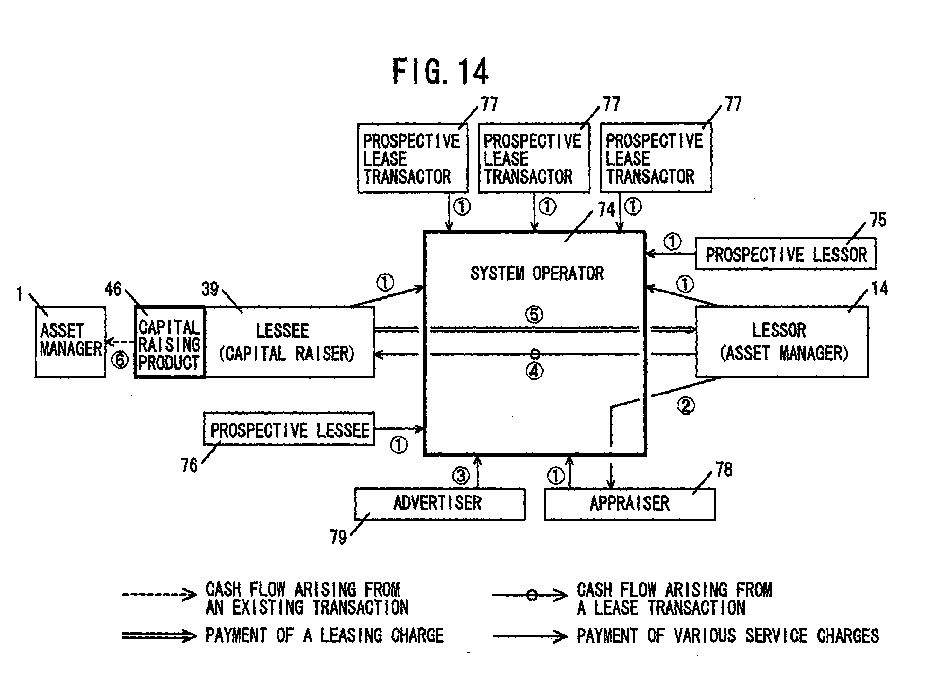

FIG 14 is an embodiment of the flows of funds and the fee collection scheme in a cash flow lease of a capital raising product.

In the diagram,
① indicates that lessee 39, who is a capital raiser, lessor 14, who is an asset manager, prospective lessee 76, prospective lessor 75, prospective lease transactors 77 and appraiser 78 pay service charges, line charges and/or the like to system operator 74.
② indicates that lessor 14 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment/receipt of the replenishing cash flow that targets capital raising product 46, is executed between lessee 39 and lessor 14.
⑤ indicates that, as a result of concluding the cash flow lease, payment/receipt of leasing charges are executed between lessee 39 and lessor 14.
⑥ indicates the existing cash outflow that lessee 39 is paying to asset manager 1 to service capital raising product 46.

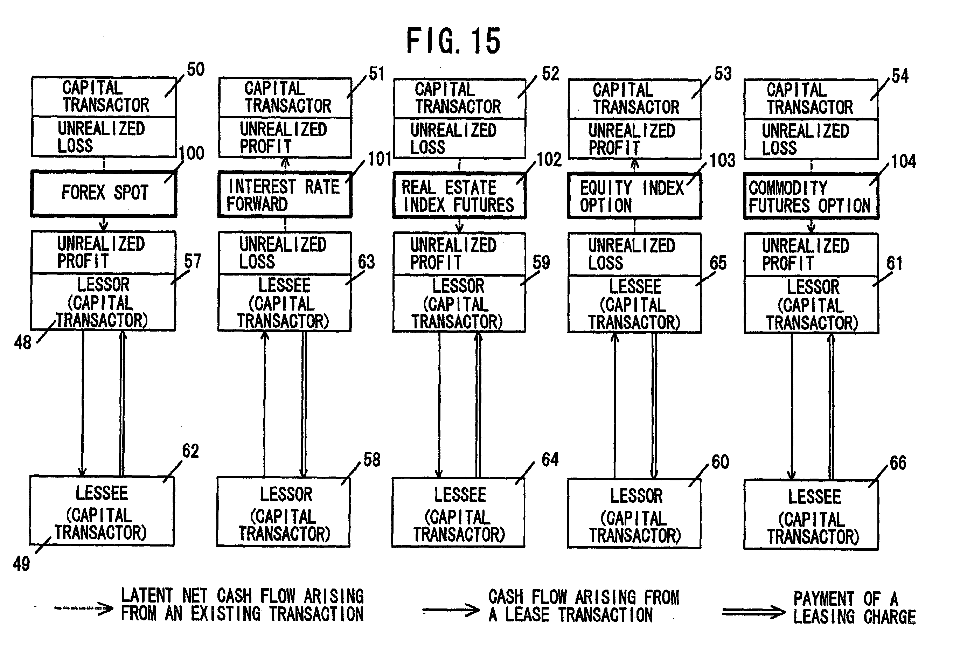

Also, FIG. 15 is an embodiment of the cash flow lease of a capital transaction product, illustrating cases in which a foreign exchange product, a financial derivative product, a real estate derivative product or a commodity derivative product is a lease item.

Herein, capital transactor 48 is carrying an unrealized profit of forex spot transaction 100 with capital transactor 50. As a result of concluding with capital transactor 49 a cash flow lease that utilizes an unrealized profit, capital transactor 48 (i.e. lessor 57) has leased the unrealized profit of said product to capital transactor 49 (i.e. lessee 62), while in return, lessee 62 has paid leasing charges to lessor 57.

Similarly, lessee 63 and lessor 58, lessor 59 and lessee 64, lessee 65 and lessor 60, and lessor 61 and lessee 66 have executed payment and receipt of the cash flow as well as the leasing charges related to lease transactions respectively concerning 'an unrealized loss that lessee 63 is carrying vis-à-vis capital transactor 51 regarding interest rate forward transaction 101,' 'an unrealized profit that lessor 59 is carrying vis-à-vis capital transactor 52 regarding real estate index futures transaction 102,' 'an unrealized loss that lessee 65 is carrying vis-à-vis capital transactor 53 regarding equity index option transaction 103,' and 'an unrealized profit that lessor 61 is carrying vis-à-vis capital transactor 54 regarding commodity futures option transaction 104.'

Additionally, in the drawings of the present invention, any number of capital transactors, depending on the actual product, may be acting as a counterparty for an existing transaction of a capital transactor that becomes a lessor or lessee. Also, as to products listed in a derivatives exchange or a securities exchange among capital transaction products, although each exchange is acting as a counterparty of a capital transactor, because each capital transactor is substantially carrying an opposite position with one or more other capital transactors through the exchange, the counterparty shall be described as another capital transactor in each drawing.

Incidentally, the term 'latent net cash flow arising from a capital transaction product' shall mean any theoretical cash inflow or outflow produced on the assumption that an existing capital transaction position has been dissolved through means such as a net settlement when the lease transaction has come into effect. Therefore, if the carried position shows an unrealized profit, the term shall mean latent cash inflow, while if the carried position shows an unrealized loss, the term shall mean latent cash outflow.

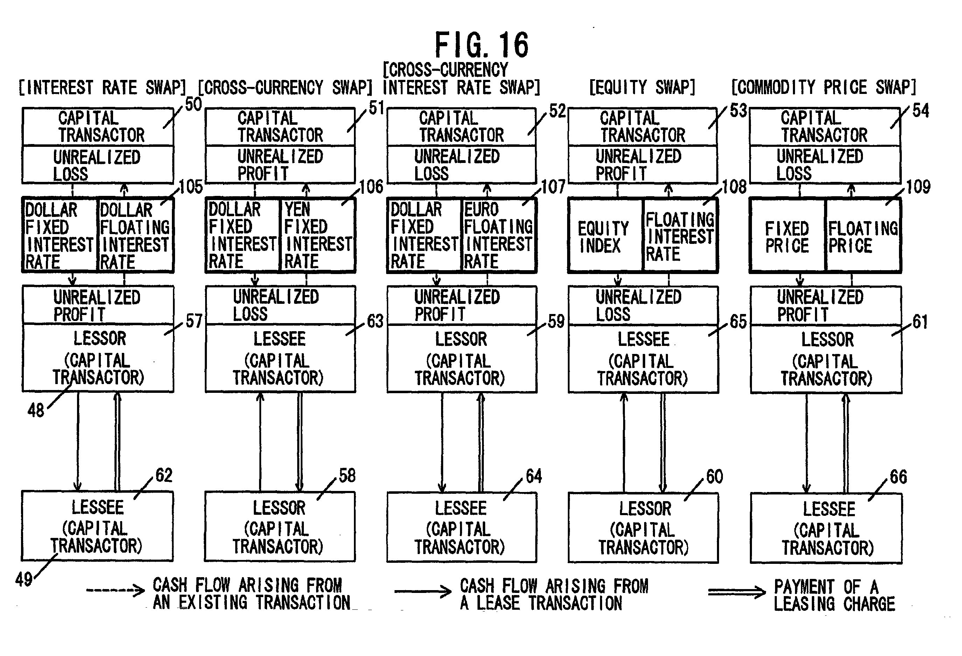

FIG. 16 is another embodiment of the cash flow lease of a capital transaction product, illustrating cases in which swap products are lease items.

Herein, capital transactor 48 is carrying an unrealized profit of interest rate swap transaction 105 with capital transactor 50. As a result of concluding with capital transactor 49 a cash flow lease that utilizes an unrealized profit, capital transactor 48 (i.e. lessor 57) has leased the unrealized profit of said product to capital transactor 49 (i.e. lessee 62), while in return, lessee 62 has paid leasing charges to lessor 57.

Similarly, lessee 63 and lessor 58, lessor 59 and lessee 64, lessee 65 and lessor 60, and lessor 61 and lessee 66 have executed payment and receipt of the cash flow as well as the leasing charges related to lease transactions respectively concerning 'an unrealized loss that lessee 63 is carrying vis-à-vis capital transactor 51 regarding cross-currency swap transaction 106,' 'an unrealized profit that lessor 59 is carrying vis-à-vis capital transactor 52 regarding cross-currency interest rate swap transaction 107,' 'an unrealized loss that lessee 65 is carrying vis-à-vis capital transactor 53 regarding equity swap transaction 108,' and 'an unrealized profit that lessor 61 is carrying vis-à-vis capital transactor 54 regarding commodity price swap transaction 109.'

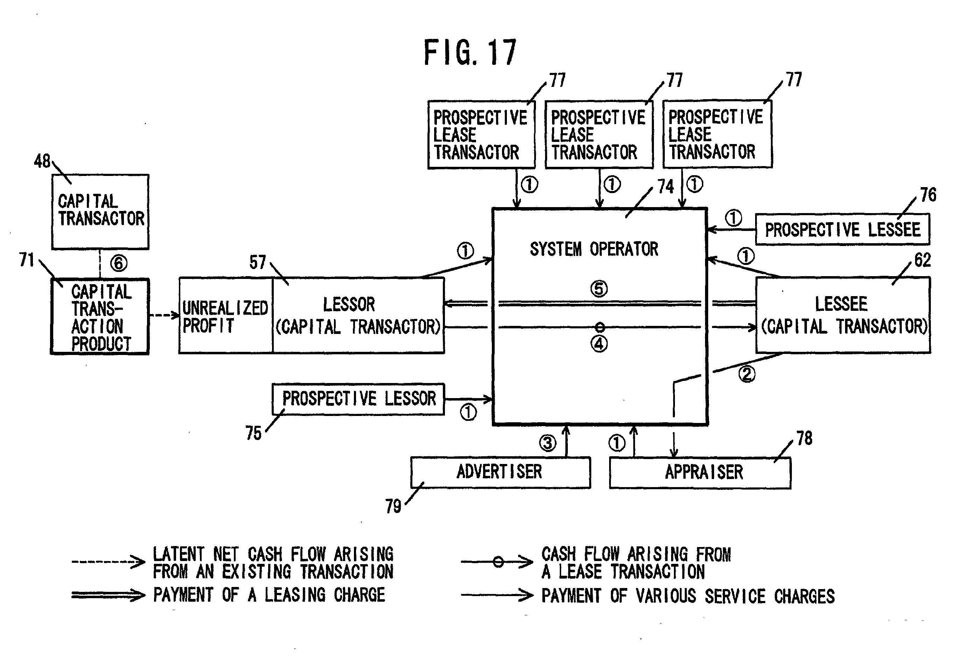

FIG. 17 is an embodiment of the flows of funds and the fee collection scheme in a cash flow lease of a capital transaction product, illustrating a case in which a lease transaction utilizes the unrealized profit of an object product.

In the diagram,
① indicates that lessor 57, who is a capital transactor, lessee 62, who is also a capital transactor, prospective lessor 75, prospective lessee 76, prospective lease transactors 77 and appraiser 78 pay service charges, line charges and/or the like to system operator 74.
② indicates that lessee 62 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment/receipt of the unrealized profit of capital transaction product 71 is executed between lessor 57 and lessee 62.
⑤ indicates that, as a result of concluding the cash flow lease, payment/receipt of leasing charges are executed between lessor 57 and lessee 62.
⑥ indicates the latent net cash flow arising from the existing position that lessor 57 is carrying vis-à-vis another capital transactor 48 regarding capital transaction product 71.

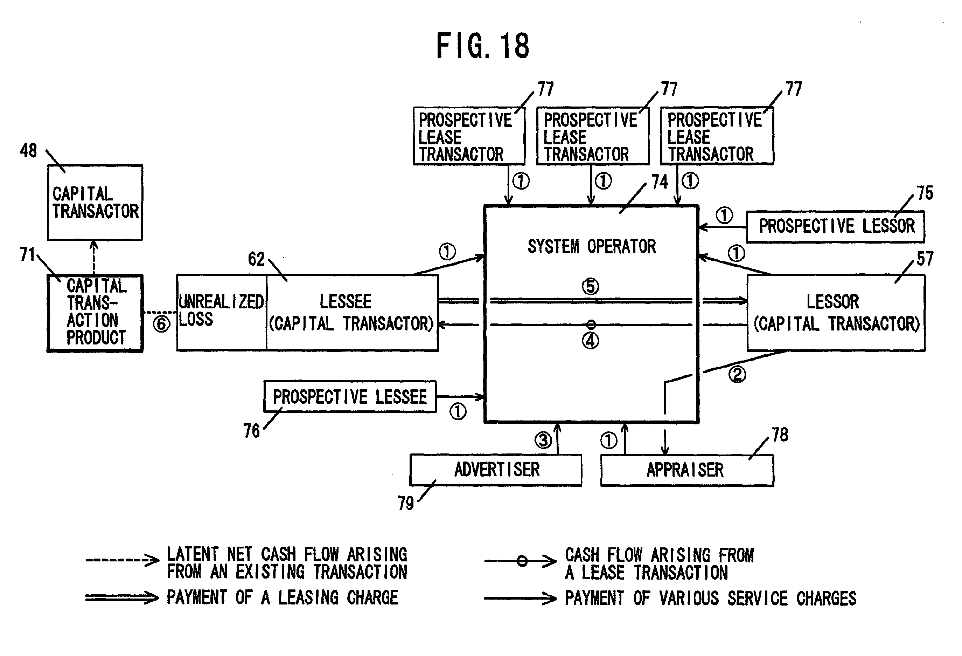

FIG. 18 is another embodiment of the flows of funds and the fee collection scheme in a cash flow lease of a capital transaction product, illustrating a case in which a lease transaction targets the unrealized loss of an object product.

In the diagram,
① indicates that lessee 62, who is a capital transactor, lessor 57, who is also a capital transactor, prospective lessee 76, prospective lessor 75, prospective lease transactors 77 and appraiser 78 pay service charges, line charges and/or the like to system operator 74.
② indicates that lessor 57 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment/receipt of the replenishing cash flow that targets the unrealized loss of capital transaction product 71, is executed between lessee 62 and lessor 57.
⑤ indicates that, as a result of concluding the cash flow lease, payment/receipt of leasing charges are executed between lessee 62 and lessor 57.
⑥ indicates the latent net cash flow arising from the existing position that lessee 62 is carrying vis-à-vis another capital transactor 48 regarding capital transaction product 71.

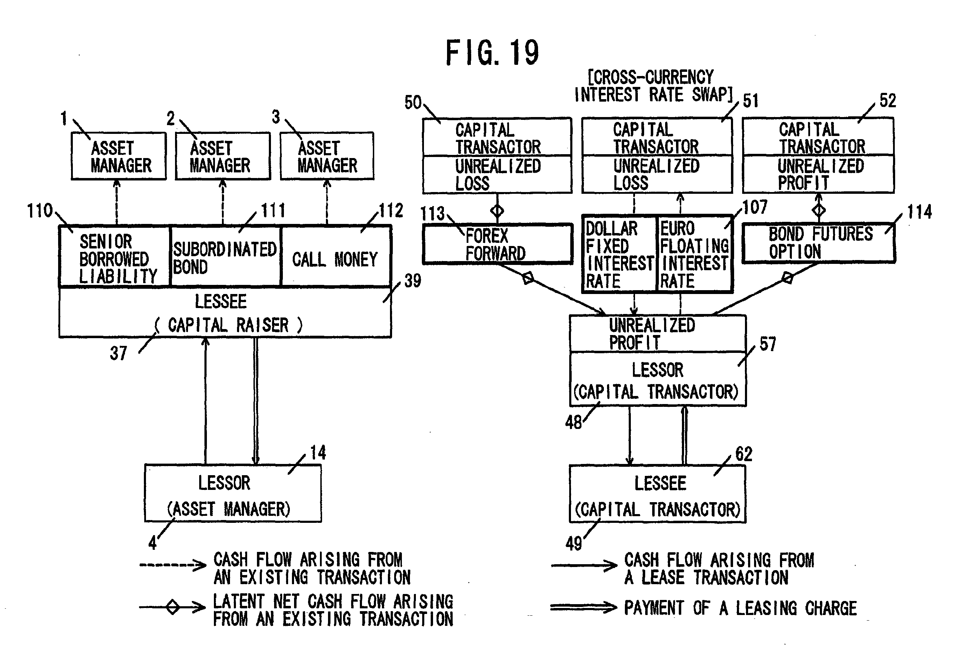

Besides, FIG. 19 shows embodiments of a cash flow lease by tie-in of capital raising products or capital transaction products.

In the left view, capital raiser 37 is servicing senior borrowed liability 110 from asset manager 1, subordinated bond 111 being held by asset manager 2, and call money 112 from asset manager 3, and is paying cash outflow respectively thereto. As a result of concluding a cash flow lease with asset manager 4, capital raiser 37 (i.e. lessee 39) has been leased by asset manager 4 (i.e. lessor 14) replenishing cash flow that targets the tie-in of said products, while in return, lessor 14 has been paid a leasing charge or leasing charges by lessee 39.

In the right view, capital transactor 48 is carrying 'an unrealized profit of forex forward transaction 113 with capital transactor 50,' 'an unrealized profit of cross-currency interest rate swap transaction 107 with capital transactor 51,' and 'an unrealized loss of bond futures option transaction 114 with capital transactor 52' to have an unrealized profit on a net basis. As a result of concluding with capital transactor 49 a cash flow lease that utilizes an unrealized profit, capital transactor 48 (i.e. lessor 57) has leased said net unrealized profit to capital transactor 49 (i.e. lessee 62), while in return, lessee 62 has paid leasing charges to lessor 57.

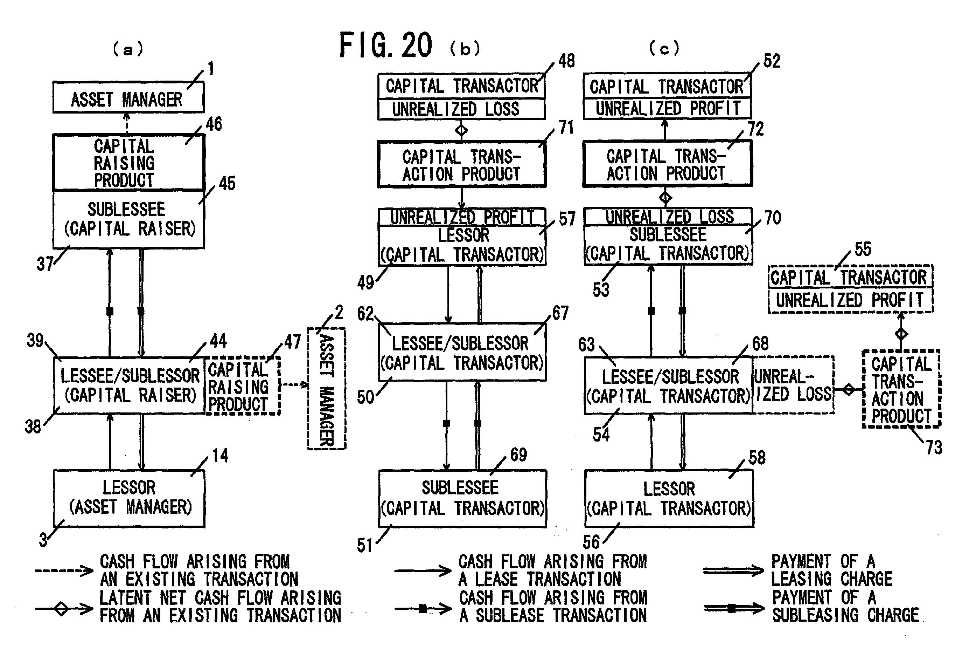

Moreover, FIG. 20 shows embodiments of a sublease transaction of a capital raising product or a capital transaction product.

In view (a) in the diagram, a cash flow lease is already in effect between capital raiser 38 and asset manager 3. That is, asset manager 3 (i.e. lessor 14) has leased to capital raiser 38 (i.e. lessee 39) replenishing cash flow which targets capital raising product 47 that lessee 39 is servicing and that asset manager 2 is holding, while in return, lessee 39 is paying a leasing charge or leasing charges to lessor 14. Thereafter, a sublease transaction has come into effect between lessee 39 and capital raiser 37 servicing capital raising product 46 that asset manager 1 is holding. As a result thereof, lessee 39 (i.e. sublessor 44) has subleased said replenished cash flow to capital raiser 37 (i.e. sublessee 45), while in return, sublessee 45 has paid a subleasing charge or subleasing charges to sublessor 44.

In view (b), a cash flow lease that utilizes an unrealized profit is already in effect between capital transactor 49 and capital transactor 50. That is, capital transactor 49 (i.e. lessor 57) has leased to capital transactor 50 (i.e. lessee 62) the unrealized profit that that lessor 57 is carrying vis-à-vis capital transactor 48 regarding capital transaction product 71, while in return, lessee 62 is paying leasing charges to lessor 57. Thereafter, a sublease transaction has come into effect between lessee 62 and capital transactor 51. As a result thereof, lessee 62 (i.e. sublessor 67) has subleased said unrealized profit to capital transactor 51 (i.e. sublessee 69), while in return, sublessee 69 has paid subleasing charges to sublessor 67.

In view (c), a cash flow lease that targets an unrealized loss is already in effect between capital transactor 54 and capital transactor 56. That is, capital transactor 56 (i.e. lessor 58) has leased to capital transactor 54 (i.e. lessee 63) replenishing cash flow which targets the unrealized loss that lessee 63 is carrying vis-à-vis capital transactor 55 regarding capital transaction product 73, while in return, lessee 63 is paying leasing charges to lessor 58. Thereafter, a sublease transaction has come into effect between lessee 63 and capital transactor 53. As a result thereof, lessee 63 (i.e. sublessor 68) has subleased said replenished cash flow to capital transactor 53 (i.e. sublessee 70) that is carrying an unrealized loss vis-à-vis capital transactor 52 regarding capital transaction product 72, while in return, sublessee 70 has paid subleasing charges to sublessor 68.

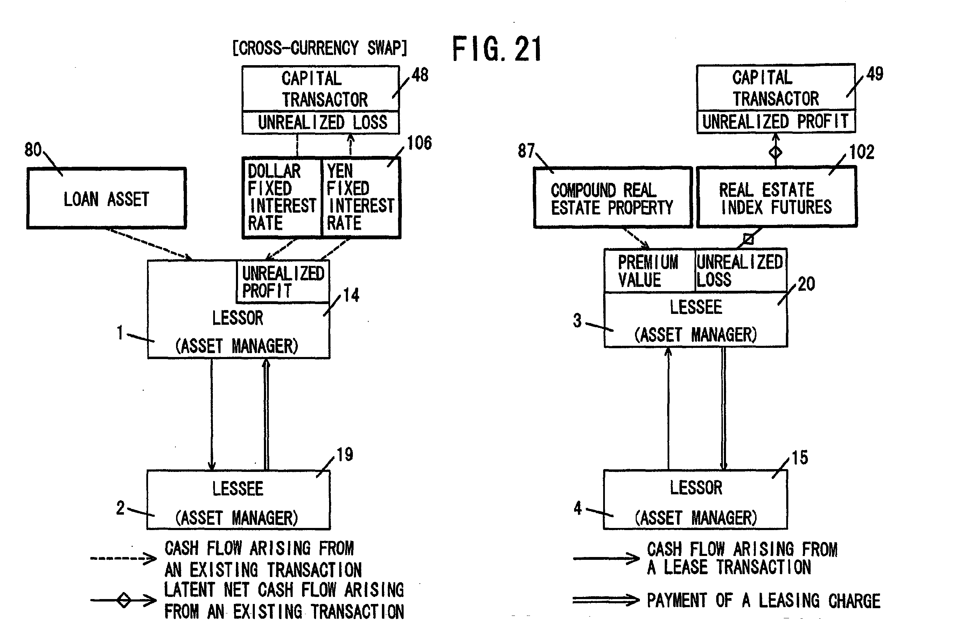

Besides, FIG. 21 shows embodiments of a cash flow lease by tie-in of an asset management product and a capital transaction product.

In the left view, asset manager 1 is holding loan asset 80 and receiving cash inflow therefrom; and is carrying an unrealized profit of cross-currency swap transaction 106 with capital transactor 48. As a result of concluding a cash flow lease with asset manager 2, asset manager 1 (i.e. lessor 14) has leased to asset manager 2 (i.e. lessee 19) the tie-in of said cash inflow from loan asset 80 and said unrealized profit of cross-currency swap transaction 106, while in return, lessee 19 has paid leasing charges to lessor 14.

In the right view, asset manager 3 is holding compound real estate property 87 and receiving cash inflow therefrom; and is carrying an unrealized loss of real estate index futures transaction 102 with capital transactor 49. As a result of concluding a cash flow lease with asset manager 4, asset manager 3 (i.e. lessee 20) has been leased by asset manager 4 (i.e. lessor 15) replenishing cash flow that targets the tie-in of the premium value of compound real estate property 87 and said unrealized loss of real estate index futures transaction 102, while in return, lessor 15 has been paid leasing charges by lessee 20.

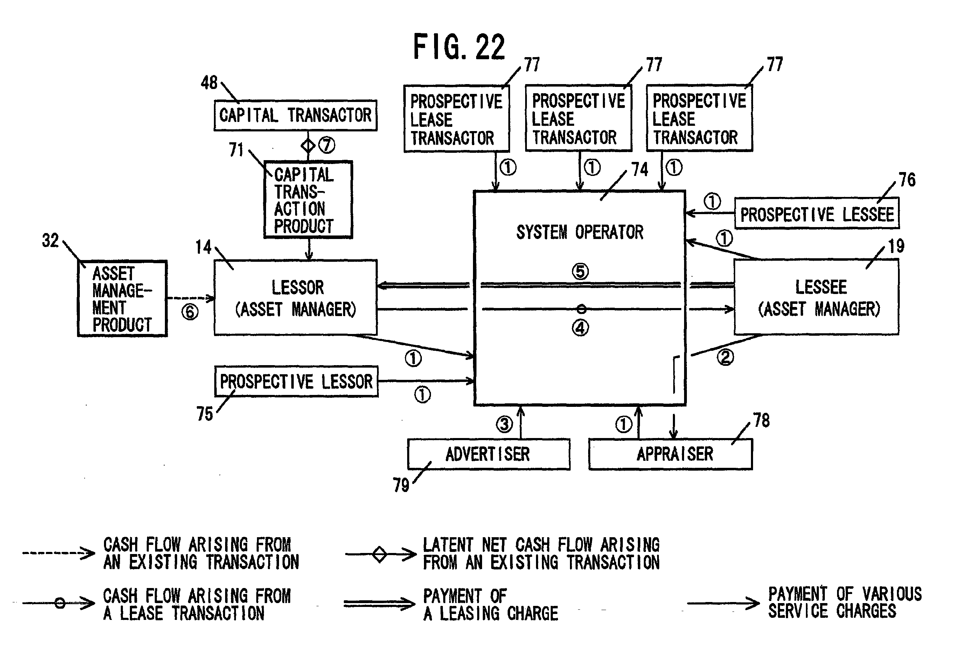

FIG. 22 is an embodiment of the flows of funds and the fee collection scheme in a cash flow lease by tie-in of an asset management product and a capital transaction product.

In the diagram,
① indicates that lessor 14, who is an asset manager, lessee 19, who is also an asset manager, prospective lessor 75, prospective lessee 76, prospective lease transactors 77 and appraiser 78 pay service charges, line charges and/or the like to system operator 74.
② indicates that lessee 19 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment and receipt of the cash inflow arising from asset management product 32 and the unrealized profit of capital transaction product 71, are executed between lessor 14 and lessee 19 by tie-in.
⑤ indicates that, as a result of concluding the cash flow lease, payment/receipt of leasing charges are executed between lessor 14 and lessee 19.
⑥ indicates the existing cash inflow that lessor 14 is receiving from asset management product 32.
⑦ indicates the latent net cash flow arising from the existing position that lessor 14 is carrying vis-à-vis capital transactor 48 regarding capital transaction product 71.

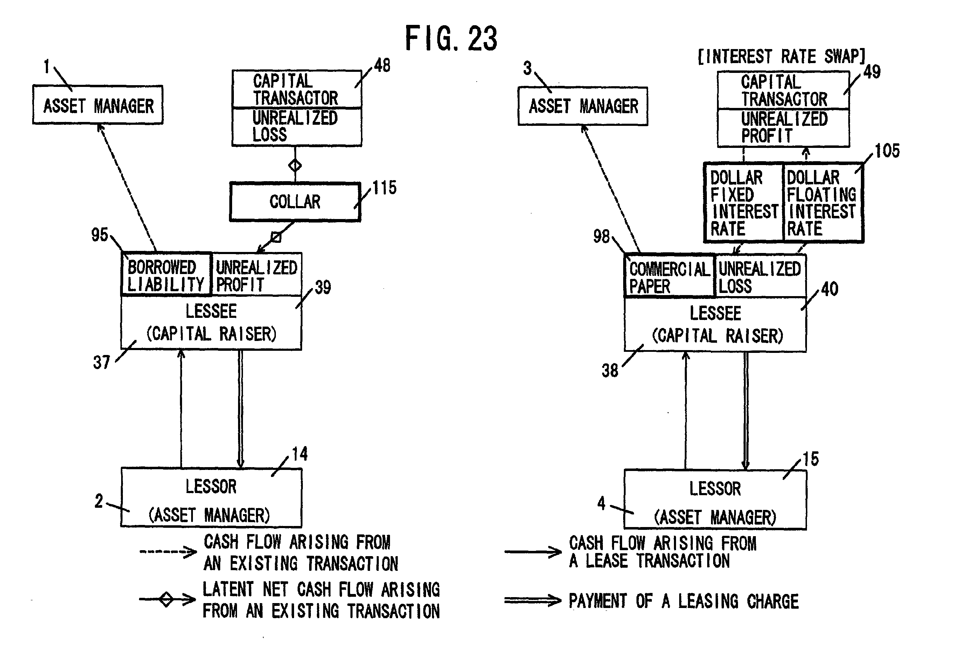

Next, FIG. 23 shows embodiments of a cash flow lease by tie-in of a capital raising product and a capital transaction product.

In the left view, capital raiser 37 is servicing borrowed liability 95 from asset manager 1 and paying cash outflow thereto; and is carrying an unrealized profit of collar transaction 115 with capital transactor 48. As a result of concluding a cash flow lease with asset manager 2, capital raiser 37 (i.e. lessee 39) has been leased by asset manager 2 (i.e. lessor 14) replenishing cash flow that targets the tie-in of borrowed liability 95 and said unrealized profit of collar transaction 115, while in return, lessor 14 has been paid leasing charges by lessee 39.

In the right view, capital raiser 38 is servicing commercial paper 98 being held by asset manager 3 and paying cash outflow thereto; and is carrying an unrealized loss of interest rate swap transaction 105 with capital transactor 49. As a result of concluding a cash flow lease with asset manager 4, capital raiser 38 (i.e. lessee 40) has been leased by asset manager 4 (i.e. lessor 15) replenishing cash flow that targets the tie-in of commercial paper 98 and said unrealized loss of interest rate swap transaction 105, while in return, lessor 15 has been paid leasing charges by lessee 40.

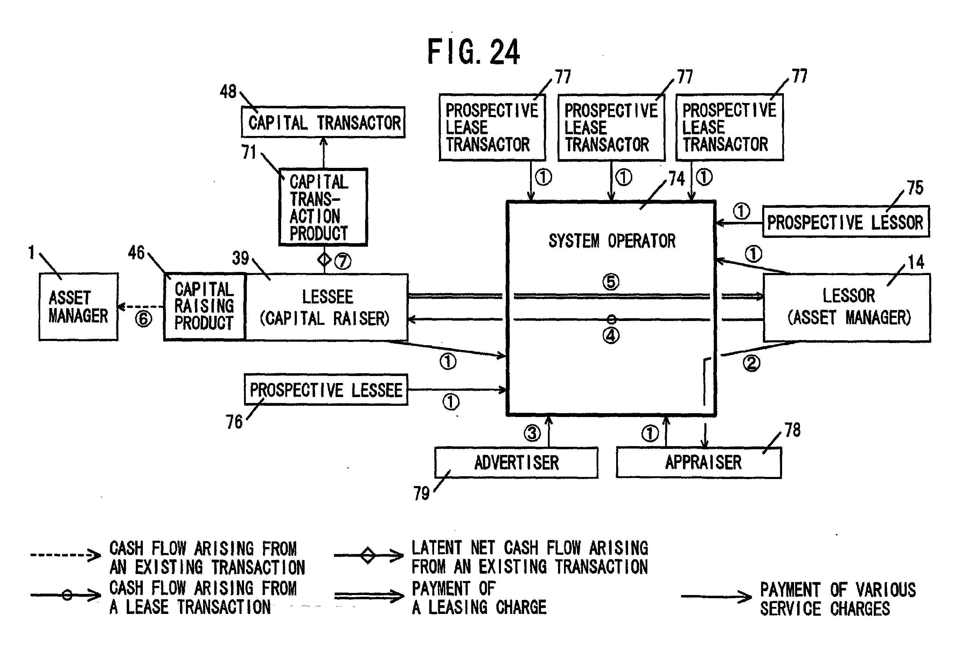

FIG. 24 is an embodiment of the flows of funds and the fee collection scheme in a cash flow lease by tie-in of a capital raising product and a capital transaction product.

In the diagram,
① indicates that lessee 39, who is a capital raiser, lessor 14, who is an asset manager, prospective lessee 76, prospective lessor 75, prospective lease transactors 77 and appraiser 78 pay service charges, line charges and/or the like to system operator 74.
② indicates that lessor 14 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment and receipt of the replenishing cash flows that target the tie-in of capital raising product 46 and the unrealized loss of capital transaction product 71, are executed between lessee 39 and lessor 14.
⑤ indicates that, as a result of concluding the cash flow lease, payment/receipt of leasing charges are executed between lessee 39 and lessor 14.
⑥ indicates the existing cash outflow that lessee 39 is paying to asset manager 1 to service capital raising product 46.
⑦ indicates the latent net cash flow arising from the existing position that lessee 39 is carrying vis-à-vis capital transactor 48 regarding capital transaction product 71.

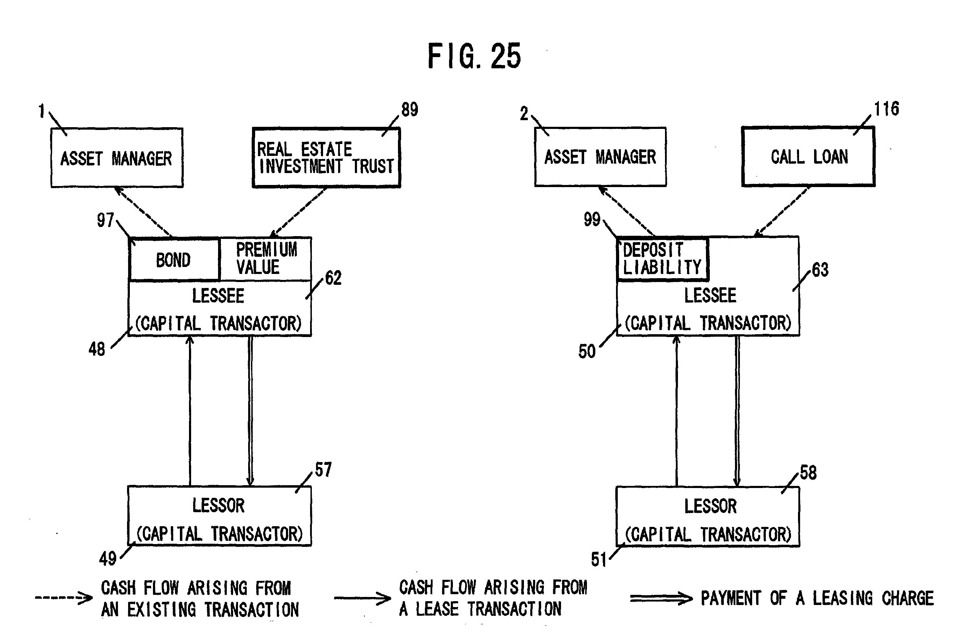

Also, FIG. 25 shows embodiments of a cash flow lease by tie-in of a capital raising product and an asset management product.

In the left view, capital transactor 48 is servicing bond 97 being held by asset manager 1 and paying cash outflow thereto; and is holding real estate investment trust 89 and receiving cash inflow therefrom. As a result of concluding a cash flow lease with capital transactor 49, capital transactor 48 (i.e. lessee 62) has been leased by capital transactor 49 (i.e. lessor 57) replenishing cash flow that targets the tie-in of bond 97 and the premium value of real estate investment trust 89, while in return, lessor 57 has been paid leasing charges by lessee 62.

In the right view, capital transactor 50 is servicing deposit liability 99 from asset manager 2 and paying cash outflow thereto; and is holding call loan asset 116 and receiving cash inflow therefrom. As a result of concluding a cash flow lease with capital transactor 51, capital transactor 50 (i.e. lessee 63) has been leased by capital transactor 51 (i.e. lessor 58) replenishing cash flow that targets the tie-in of deposit liability 99 and call loan asset 116, while in return, lessor 58 has been paid leasing charges by lessee 63.

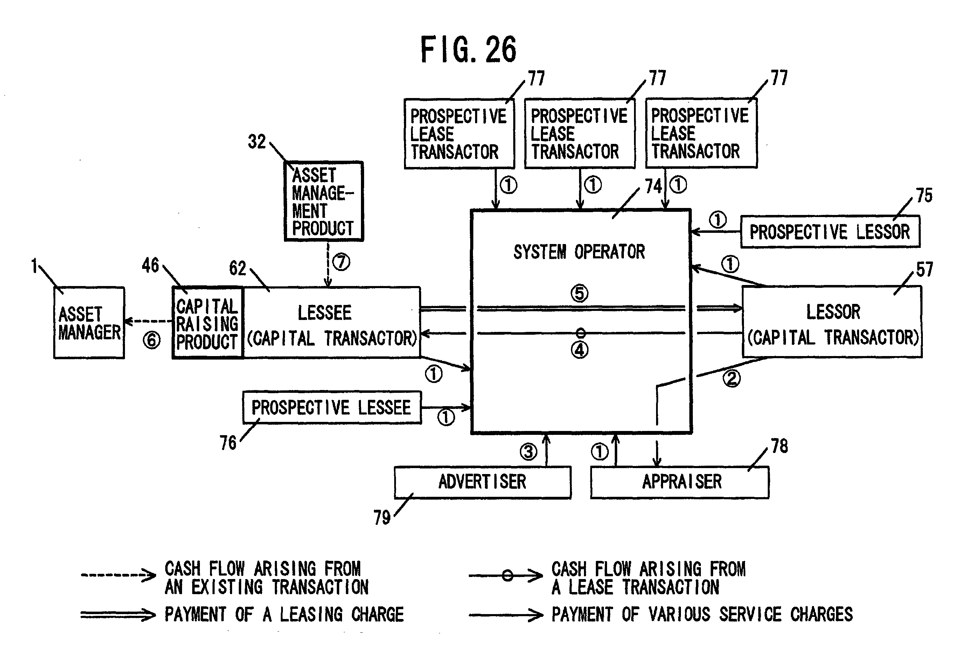

FIG. 26 is an embodiment of the flows of funds and the fee collection scheme in a cash flow lease by tie-in of a capital raising product and an asset management product.

In the diagram,
① indicates that lessee 62, who is a capital transactor, lessor 57, who is also a capital transactor, prospective lessee 76, prospective lessor 75, prospective lease transactors 77 and appraiser 78 pay service charges, line charges and/or the like to system operator 74.
② indicates that lessor 57 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment and receipt of the replenishing cash flows that target the tie-in of capital raising product 46 and asset management product 32, are executed between lessee 62 and lessor 57.
⑤ indicates that, as a result of concluding the cash flow lease, payment/receipt of leasing charges are executed between lessee 62 and lessor 57.
⑥ indicates the existing cash outflow that lessee 62 is paying to asset manager 1 to service capital raising product 46.
⑦ indicates the existing cash inflow that lessee 62 is receiving from asset management product 32.

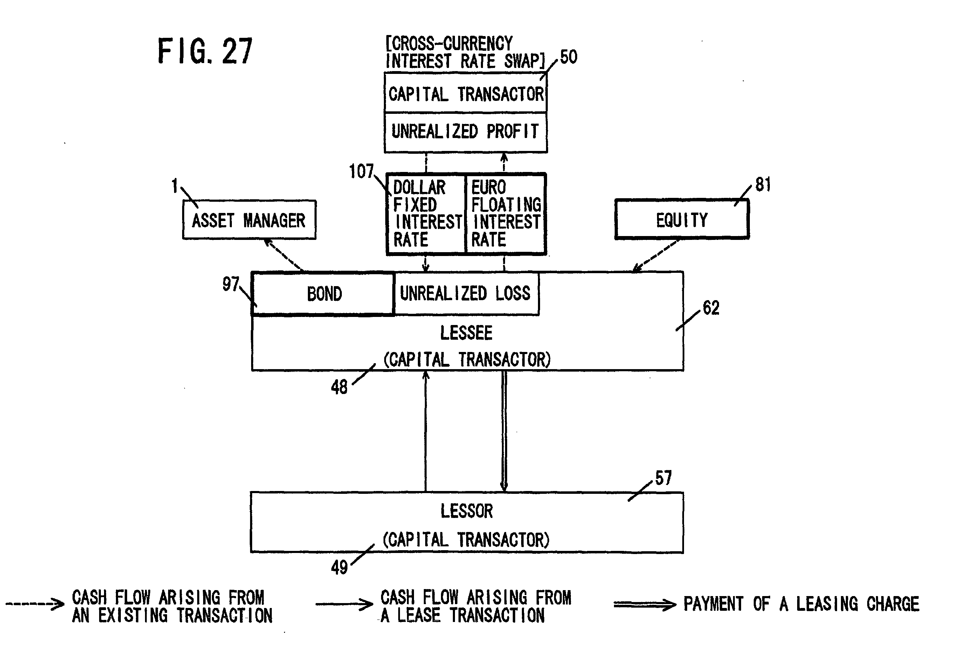

Furthermore, FIG. 27 is an embodiment of a cash flow lease by tie-in of an asset management product, a capital raising product and a capital transaction product.

Herein, capital transactor 48 is servicing bond 97 being held by asset manager 1 and paying cash outflow thereto; is carrying an unrealized loss of cross-currency interest rate swap transaction 107 with capital transactor 50; and is holding equity 81 and receiving cash inflow therefrom. As a result of concluding a cash flow lease with capital transactor 49, capital transactor 48 (i.e. lessee 62) has been leased by capital transactor 49 (i.e. lessor 57) replenishing cash flow that targets the tie-in of bond 97, said unrealized loss of cross-currency interest rate swap transaction 107, and equity 81, while in return, lessor 57 has been paid leasing charges by lessee 62.

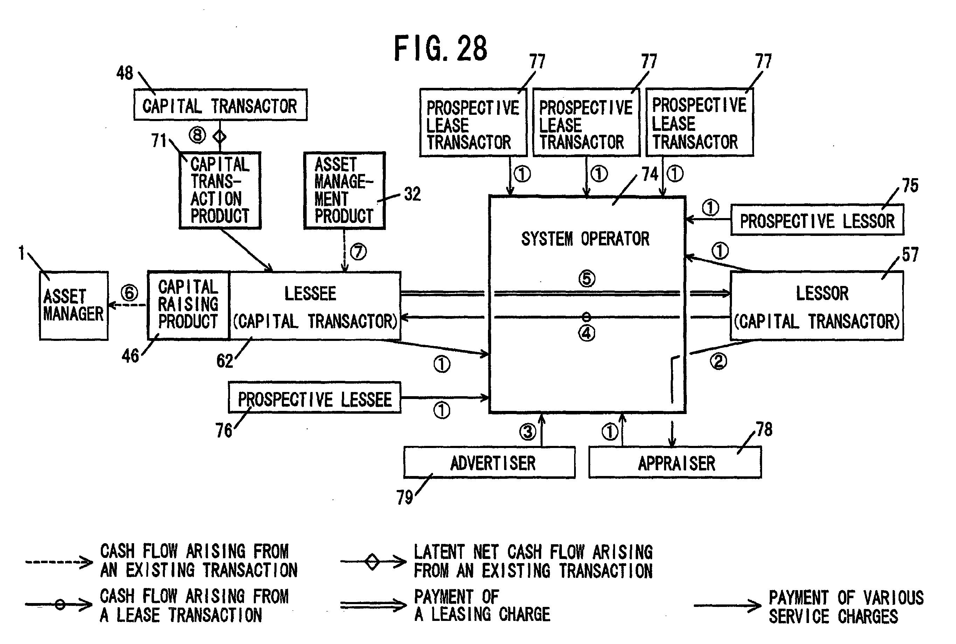

FIG. 28 is an embodiment of the flows of funds and the fee collection scheme in a cash flow lease by tie-in of an asset management product, a capital raising product and a capital transaction product.

In the diagram,
① indicates that lessee 62, who is a capital transactor, lessor 57, who is also a capital transactor, prospective lessee 76, prospective lessor 75, prospective lease transactors 77 and appraiser 78 pay service charges, line charges and/or the like to system operator 74.
② indicates that lessor 57 pays an appraisal fee to appraiser 78.
③ indicates that advertiser 79 pays system operator 74 an advertisement fee for insertion of a banner ad or a pop-up ad.
④ indicates that, as a result of concluding the cash flow lease, payment and receipt of the replenishing cash flows that target the tie-in of capital raising product 46, the unrealized profit of capital transaction product 71, and asset management product 32, are executed between lessee 62 and lessor 57.
⑤ indicates that, as a result of concluding the cash flow lease, payment/receipt of leasing charges are executed between lessee 62 and lessor 57.
⑥ indicates the existing cash outflow that lessee 62 is paying to asset manager 1 to service capital raising product 46.
⑦ indicates the existing cash inflow that lessee 62 is receiving from asset management product 32.
⑧ indicates the latent net cash flow arising from the existing position that lessee 62 is carrying vis-à-vis capital transactor 48 regarding capital transaction product 71.

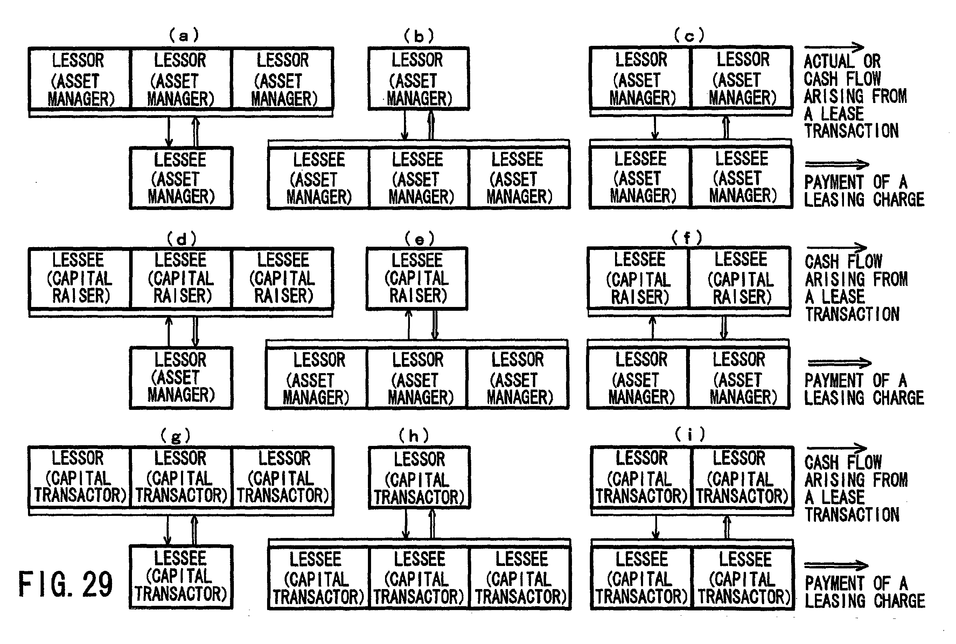

Moreover, FIG. 29 shows various lease transactions performed by a plurality of lessors and/or a plurality of lessees.

In the diagram,
(a) indicates that, in a cash flow lease or direct lease of an asset management product, a plurality of lessors, who are asset managers, are matched to a single lessee, who is also an asset manager.
(b) indicates that, in a cash flow lease or direct lease of an asset management product, a single lessor, who is an asset manager, is matched to a plurality of lessees, who are also asset managers.
(c) indicates that, in a cash flow lease or direct lease of an asset management product, a plurality of lessors, who are asset managers, are matched to a plurality of lessees, who are also asset managers.
(d) indicates that, in a cash flow lease of a capital raising product, a plurality of lessees, who are capital raisers, are matched to a single lessor, who is an asset manager.
(e) indicates that, in a cash flow lease of a capital raising product, a single lessee, who is a capital raiser, is matched to a plurality of lessors, who are asset managers.
(f) indicates that, in a cash flow lease of a capital raising product, a plurality of lessees, who are capital raisers, are matched to a plurality of lessors, who are asset managers.
(g) indicates that, in a cash flow lease of a capital transaction product, a plurality of lessors, who are capital transactors, are matched to a single lessee, who is also a capital transactor.
(h) indicates that, in a cash flow lease of a capital transaction product, a single lessor, who is a capital transactor, is matched to a plurality of lessees, who are also capital transactors.
(i) indicates that, in a cash flow lease of a capital transaction product, a plurality of lessors, who are capital transactors, are matched to a plurality of lessees, who are also capital transactors.

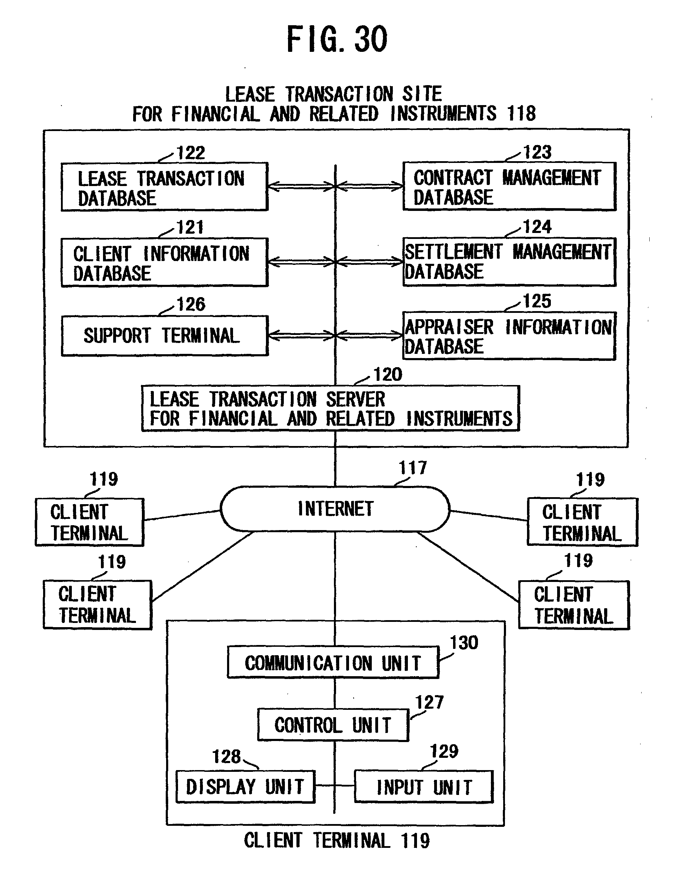

Now, the information technology side of the above-described embodiments will be explained in more detail by using a block diagram of FIG. 30:

First, the present system is arranged on the Internet 117; and comprises a lease transaction site for financial and related instruments 118 (hereinafter referred to as 'site 118') providing various lease transaction markets for financial instruments and/or quasi-financial instruments, and a plurality of client terminals 119 for performing various lease transactions for the purpose of asset management, capital raising and/or capital transactions in said markets.

Those who use client terminals 119 are asset managers, capital raisers, capital transactors and/or others, and these system users, by accessing said site 118 from their own client terminals 119, can conclude various lease transactions on a matching basis and/or execute various business accompanying the lease transactions.

Site 118 is for sequentially processing orders of various desired lease products from client terminals 119, for sequentially executing the settlement and administration business related to the lease transactions, and for appropriately distributing to client terminals 119 the various data necessary for the lease transactions; and comprises at least one lease transaction server for financial and related instruments 120 (hereinafter referred to as server 120), support terminal 126, client information database 121, lease transaction database 122, contract management database 123, settlement management database 124, appraiser information database 125, and a bus for connecting them.

Additionally, the present system uses ISO15022 for the electronic message format, ISO6166 for the securities identification numbering system, and ISO 9362 for the financial institution identification numbering system, as well as, for example Financial Information eXchange (FIX) for the protocol and eXtensible Markup Language (XML) for the description language of electronic messages, so that jobs from execution to transaction confirmation and settlement of various lease transactions can be electronically processed in a seamless manner 24 hours a day both domestically and abroad.

Server 120 works by the execution of a central processing unit in a workstation, and in conjunction with programs stored in memory and/or with the like; and is equipped to function as a WWW server and/or a database server. The former is a web management function, via the Internet 117, for managing access from client terminals 119 to perform authentication processing; for providing client terminals 119 with various web pages that appear on screens and that users interface with; and for exchanging information with client terminals 119. And the latter is a database management function for accessing client information database 121, lease transaction database 122, contract management database 123, settlement management database 124 and/or appraiser information database 125; for searching for data on the databases; for reading out the data; and for writing data to the databases. Moreover, these databases are stored in the memory or on a hard disc device in the workstation, and/or in the like.

Support terminal 126 is a terminal with which the system operator manages server 120 and the databases. Using support terminal 126, the operator can monitor implementation status of lease transactions and business accompanying the lease transactions on all client terminals 119, and can exchange messages with each client terminal 119 utilizing an e-mail function of support terminal 126.

Client terminal 119 is a device such as a personal computer, a mobile telephone equipped with a liquid crystal display, a personal digital assistant and/or a pager; and comprises control unit 127, display unit 128, input unit 129, communication unit 130 and the like. Control unit 127 comprises a processor, memory and the like; and stores operation programs, including a browser, for lease transactions. Display unit 128 and input unit 129 respectively display and input various data and instructions, and communication unit 130 communicates with other devices on the Internet 117. Utilizing e-mail functions of client terminals 119, the users can exchange messages with the operator and with other client terminals 119.

Lease transaction database 122 stores names and issues, types and attributes, terms and conditions, and/or the like of asset management products, capital raising products and/or capital transaction products that are objects of lease transactions; and also stores, by product, details of let orders and hire orders, results of matching, and/or information on lease transaction-related events during lease periods such as exercise of various rights or fulfillment of various obligations, together with their histories.

Contract management database 123 stores various agreements in which digital signatures have been entered as well as electronic master agreements that are models thereof; various reports and disclosures respectively to the authorities and to the general public in which digital signatures have been entered as well as electronic master reports and disclosures that are models thereof; and/or the like, and also stores various data generated in accordance with the progress of document preparation processing, together with their histories.

Settlement management database 124 stores funds account numbers, securities account numbers and/or the like of users of the present system, and also stores various data generated in accordance with the progress of inter-account funds transfer processing and/or inter-account securities transfer processing between and among the users, together with their histories.

Appraiser information database 125 stores self-introduction materials containing profiles and appraisal fee scales of appraisers collected from themselves, and also stores various reference and/or proposal data concerning individual lease items.

Moreover, client information database 121 stores the following information:
(a) Individual names and/or corporate names of users of the present system, individual section names in case of the latter, contact information including e-mail addresses, IDs and passwords;
(b) Credit ratings, stock ratings, various financial statements and/or various financial variables of users; and/or
(c) Asset management policies and objectives in the case in which users are asset managers, capital raising policies and objectives in the case in which they are capital raisers, and/or capital transaction policies and objectives in the case in which they are capital transactors.

Additionally, said ID is a code number or user name allocated to each user, while said password is authentication information that is required when a user accesses server 120. Server 120 identifies an accessing user by an ID, and authenticates the accessing user by the combination of the ID and the password.

Now, the methods of matching a let demand and a hire demand according to the present system include an auction mode and a negotiation mode.

The auction mode is utilized, for example, in cases in which an asset manager, a capital raiser or a capital transactor to be a counterparty of a lease transaction is originally unspecified and orders are matched basically according to the principle of balance of supply and demand. The auction mode is effective on occasions on which a lease item is a well-recognized product.

On the other hand, the negotiation mode is utilized, for example, in cases in which a counterparty of a lease transaction is originally specified, and orders are matched under an environment in which the principle of balance of supply and demand does not act directly. The mode is effective on occasions on which a lease item is a tie-in of a plurality of products, or is a capital transaction product with complicated cash flow.

In the case of said auction mode, a prospective lessor or a prospective lessee that desires an exhibition (hereinafter referred to as an 'exhibitor') first starts up the operation program stored in control unit 127 of his or her client terminal 119 to establish a session with site 118. Next, server 120 sends a top page for login to client terminal 119 of the exhibitor, who inputs an ID and a password in the page and sends it to server 120.

Then, server 120 receives the page, accesses client information database 121, and determines whether or not the combination of the ID and the password is stored therein. If it is stored therein, server 120 sends the exhibitor a menu page, on which he or she can choose to participate in a lease transaction; to negotiate on a lease transaction; to inquire about his or her agreement; to inquire about his or her funds account; to inquire about his or her securities account; to peruse appraiser data; to view market information; or to report his or her event. Here, the exhibitor chooses to participate in a lease transaction, and then server 120 sends the exhibitor an order placement page for inputting details of an order.

Next, the exhibitor receives the order placement page, and then inputs therein a name or issue, a type and attribute, and terms and conditions of the asset management product, capital raising product or capital transaction product that he or she desires to exhibit; whether the desired lease transaction is letting or hiring; acceptable creditworthiness of his or her transacting counterparties; a desired lease value; a desired lease volume in the case of a unit price product; a desired lease period; a desired exhibition period as well as acceptability of an automatic extension or an early termination of the exhibition; and/or various requests to bidders. Also, the exhibitor specifies a desired leasing charge rate as provisional terms. After confirming the contents of the order, the exhibitor sends the page to server 120. Additionally, the provisional terms, which may be an indication of a specific uniform rate or of a range with an upper and/or lower limit, may be arbitrarily decided by the exhibitor.

Server 120 receives the order from the exhibitor, stores it in an exhibition list on lease transaction database 122, and then sends the exhibitor an order confirmation page for reporting the stored contents thereto, on which the exhibitor confirms the contents of his or her exhibition.

Here, server 120 accesses client information database 121; searches for system users' policies and objectives, stored therein, on asset management, capital raising or capital transactions; and specifies prospective lease transactors whose policies and objectives are in line with said exhibition product. Then, the system operator converts part of the above-described order confirmation page into an electronic document format or the like, and simultaneously distributes it as a preliminary prospectus to the specified prospective lease transactors via support terminal 126.

Next, a prospective lessor or a prospective lessee that has received the preliminary prospectus, has become interested in the exhibition product, and then has decided to participate in the bidding (hereinafter referred to as a 'bidder'), on his or her own order placement page, specifies the exhibition product, and also specifies whether it is a limit order or an order without limit; his or her desired leasing charge rate vis-à-vis said provisional terms in the case of a limit order; and/or his or her desired lease volume in the case of a unit price product. After confirming the contents of the order, the bidder sends the page to server 120. Additionally, the desired leasing charge rate that a bidder specifies may be at a level that does not take the provisional terms into account, but in general, the more the desired rate is in line with the provisional terms, the more likely the bid will be successful.

Server 120 receives the order from the bidder, stores it in a bidding list on lease transaction database 122, and then sends the bidder an order confirmation page for reporting the stored contents thereto, on which the bidder confirms the contents of his or her order.

Server 120 matches an exhibitor and a bidder by executing processing as described below:

First, concerning orders without limit from bidders, server 120 makes successful the entire bidding volumes within the desired lease volume of the exhibitor. Also, concerning limit orders from bidders, server 120 extracts therefrom the orders whose desired leasing charge rates are within the range of the provisional terms of the exhibition product, and the orders whose desired leasing charge rates are beyond the range of the provisional terms because they are even more favorable to the exhibitor than the provisional terms; and then makes them successful in the order of how much the desired leasing charge rates favor the exhibitor.

Next, server 120 stores the contents of the successful bids in lease transaction database 122 and, based on the data, updates the remaining volumes on the lists vis-à-vis the desired lease volume of the exhibitor. Then, at the stage where subsequent successful bid volumes have been accumulated and then the total successful bid volume has reached the desired lease volume of the exhibitor, server 120 sets as fixed terms the desired leasing charge rate that most favors a bidder out of the rates of the successful bid orders, thereby concluding the lease transaction.

At the point when the entire volume of the exhibition product has been successfully bid upon, the system operator prepares by amending said preliminary prospectus, a successful bid notice, which describes the details of the successfully bid upon product including the fixed leasing charge rate. It sends the successful bid notice to the exhibitor and the successful bidder or bidders via support terminal 126, and then the respective parties finally confirm this, thereby ending the transaction confirmation. At this stage, the successful bid notice may function as the final prospectus.

Additionally, although the above describes an auction mode that finally sets leasing charge rates as a uniform value, a style in which leasing charge rates vary at each matching, bidder by bidder, to make successful bids in the order of how much the rates favor the exhibitor, may also be employed in practice.

Now, in the case of the negotiation mode, a prospective lessor or a prospective lessee (hereinafter referred to as a 'requesting party') chooses, on said menu page, to negotiate on a lease transaction, and then server 120 sends the requesting party a transaction negotiation page, in which details of his or her transaction negotiation are to be input.

Next, the requesting party receives the transaction negotiation page; and inputs or specifies therein information for specifying one prospective lessor or lessee to be a negotiation counterparty (hereinafter referred to as a 'requested party'), or information for narrowing down requested parties to a specific plurality of persons. The requesting party also inputs or specifies therein, as specific terms that he or she desires from the requested party, a name or issue, a type and attribute, and terms and conditions of the asset management product, capital raising product or capital transaction product; whether the desired lease transaction is letting or hiring; a desired lease value; a desired lease volume in the case of a unit price product; a desired lease period; various requests to the requested party; and/or a desired leasing charge rate, and sends the page to server 120.

Then, server 120, having received the transaction negotiation page, adds the ID of the requesting party to the e-mail address of the requested party specified by the requesting party, and sends the page to the address. Next, the requested party receives the page; confirms the contents of the proposal from the requesting party; selects conclusion, non-conclusion or negotiation as a stance thereon; and then returns the page to the requesting party.

If the requested party chooses not to conclude the transaction out of the choices, the transaction is obviously not concluded. On the other hand, if the requested party chooses to conclude the transaction, server 120 as well as the requesting party is notified of the conclusion of the transaction. Moreover, if the requested party chooses to negotiate, he or she can counterpropose the type and attribute, and the terms and conditions of the desired lease product; the desired lease value; the desired lease volume in the case of a unit price product; the desired lease period; and/or the desired leasing charge rate. At this point, the requested party (hereinafter referred to as the 'new requesting party') converts the received transaction negotiation page into the page for reply; revises the desired lease terms on this page; and then returns it as a new proposal to the requesting party (hereinafter referred to as the 'new requested party'). In this way, the new requested party and the new requesting party search for a point of contact for a negotiated lease transaction.

Contract management database 123 stores electronic master agreements by product for: general cash flow leases, cash flow leases utilizing discount values, cash flow leases targeting premium values, return style of direct leases, or non-return style of direct leases of asset management products; redemption-deceleration style of cash flow leases, redemption-acceleration style of cash flow leases, or retirement-by-repurchase style of cash flow leases of capital raising products; cash flow leases utilizing unrealized profits, or cash flow leases targeting unrealized losses of capital transaction products; various sublease transactions or various lease transactions by tie-in, which are applied styles of the above-described lease transactions; and/or assignment to third parties or premature cancellation of lease agreements.

As used in this context, the term 'electronic master agreement' shall mean an electronic document prepared by combining an electronic form with input data describing items and conditions (hereinafter respectively referred to as general items and general conditions) commonly used in each transaction style or in each product type. Moreover, the term 'electronic form' shall mean electronic data converted from an ordinary paper-based form for a contract, and comprises of a field in which detailed contents of an agreement as well as addresses and names of contracting parties are to be input, and a field in which digital signatures of the contracting parties are to be entered.

In the electronic master agreement in accordance with the present system, although general items and general conditions are input in predetermined writing frames in an electronic form, a field in which items and conditions that vary according to individual lease agreements (hereinafter respectively referred to as additional items and additional conditions) are to be input, and a field in which a lessor, a lessee and the system operator to be contracting parties are to input their addresses and names and enter their digital signatures, are left blank.

In a letter of intent in accordance with the present invention, at the stage where transaction confirmation is finalized, server 120 accesses lease transaction database 122; reads out additional items and additional conditions stored therein such as the name or issue of the pertinent product, the special provisions of the lease agreement, the leasing charge rate, the concluded lease value, the concluded lease volume in the case of a unit price product, the lease period, the schedule until the entry into the lease agreement, the method of the due diligence of the product or the appraisal of the transaction value, the information regarding the appraiser in charge of the due diligence or appraisal, and/or the term of validity of the letter of intent; and writes them to the blank fields of said electronic master agreement.

Thereafter, in a lease transaction concluded by the auction mode, in the blank fields of a letter of intent between the operator and an exhibitor as well as a letter of intent between the operator and a successful bidder, the respective parties input their addresses and names and enter their digital signatures, whereby both the letters come into force. In practice, server 120 sends an exhibitor and a successful bidder respective letters of intent to which additional items and additional conditions have been written and in which the operator has entered its signature. Next, respectively, the exhibitor and the successful bidder enter their signatures and return the letters of intent to server 120, and then server 120 stores them in contract management database 123.

On the other hand, in a lease transaction concluded by the negotiation mode, in the blank fields of a letter of intent between a prospective lessor and a prospective lessee, the respective parties input their addresses and names and enter their digital signatures, whereby the letter comes into force. In practice, server 120 sends a prospective lessor a letter of intent to which additional items and additional conditions have been written, and then the prospective lessor receives it, enters his or her digital signature therein and returns it to server 120. Next, server 120 sends it to the prospective lessee, and then the prospective lessee receives it, enters his or her digital signature therein and returns it to server 120. Then, server 120 stores the signed letter of intent in contract management database 123.

The letter of intent is amended to be used as the lease agreement, which is the final agreement between the parties. That is, based on the result of the due diligence and/or appraisal, the system operator amends the additional items and additional conditions already input in the blank fields of the electronic master agreement, and then the respective parties input their addresses and names and enter their digital signatures in the amended agreement, whereby the lease agreement comes into force. Then, server 120 stores the signed lease agreement in contract management database 123. Also, the procedure during a lease period in the case in which a contracting party assigns his or her lease agreement to a third party, or in the case in which a contracting party cancels his or her lease agreement, may be similarly executed by using an electronic master agreement for assignment or cancellation.

Incidentally, in a direct lease of a non-security such as a deposit asset other than a certificate of deposit, a loan asset, land, a building or a compound real estate property, if it is technically difficult to involve a conduit such as a special purpose vehicle, a trust or a partnership to divide the asset into small lots, the lessor finds it necessary to assign to the lessee his or her existing contract on the non-security. The assignment procedure on such an occasion may also be executed by using the above-described electronic master agreement.

In contract management database 123, in addition to a letter of intent and a lease agreement themselves, various data generated from the beginning of preparation of a letter of intent until signing on a lease agreement is finalized, such as an identifier allocated to each agreement, digital signatures, and history data of procedures performed by the contracting parties and server 120, are sequentially stored in accordance with the progress of agreement processing. Thus, the originality of a document can be confirmed by comparing the document before a digital signature is entered and the document after it is entered.

Also, a digital signature to be entered in a letter of intent or lease agreement is prepared by using a secret key existing, for example, in an IC card held by a contracting party or inside his or her client terminal 119. Thus, a signer can be authenticated if the entered digital signature is decoded and verified.

Additionally, each of lessors and lessees can confirm at any time his or her own letter of intent or lease agreement stored in contract management database 123 by choosing, on said menu page, to inquire about his or her agreement.

Contract management database 123 may also store electronic master reports and electronic master disclosures for lease transactions respectively required to be reported to the authorities and to be disclosed to the general public, on which general items and general conditions corresponding to each transaction style or to each product type, and to each reporting or disclosing destination, are described. At the stage where signing on a lease agreement is finalized, server 120 accesses lease transaction database 122; reads out additional items and additional conditions stored therein such as the name or issue of the pertinent product, the special provisions of the lease agreement, the leasing charge rate, the concluded lease value, the concluded lease volume in the case of a unit price product, the lease period, and/or the information on the due diligence or appraisal; writes them to the blank fields of said electronic master report or disclosure; and sends it to the lessor or lessee.

Then, the lessor or lessee receives the report or disclosure; inputs his or her address and name and enters his or her digital signature in the blank fields thereon; and returns the report or disclosure to server 120. Next, server 120 enters an identifier of the lessor or lessee in electronic mail addresses of the authorities or the mass media that the lessor or lessee has specified, and then sends the report or the disclosure to the addresses. Thereafter, server 120 stores it in contract management database 123. On the other hand, concerning a lease transaction that the system operator is obliged to report or disclose, the operator itself inputs its address and name and enters its digital signature therein, and then sends the report or the disclosure to the authorities or the mass media.

Additionally, each of lessors and lessees can confirm at any time report documents or disclosure documents of his or her own stored in contract management database 123 by choosing to inquire about his or her agreement using the previously described function therefor on said menu page.

Besides, server 120 may also execute similar processing in the case in which a new obligation to report or disclose has developed in accordance with the occurrence of events between a lessor and a lessee such as payment and receipt of cash flows, exercise of various rights, and/or fulfillment of various obligations. Also, at the time of the occurrence of the above-described events or at other times, the operator may send a lessor or lessee a questionnaire or the like via support terminal 126, and realize communication with him or her in order to inspect whether or not the lessor or lessee is in compliance with his or her lease agreement; with laws governing said report or disclosure; and/or with other related laws or regulations.

Settlement management database 124 stores information such as funds account numbers, payment and receipt histories, and funds account balances of users of the present system, i.e. lessors; lessees; prospective lease transactors, who desire to participate in lease transactions depending on the market levels; advertisers, who place advertisements related to lease transactions in the system; and/or appraisers.

If a user chooses, on the above-described menu page, to inquire about his or her funds account, server 120 accesses settlement management database 124, and sends his or her client terminal 119 a funds account confirmation page, on which the present funds account balance and the payment and receipt history of the user are recorded. Additionally, the system operator as well has a funds account of its own and hence a funds account number, and uses it for payment and receipt of money between the account and the funds accounts of users.

Payment and receipt, between a lessor and a lessee, of leasing charges and cash flows that arise during a lease period are executed through inter-account funds transfers in the present system. Server 120 accesses lease transaction database 122 in a predetermined cycle, and recognizes payment and receipt dates of leasing charges and cash flows of a concluded lease product stored therein. Then, for example, one day before the pertinent date, server 120 sends client terminal 119 of the lessor or lessee a funds settlement notice, which notifies the party that the inter-account funds transfer will be executed.

Additionally, although lease transactions in accordance with the present invention comprise many styles in which a lessor pays a lessee cash flow, while in return the lessee pays the lessor leasing charges, there are other styles such as a cash flow lease of an asset management product targeting its premium value or a return style of direct lease of an asset management product, in which a lessee pays a lessor a cash flow at the beginning of the lease period. Thus hereinafter, any paying party of a cash flow or leasing charge shall be referred to as a 'payer,' while any receiving party thereof shall be referred to as a 'recipient.' However, in a lease transaction concluded by the auction mode, the system operator becomes the recipient if a leasing party is a payer, and the payer if a leasing party is a recipient. On the other hand, in a lease transaction concluded by the negotiation mode, one leasing party is a payer while the other is a recipient, and thus the operator does not intermediate directly.

The individual name and/or corporate name and funds account number of a payer or recipient, identifier of a lease agreement, amount payable or amount receivable, execution date of the funds settlement, and the like are indicated on the funds settlement notice. Then, the payer or recipient notifies server 120 that he or she has confirmed this funds settlement information.

Next, in accordance with the funds settlement information, server 120 executes the inter-account funds transfer that transfers the predetermined amount of money from the payer's funds account to the recipient's funds account. Then, server 120 updates the information such as funds account balances and payment and receipt histories of the payer and the recipient stored in settlement management database 124 to reflect the transfer of money.

In the present system, the inter-account funds transfer that uses the funds settlement notice is executed in the following transfers of money as well. However, if payment and receipt of a cash flow, a leasing charge and/or various service charges concerning a lease transaction product coincide with one another in timing between a payer and a recipient, the operator may write to the funds settlement notice an amount determined by offsetting them, and execute the inter-account funds transfer on a net amount basis.
(a) During a lease period, the operator may charge a lessor or lessee additional cash collateral or refund excess cash collateral to the party due to an increase or decrease in exposure to credit risk between the lessor and the lessee. In these cases, the operator transfers money between the lessor or lessee and the operator, or between the lessor and the lessee by the above-described inter-account funds transfer;
(b) Service charges and line charges that the operator receives from lessors and lessees;
(c) Line charges that the operator receives from prospective lease transactors and/or appraisers;
(d) Advertisement fees that the operator receives from advertisers;
(e) Appraisal fees that appraisers receive from lessors or lessees; and/or
(f) Payment/receipt of cash flow or early bullet payment/receipt of remaining leasing charges that accrue at the point when a lessor or lessee has exercised various rights or fulfilled various obligations concerning a lease transaction during a lease period, thereby ending the transaction. Additionally in these cases, by choosing, on the menu page, to report his or her event, a lessor or lessee notifies the operator that the lessor or lessee has exercised his or her right or has fulfilled his or her obligation.

In a direct lease, of the return style or non-return style, of an asset management product, if the product is a conventional security such as a bond, equity, beneficiary security, certificate of deposit or commercial paper, it is technically easy to lease it as it is. On the other hand, if the product is a non-security, it is technically easier to lease it after having involved a conduit and then divided the product into small lots or securitized the product, than to lease it as it is. Thus, in either category, a necessity for executing securities settlement for transferring an actual arises after a lease transaction is concluded.

Accordingly, with a view to the securities settlement, settlement management database 124 in the present invention also stores information such as securities account numbers, securities transfer histories and securities account balances of lessors, lessees and prospective lease transactors.

If each of these users chooses, on the above-described menu page, to inquire about his or her securities account, server 120 accesses settlement management database 124, and sends his or her client terminal 119 a securities account confirmation page, on which his or her present securities account balance and securities transfer history are recorded. Additionally, the system operator as well has a securities account of its own and hence a securities account number, and uses it for delivery and receipt of securities between the account and the securities accounts of users.

Delivery and receipt, between a lessor and a lessee, of securities that arise during a lease period are executed through inter-account securities transfers in the present system. However, in a lease transaction concluded by the auction mode, the system operator becomes the assignee of a security if a leasing party is an assignor, and becomes the assignor of a security if a leasing party is an assignee. On the other hand, in a lease transaction concluded by the negotiation mode, if one leasing party is an assignor of a security, the other is an assignee, and thus the operator does not intermediate directly. Additionally, object securities of inter-account securities transfers may be immobilized securities or dematerialized securities.

At the stage where signing on a lease agreement is finalized, server 120 sends client terminal 119 of the lessor or lessee a securities settlement notice, which notifies him or her that the inter-account securities transfer will be executed. The individual name and/or corporate name and securities account number of the lessor or lessee, identifier of the lease agreement, volume of securities to be transferred, execution date of the securities settlement, and the like are indicated on the securities settlement notice. Then, the lessor or lessee notifies server 120 that he or she has confirmed this securities settlement information.

Next, in accordance with the securities settlement information, server 120 executes the inter-account securities transfer for transferring the predetermined volume of the securities from the securities account of the lessor to that of the lessee. Then, server 120 updates the information such as securities account balances and securities transfer histories of the lessor and the lessee stored in settlement management database 124 to reflect the transfer of the securities.

In a direct lease of the return style in accordance with the present invention, if a lessee returns securities that he or she has taken over, the lessee notifies server 120 to that effect by choosing, on the menu page, to report his or her event. Then, server 120 executes the inter-account securities transfer that is the reverse of the above-described transfer, whereby the pertinent securities are returned from the lessee to the lessor.

Incidentally, during a lease period, although the operator may charge a lessor or lessee additional collateral or refund excess collateral to the party due to an increase or decrease in exposure to credit risk between the lessor and the lessee, if securities are used as the collateral, server 120 transfers the object securities between the lessor or lessee and the operator, or between the lessor and the lessee by the previously described inter-account securities transfer.

Server 120 accesses lease transaction database 122 in a predetermined cycle and sequentially executes accumulation and statistical processing of various data stored therein, and the system users can peruse the data from their client terminals 119.

If a user chooses, on the above-described menu page, to view market information, server 120 processes market statuses of various lease transaction products that have been subjected to accumulation and statistical processing, i.e. their names and issues, types and attributes, terms and conditions, leasing charge rates, concluded lease values, concluded lease volumes in the case of unit price products, and lease periods; outlines and provisional terms of lease transaction products currently under bidding, and bidding statuses of prospective lease transactors; and/or outlines of lease transaction products scheduled to be auctioned afterwards, into lists and/or graphs to prepare market information for market conditions pages, and then sends the pages to the user.

Such information allows prospective lease transactors to grasp market levels of leasing charge rates and balance of supply and demand of various lease transactions; and enables appraisers to appropriately distribute self-introduction materials, and/or reference/proposal data that they prepare with respect to lease transactions.

Now, distribution and receipt of materials that are utilized on occasions on which prospective lease transactors select appraisers, are executed as described below:

First, using a form such as a text or an electronic document format, appraisers send server 120 their self-introduction materials containing their profiles or appraisal fee scales, and reference and/or proposal data related to individual lease items. Then, upon receiving these materials or data, server 120 sequentially stores them in appraiser information database 125 together with the dates and times of receipt.

Next, server 120 searches client information database 121; compares prospective lease transactors' policies and objectives on asset management, capital raising or capital transactions, stored in the database, with types and attribute of the above appraiser-related data that server 120 has actually received; and specifies target users to whom it distributes the self-introduction materials and/or reference/proposal data at this time. Based on the results of this search, using a form such as a text or an electronic document format, server 120 simultaneously distributes these data to client terminals 119 of the pertinent prospective lease transactors. Then, the prospective lease transactors receive the data, and may use the data as factors in selecting their appraisers.

Also, a prospective lease transactor can peruse at any time various data stored in appraiser information database 125 by choosing, on said menu page, to peruse appraiser data.

Besides the configuration in which server 120 and client terminals 119 are connected via the Internet 117, there is a configuration in which they are connected via a computer network that utilizes a dedicated communications line; a configuration in which they are connected via a computer network that utilizes other communications lines; a configuration in which they are connected via a computer network on which wireless communications can be performed; and/or other configurations.

In addition, server 120 and client terminals 119 may be configured so that server 120 and broadcast receiving terminals of the users transmit and receive information via a broadcast network of a wireless broadcast or a wired broadcast, whereby they can utilize the present system. For example, data prepared in server 120 is converted to data for broadcast in a predetermined broadcast server; the data for broadcast is transmitted via electric waves or a communications line to broadcast receiving terminals equipped with predetermined tuners; and then the received data is decoded in the tuners, whereby the users can utilize the data. Also, the users can transmit data that they desire to transmit, via the electric waves or the communications line from the broadcast receiving terminals, to server 120 through the broadcast server or directly.

Incidentally, in the present invention, server 120 and others may be configured by distributing storage media storing a program for executing the above-described operations, such as a magneto-optical disc, a digital versatile disc read-only memory, a compact disc read-only memory or a flexible disk cartridge, and then installing the program in a computer.

### Industrial Applicability

As described above, the computer-readable storage medium storing a lease transaction program for financial and/or related instruments, and the lease transaction system for financial and/or related instruments in accordance with the present invention create lease transaction markets for financial instruments and/or quasi-financial instruments via computer networks, and can match let demands and hire demands of customers including asset managers, capital raisers and/or capital transactors.

Moreover, the computer-readable storage medium storing a lease transaction program for financial and/or related instruments, and the lease transaction system for financial and/or related instruments in accordance with the present invention introduce new styles of transactions which substantially allow the creation and dissolution of positions in asset management, capital raising and/or capital transactions, and thus enable customers to save fees payable to intermediaries or the like and make it possible to substantially improve the liquidity of respective instruments.

Furthermore, the computer-readable storage medium storing a lease transaction program for financial and/or related instruments, and the lease transaction system for financial and/or related instruments in accordance with the present invention can improve certainty, transparency, immediacy, economy and efficiency in asset management, capital raising and/or capital transactions by transcending the confines of national borders and session hours, setting up appraisers, and concentrating settlement and administration functions in said new styles of transactions.

## Claims

1. A computer-readable storage medium storing a lease transaction program for providing a lease transaction market of financial instruments and/or quasi-financial instruments, wherein said program implements lease transactions of financial and/or related instruments in at least one computer as well as a plurality of user terminals connected to a computer network that comprise:
(a) transmission means by which the user terminals send the computer let orders and hire orders of an instrument;
(b) receiving means by which the computer receives the let orders and the hire orders sent from the user terminals by said transmission means;
(c) storage means by which the computer stores the let orders and the hire orders received by said receiving means;
(d) matching means by which the computer compares the let orders and the hire orders stored by said storage means, and if the computer determines that their conditions match, the computer concludes the lease transactions;
(e) updating means by which the computer updates, based on the lease transactions concluded by said matching means, the let orders and the hire orders stored by said storage means;
(f) notifying means by which the computer notifies said user terminals of the transaction results brought about by said matching means; and
(g) receiving means by which the user terminals receive the transaction results notified by the computer with said notifying means.

2. The computer-readable storage medium storing a lease transaction program for financial and/or related instruments according to claim 1, **characterized in that** said lease transaction is a cash flow lease of an asset management product.

3. The computer-readable storage medium storing a lease transaction program for financial and/or related instruments according to claim 1 or 2, **characterized in that** said lease transaction is a cash flow lease of an asset management product utilizing its discount value, and/or a cash flow lease of an asset management product targeting its premium value.

4. The computer-readable storage medium storing a lease transaction program for financial and/or related instruments according to claim 1, **characterized in that** said lease transaction is a direct lease of an asset management product.

5. The computer-readable storage medium storing a lease transaction program for financial and/or related instruments according to claim 1 or 4, **characterized in that** said lease transaction is a return style of direct lease of an asset management product, and/or a non-return style of direct lease of an asset management product.

6. The computer-readable storage medium storing a lease transaction program for financial and/or related instruments according to claim 1, **characterized in that** said lease transaction is a cash flow lease of a capital raising product.

7. The computer-readable storage medium storing a lease transaction program for financial and/or related instruments according to claim 1 or 6, **characterized in that** said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

8. The computer-readable storage medium storing a lease transaction program for financial and/or related instruments according to claim 1, **characterized in that** said lease transaction is a cash flow lease of any one or more capital transaction products from among foreign exchange products, financial derivative products, and quasi-financial derivative products.

9. The computer-readable storage medium storing a lease transaction program for financial and/or related instruments according to claim 1 or 8, **characterized in that** said lease transaction is a cash flow lease of a capital transaction product utilizing its unrealized profit, and/or a cash flow lease of a capital transaction product targeting its unrealized loss.

10. The computer-readable storage medium storing a lease transaction program for financial and/or related instruments according to any one of claims 1 through 9, **characterized in that** a plurality of lessors and/or a plurality of lessees can thereby conclude lease transactions simultaneously.

11. The computer-readable storage medium storing a lease transaction program for financial and/or related instruments according to any one of claims 1 through 9, **characterized in that** said lease transaction is a tie-in lease of same type products or a tie-in lease of different type products selected from the group of products consisting of asset management products, capital raising products and capital transaction products.

12. The computer-readable storage medium storing a lease transaction program for financial and/or related instruments according to any one of claims 1 through 9, **characterized in that** said lease transaction is a sublease of any one product, any tie-in of same type products, or any tie-in of different type products selected from the group of products consisting of asset management products, capital raising products and capital transaction products.

13. The computer-readable storage medium storing a lease transaction program for financial and/or related instruments according to any one of claims 1 through 9, **characterized in that** asset/liability management can be performed by various combinations of the cash flow lease of an asset management product, the direct lease of an asset management product, the cash flow lease of a capital raising product, and the cash flow lease of a capital transaction product.

14. The computer-readable storage medium storing a lease transaction program for financial and/or related instruments according to any one of claims 1 through 13, **characterized in that** said lease transactions can thereby be concluded domestically and abroad 24 hours a day beyond the confines of national borders and/or session hours.

15. The computer-readable storage medium storing a lease transaction program for financial and/or related instruments according to any one of claims 1 through 13, **characterized in that** a function of due diligence of a lease transaction product and/or a function of appraisal of a lease transaction value is thereby performed.

16. The computer-readable storage medium storing a lease transaction program for financial and/or related instruments according to any one of claims 1 through 13, **characterized in that** settlement and administration functions after conclusion of a lease transaction, such as transaction confirmation, preparation of a contract, assignment of a contract, payment and receipt of cash flow, delivery and return of an actual, payment and receipt of leasing charges, provision of tools for risk management or cash flow management, inspection of legal or regulatory compliance, credit enhancement, preservation and recovery of credits, and/or the like, are thereby concentrated.

17. A computer-readable storage medium storing a lease transaction program for providing a lease transaction market of financial instruments and/or quasi-financial instruments, wherein said program implements lease transactions of financial and/or related instruments in at least one computer as well as a plurality of user terminals connected to a computer network that comprise:
(a) transmission means by which a user terminal sends a request for a negotiated lease transaction of an instrument to another user terminal;
(b) receiving means by which the user terminal of the requested party receives the request for the negotiated lease transaction sent from the terminal of the requesting party by said transmission means;
(c) returning means by which the terminal of the requested party returns a decision of conclusion, non-conclusion or negotiation with respect to the request for the negotiated lease transaction received by said receiving means, to the terminal of the requesting party;
(d) receiving means by which the terminal of the requesting party receives the decision returned from the terminal of the requested party by said returning means;
(e) notifying means by which the terminal of the requesting party and/or the terminal of the requested party notifies said computer of the result of conclusion or non-conclusion of the negotiated lease transaction;
(f) receiving means by which the computer receives the transaction result notified by the user terminal or terminals with said notifying means; and
(g) storage means by which the computer stores the transaction result received by said receiving means.

18. The computer-readable storage medium storing a lease transaction program for financial and/or related instruments according to claim 17, **characterized in that** said lease transaction is a cash flow lease of an asset management product.

19. The computer-readable storage medium storing a lease transaction program for financial and/or related instruments according to claim 17 or 18, **characterized in that** said lease transaction is a cash flow lease of an asset management product utilizing its discount value, and/or a cash flow lease of an asset management product targeting its premium value.

20. The computer-readable storage medium storing a lease transaction program for financial and/or related instruments according to claim 17, **characterized in that** said lease transaction is a direct lease of an asset management product.

21. The computer-readable storage medium storing a lease transaction program for financial and/or related instruments according to claim 17 or 20, **characterized in that** said lease transaction is a return style of direct lease of an asset management product, and/or a non-return style of direct lease of an asset management product.

22. The computer-readable storage medium storing a lease transaction program for financial and/or related instruments according to claim 17, **characterized in that** said lease transaction is a cash flow lease of a capital raising product.

23. The computer-readable storage medium storing a lease transaction program for financial and/or related instruments according to claim 17 or 22, **characterized in that** said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

24. The computer-readable storage medium storing a lease transaction program for financial and/or related instruments according to claim 17, **characterized in that** said lease transaction is a cash flow lease of any one or more capital transaction products from among foreign exchange products, financial derivative products, and quasi-financial derivative products.

25. The computer-readable storage medium storing a lease transaction program for financial and/or related instruments according to claim 17 or 24, **characterized in that** said lease transaction is a cash flow lease of a capital transaction product utilizing its unrealized profit, and/or a cash flow lease of a capital transaction product targeting its unrealized loss.

26. A lease transaction system for providing a lease transaction market of financial instruments and/or quasi-financial instruments via a computer network, **characterized in that** said system for financial and/or related instruments includes at least one computer as well as a plurality of user terminals connected to the computer network that comprise:
(a) transmission means by which the user terminals send the computer let orders and hire orders of an instrument;
(b) receiving means by which the computer receives the let orders and the hire orders sent from the user terminals by said transmission means;
(c) storage means by which the computer stores the let orders and the hire orders received by said receiving means;
(d) matching means by which the computer compares the let orders and the hire orders stored by said storage means, and if the computer determines that their conditions match, the computer concludes the lease transactions;
(e) updating means by which the computer updates, based on the lease transactions concluded by said matching means, the let orders and the hire orders stored by said storage means;
(f) notifying means by which the computer notifies said user terminals of the transaction results brought about by said matching means; and
(g) receiving means by which the user terminals receive the transaction results notified by the computer with said notifying means.

27. The lease transaction system for financial and/or related instruments according to claim 26, **characterized in that** said lease transaction is a cash flow lease of an asset management product.

28. The lease transaction system for financial and/or related instruments according to claim 26, **characterized in that** said lease transaction is a return style of direct lease of an asset management product, and/or a non-return style of direct lease of an asset management product.

29. The lease transaction system for financial and/or related instruments according to claim 26, **characterized in that** said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

30. The lease transaction system for financial and/or related instruments according to claim 26, **characterized in that** said lease transaction is a cash flow lease of any one or more capital transaction products from among foreign exchange products, financial derivative products, and quasi-financial derivative products.

31. A lease transaction system for providing a lease transaction market of financial instruments and/or quasi-financial instruments via a computer network, **characterized in that** said system for financial and/or related instruments includes at least one computer as well as a plurality of user terminals connected to the computer network that comprise:
(a) transmission means by which a user terminal sends a request for a negotiated lease transaction of an instrument to another user terminal;
(b) receiving means by which the user terminal of the requested party receives the request for the negotiated lease transaction sent from the terminal of the requesting party by said transmission means;
(c) returning means by which the terminal of the requested party returns a decision of conclusion, non-conclusion or negotiation with respect to the request for the negotiated lease transaction received by said receiving means, to the terminal of the requesting party;
(d) receiving means by which the terminal of the requesting party receives the decision returned from the terminal of the requested party by said returning means;
(e) notifying means by which the terminal of the requesting party and/or the terminal of the requested party notifies said computer of the result of conclusion or non-conclusion of the negotiated lease transaction;
(f) receiving means by which the computer receives the transaction result notified by the user terminal or terminals with said notifying means; and
(g) storage means by which the computer stores the transaction result received by said receiving means.

32. The lease transaction system for financial and/or related instruments according to claim 31, **characterized in that** said lease transaction is a cash flow lease of an asset management product.

33. The lease transaction system for financial and/or related instruments according to claim 31, **characterized in that** said lease transaction is a return style of direct lease of an asset management product, and/or a non-return style of direct lease of an asset management product.

34. The lease transaction system for financial and/or related instruments according to claim 31, **characterized in that** said lease transaction is at least one of a redemption-deceleration style of cash flow lease of a capital raising product, a redemption-acceleration style of cash flow lease of a capital raising product, and a retirement-by-repurchase style of cash flow lease of a capital raising product.

35. The lease transaction system for financial and/or related instruments according to claim 31, **characterized in that** said lease transaction is a cash flow lease of any one or more capital transaction products from among foreign exchange products, financial derivative products, and quasi-financial derivative products.
